# EUROPEAN PATENT APPLICATION

(11) **EP 4 475 543 A1**
(43) Date of publication of application: **11.12.2024**
(21) Application number: 23787752.7
(22) Date of filing: 12.04.2023
(51) Int. Cl.: H04N 23/00

(54) **CAMERA MODULE AND ELECTRONIC DEVICE**

(30) Priority: 15.04.2022 CN 202210394856
(71) Applicant: Huawei Technologies Co., Ltd., Shenzhen, Guangdong 518129 (CN)
(72) Inventor: LI, Dengfeng, Shenzhen, Guangdong 518129 (CN); TANG, Wei, Shenzhen, Guangdong 518129 (CN); NIU, Yajun, Shenzhen, Guangdong 518129 (CN); BIAN, Xinxiu, Shenzhen, Guangdong 518129 (CN); LIU, Hongming, Shenzhen, Guangdong 518129 (CN); SUN, Zhanli, Shenzhen, Guangdong 518129 (CN); ZHAO, Huihua, Shenzhen, Guangdong 518129 (CN)
(74) Representative: Pfenning, Meinig & Partner mbB
(86) International application number: PCT/CN2023/087826
(87) International publication number: WO 2023/198109

(57) **Abstract**

Embodiments of this application provide a camera module and an electronic device. The camera module includes an ejection driver and an ejector. The ejection driver drives, according to a principle, the ejector to move along an optical axis, so that the ejector drives a lens of the camera module to move along the optical axis. The solutions provided in embodiments of this application help enable the camera module to have excellent image shooting performance and occupy a small space.

## Description

This application claims priority to Chinese Patent Application No. 202210394856.6, filed with the China National Intellectual Property Administration on April 15, 2022 and entitled "CAMERA MODULE AND ELECTRONIC DEVICE", which is incorporated herein by reference in its entirety.

### TECHNICAL FIELD

Embodiments of this application relate to the field of electronic devices, and more specifically, to a camera module and an electronic device.

### BACKGROUND

An electronic device may be configured with a camera module with an ejection function. The camera module may have ejection and retraction functions. When the camera module is not enabled, the camera module may be accommodated in the electronic device. When an image needs to be shot, the camera module may be partially ejected to the outside of the electronic device, so that the camera module can focus in a long range, to meet diversified image shooting requirements. However, that the camera module has the ejection function means that an element that drives the camera module to eject and retract needs to be added to the camera module. This may increase an overall space occupied by the camera module. In processes of ejecting and retracting the camera module, a plurality of components in the camera module may move. How to enable the plurality of components to move along an optical axis as much as possible, and reduce impact of the movement of the plurality of components on image shooting performance of the camera module is a problem to be resolved.

### SUMMARY

Embodiments of this application provide a camera module and an electronic device, so that the camera module has excellent image shooting performance and occupies a small space.

According to a first aspect, a camera module is provided, and includes:
a camera support;
a lens assembly, where the lens assembly includes a plurality of lenses arranged along an optical axis, and the lens assembly is located on a side of the camera support;
an ejector, where the ejector is fastened to the lens assembly;
an ejection driver, where the ejection driver is carried on the camera support, and the ejection driver is configured to vibrate reciprocally along the optical axis, to drive the ejector to move along the optical axis, and drive the lens assembly to move relative to the camera support along the optical axis;
an ejector cover, where the ejector cover is fastened to the lens assembly, and a cavity formed by the ejector cover and the camera support is used to accommodate the lens assembly, the ejection driver, and the ejector; and
a flexible connecting piece, where the flexible connecting piece is sealedly connected between the ejector cover and the camera support.

In an embodiment in which the lens is ejected by using a stepper motor, the stepper motor, an associated variable speed transmission assembly, and the like occupy a large space. In addition, the stepper motor rotates the lens, so that the lens moves along the optical axis. In a process in which the stepper motor rotates the lens, a displacement of the lens from the optical axis is difficult to control. The camera module usually has a large quantity of lenses. Therefore, in an ejection process, it is difficult to align centers of a plurality of lenses. As a result, an imaging effect is affected. The stepper motor is also prone to introduce noise, affecting quality of video shooting.

In an embodiment in which the lens is ejected by using a Hall magnet, a stroke that can be achieved by the Hall magnet is short when the Hall magnet occupies a proper space. To meet stroke requirements, a plurality of Hall magnets may be disposed in the camera module. This may increase a space occupied by the camera module. In addition, the plurality of Hall magnets may interfere with each other. Driving by using the Hall magnet further requires an additional self-locking module. This may further increase the space occupied by the camera module.

In the solution provided in this application, the ejection driver and the ejector to which a piezoelectric principle is applied are configured, so that the plurality of lenses of the camera module can be ejected. Because the ejector mainly moves along a straight line, it is easier to control and reduce displacements of the plurality of lenses from the optical axis. It is easier for the ejection driver and the ejector to achieve a long stroke. The ejection driver and the ejector may occupy a small space. In conclusion, the solution provided in this application helps enable the camera module to have excellent image shooting performance and occupy a small space. The ejection driver and the ejector to which the piezoelectric principle is applied can have low noise. The ejector cover and the flexible connecting piece are disposed to prevent an external contaminant from entering the camera module. In an embodiment, the ejection driver may include a piezoelectric ceramic. The ejection driver and the ejector may form a piezoelectric motor.

With reference to the first aspect, in some implementations of the first aspect, the lens assembly includes a focus stator, a focus mover, a focus driver, and a focus pusher, where a lens is disposed on the focus mover, the focus driver is carried on the focus stator, the focus pusher is fastened to the focus mover, and the focus driver is configured to vibrate reciprocally along the optical axis, to drive the focus pusher to move along the optical axis, and drive the focus mover to move relative to the focus mover along the optical axis.

In an embodiment in which the lens is ejected by using a stepper motor, the stepper motor, an associated variable speed transmission assembly, and the like occupy a large space. In addition, the stepper motor rotates the lens, so that the lens moves along the optical axis. In a process in which the stepper motor rotates the lens, a displacement of the lens from the optical axis is difficult to control. The camera module usually has a large quantity of lenses. Therefore, in an ejection process, it is difficult to align centers of a plurality of lenses. As a result, an imaging effect is affected. The stepper motor is also prone to introduce noise, affecting quality of video shooting.

In an embodiment in which the lens is ejected by using a Hall magnet, a stroke that can be achieved by the Hall magnet is short when the Hall magnet occupies a proper space. To meet stroke requirements, a plurality of Hall magnets may be disposed in the camera module. This may increase a space occupied by the camera module. In addition, the plurality of Hall magnets may interfere with each other. Driving by using the Hall magnet further requires an additional self-locking module. This may further increase the space occupied by the camera module.

In the solution provided in this application, the focus driver and the focus pusher to which the piezoelectric principle is applied are configured, so that the plurality of lenses of the camera module can be focused. Because the focus pusher mainly moves along a straight line, it is easier to control and reduce displacements of the plurality of lenses from the optical axis. It is easier for the focus driver and the focus pusher to achieve a long stroke. The focus driver and the focus pusher may occupy a small space. In conclusion, the solution provided in this application helps enable the camera module to have excellent image shooting performance and occupy a small space. The focus driver and the focus pusher to which the piezoelectric principle is applied can have low noise. In an embodiment, the focus driver may include a piezoelectric ceramic. The focus driver and the focus pusher may form a piezoelectric motor.

With reference to the first aspect, in some implementations of the first aspect, a first magnet is disposed on the focus stator, and a second magnet interacting with the first magnet is disposed on the focus mover.

Because the first magnet interacts with the second magnet, when the focus mover moves relative to the focus stator, the focus mover may always be biased to a side of the focus stator. This helps reduce a displacement of the focus mover from the optical axis. A plurality of lenses are disposed on a focus assembly. The plurality of lenses may always be biased to a side of the focus stator, and displacements of the plurality of lenses from the optical axis may be small.

With reference to the first aspect, in some implementations of the first aspect, the focus stator includes a guide slot and a first magnet accommodating slot, the guide slot extends along the optical axis, the first magnet accommodating slot is in communication with the guide slot, and the first magnet is disposed in the first magnet accommodating slot.

The focus mover includes a platform portion and a first extension strip, the platform portion is vertically disposed relative to the optical axis, the first extension strip extends from the platform portion to the focus stator, and is accommodated in the guide slot, and the second magnet is disposed on the first extension strip.

A second extension strip and the guide slot may be configured to guide the focus stator and the focus mover. This helps reduce the displacements of the plurality of lenses from the optical axis. A magnet is disposed in a slot of the focus stator. This helps reduce space occupation.

With reference to the first aspect, in some implementations of the first aspect, a third magnet is disposed on the focus stator, and a fourth magnet interacting with the third magnet is disposed on the camera support.

In some embodiments, the third magnet is disposed on a side that is of the focus stator and that is close to the camera support. The camera support further includes a third protrusion, the fourth magnet is disposed on the third protrusion, and the fourth magnet extends along the optical axis.

In some embodiments, an azimuth of the third magnet and the first magnet relative to the optical axis is 0° to 15° or 165° to 180°.

Because the third magnet interacts with the fourth magnet, when the focus stator moves along the optical axis, the focus stator may always be biased to a side of the camera support. This helps reduce a displacement of the focus stator from the optical axis. In addition, because a plurality of lenses are disposed on the focus stator, and the plurality of lenses may always be biased to a side of the camera support, displacements of the plurality of lenses from the optical axis may be small.

With reference to the first aspect, in some implementations of the first aspect, the focus stator includes a first lens accommodating cavity, the first lens accommodating cavity accommodates a first part of lenses in the plurality of lenses, the focus mover includes a second lens accommodating cavity, and the second lens accommodating cavity accommodates a second part of lenses in the plurality of lenses.

In a macro scenario, a distance between the camera module and a photographed person is short. Compared with overall focusing of the plurality of lenses, when the plurality of lenses are divided into the first part of lenses and the second part of lenses, separate focusing may be implemented for a part of lenses. This helps improve an angle of view in the macro scenario. Therefore, within an effective focusing range of the camera module, the distance between the camera module and the photographed person may be short.

In some embodiments, the focus mover is located between the focus stator and the camera support.

That the focus mover is located between the focus stator and the camera support means that the focus mover moves between the focus stator and the camera support. Because the focus mover moves inside the camera module, a sealing protection structure outside the camera module may be relatively static during focusing. This helps reduce a possibility of external contaminant entering in a focusing state.

With reference to the first aspect, in some implementations of the first aspect, the first lens accommodating cavity accommodates a first lens, a second lens, and a lens barrel, the first lens is disposed outside the lens barrel, and the second lens is accommodated in the lens barrel.

The first lens may be disposed outside the lens barrel. Therefore, a small quantity of lenses need to be mounted in the lens barrel. This helps reduce an outer diameter of the lens barrel, and further helps reduce a space occupied by the first part of lenses in the focus stator.

A space between the first lens and the first lens accommodating cavity may be used to accommodate a colloid. This helps reduce a possibility of colloid overflowing at a seam between the first lens and a lens cover opening.

With reference to the first aspect, in some implementations of the first aspect, a lens cover is further accommodated in the first lens accommodating cavity, and the first lens is sandwiched between the lens barrel and the lens cover.

Because the first lens may be sandwiched between the lens barrel and the lens cover, a combination of the lens barrel and the lens cover may help enhance fastening stability of the first lens in the first lens accommodating cavity, and help prevent the first lens from falling off from the lens barrel. In some embodiments, the focus stator has a recess avoidance structure of the ejection driver.

With reference to the first aspect, in some implementations of the first aspect, the focus driver includes a focus pusher accommodating hole, and the focus pusher accommodating hole extends along the optical axis.

The focus pusher extends along the optical axis, and the focus pusher is accommodated in the focus pusher accommodating hole and abuts against a hole wall of the focus pusher accommodating hole.

A friction between the focus pusher accommodating hole and the focus pusher is controlled to be a static friction, so that the focus pusher can hover relative to the focus driver; or a friction between the focus pusher accommodating hole and the focus pusher is controlled to be a dynamic friction, so that the focus driver can drive the focus pusher to move.

In some embodiments, the focus stator includes a focus driver accommodating hole, and the focus driver is accommodated in the focus driver accommodating hole.

In some embodiments, the focus mover includes a platform portion, the platform portion is vertically disposed relative to the optical axis, the focus driver includes a first focus pusher accommodating hole and a second focus pusher accommodating hole, the first focus pusher accommodating hole and the second focus pusher accommodating hole extend along the optical axis, the first focus pusher accommodating hole is in communication with the second focus pusher accommodating hole, the first focus pusher accommodating hole is located on a side that is of the focus driver and that is close to the platform portion, the second focus pusher accommodating hole is located on a side that is of the focus driver and that is away from the platform portion, an aperture of the second focus pusher accommodating hole is greater than an aperture of the first focus pusher accommodating hole, the focus pusher is accommodated in the first focus pusher accommodating hole and abuts against a hole wall of the first focus pusher accommodating hole, and the focus pusher extends out of the first focus pusher accommodating hole and is fastened to the platform portion.

In some embodiments, the focus pusher has a slit extending along the optical axis.

When the focus pusher is not accommodated in the first focus pusher accommodating hole of the focus driver, the slit of the focus pusher may be large. When the focus pusher is accommodated in the first focus pusher accommodating hole of the focus driver, the focus pusher is squeezed by the hole wall of the first focus pusher accommodating hole, so that the slit of the focus pusher can be reduced. This helps adjust a coefficient of a friction between the focus pusher and the focus driver, so that the focus driver can drive the focus pusher to move along the optical axis through a proper force.

In some embodiments, an azimuth of the focus driver and the ejection driver relative to the optical axis is 15° to 180°.

With reference to the first aspect, in some implementations of the first aspect, the focus stator includes a first circuit board accommodating slot, the first circuit board accommodating slot extends from a side wall of the focus stator to a focus driver accommodating hole.

The camera module further includes a first circuit board assembly, the first circuit board assembly includes a first circuit board portion and a second circuit board portion, the first circuit board portion is provided with a focus control module and fastened to the side wall of the focus stator, the second circuit board portion is disposed in the first circuit board accommodating slot, and the focus control module is electrically connected to the focus driver through the first circuit board portion and the second circuit board portion.

The first circuit board portion may partially extend into an accommodating slot of the focus stator. In one aspect, the focus stator may mechanically protect the first circuit board portion. In another aspect, this helps reduce a space occupied by a lead of the focus driver in the camera module.

With reference to the first aspect, in some implementations of the first aspect, the focus mover includes the platform portion and a second extension strip, the platform portion is vertically disposed relative to the optical axis, the second extension strip extends from the platform portion to the focus stator, a magnetic grid is fastened to the second extension strip, and the magnetic grid extends along the optical axis.

A magnetoresistor is disposed on the first circuit board portion, the magnetoresistor is disposed opposite to the magnetic grid, and the magnetoresistor is configured to detect a distance between the magnetic grid and the magnetoresistor.

A magnetoresistor is disposed on the first circuit board portion, the magnetoresistor is disposed opposite to the magnetic grid, and the magnetoresistor is configured to detect a distance between the magnetic grid and the magnetoresistor.

The magnetoresistor is disposed on the focus stator, and the magnetic grid is disposed on the focus mover. This helps determine and adjust a position relationship between the focus mover and the focus stator, to quickly and accurately complete auto focus.

With reference to the first aspect, in some implementations of the first aspect, an element accommodating slot is disposed on the focus stator, and the second extension strip and the magnetic grid are accommodated in the element accommodating slot.

The element accommodating slot is disposed on the focus stator, and an element of the first circuit board assembly and a partial structure of the focus mover are accommodated in the element accommodating slot, so that the first circuit board assembly, the focus mover, and the focus stator are compactly assembled.

With reference to the first aspect, in some implementations of the first aspect, a step is disposed on a side that is of the focus stator and that is close to the focus mover, the step is disposed opposite to a resonance zero point of the focus driver, and the focus driver is carried on the step.

A displacement of the focus driver at the resonance zero point may be zero. The step of the focus stator is opposite to a position near the resonance zero point on the focus driver, so that the focus stator and the focus driver have a relatively stable connection relationship.

In some embodiments, the focus driver and the focus stator are connected through an elastic connecting piece.

When the focus driver works, a part of the focus driver connected to the focus stator may vibrate reciprocally and slightly along the optical axis. The focus driver is connected to the focus stator through the elastic connecting piece. The elastic connecting piece can absorb vibration of the focus driver. This helps improve stability of a connection between the focus driver and the focus stator.

With reference to the first aspect, in some implementations of the first aspect, a buffer is disposed on a side that is of the platform portion and that faces and/or is away from the focus stator.

The buffer is disposed between the platform portion and the focus stator, and the buffer may buffer between the platform portion and the focus stator. This helps reduce vibration generated when the platform portion collides with the focus stator, to reduce impact on elements carried on the focus stator and the focus mover.

A buffer is disposed between the platform portion and the camera support, and the buffer may buffer between the platform portion and the camera support. This helps reduce vibration generated when the platform portion collides with the camera support, to reduce impact on elements carried on the focus stator and the camera support.

With reference to the first aspect, in some implementations of the first aspect, a fifth magnet is disposed on the side wall of the focus stator.

The camera module further includes a second circuit board assembly, the second circuit board assembly includes a third circuit board portion, the third circuit board portion is disposed in parallel with the optical axis, a displacement sensor is disposed on the third circuit board portion, and the displacement sensor is configured to detect a distance between the fifth magnet and the displacement sensor.

When the fifth magnet is located within a detection range of the displacement sensor, a position relationship between the camera support and the focus stator may be determined and adjusted based on the distance between the displacement sensor and the fifth magnet. This helps determine and adjust the position relationship between the focus mover and the focus stator, to quickly and accurately complete ejection.

In some embodiments, the fifth magnet is located on a side that is of the focus stator and that is away from the focus mover, or the fifth magnet is located on the side that is of the focus stator and that is close to the focus mover.

The fifth magnet may correspond to an initial ejection position or an end ejection position of the camera module. The fifth magnet and the displacement sensor are disposed, so that it may be determined whether the camera module is ejected to a specified height, or whether the camera module is retracted to a specified position. This helps improve stability of ejection and retraction of the camera module.

With reference to the first aspect, in some implementations of the first aspect, the lens assembly further includes a focus stopper, and the focus stopper cooperates with a periphery of the focus stator and is fastened to the focus mover.

Because the focus stopper encircles the periphery of the focus stator, the focus stopper may limit the focus mover from a plurality of direction. This helps reduce the displacement of the focus mover from the optical axis.

With reference to the first aspect, in some implementations of the first aspect, the focus stator includes a limiting slot, the limiting slot extends along the optical axis, and a limiting surface is disposed on a side that is of the limiting slot and that is close to the focus mover.

The focus stopper includes a first limiting jaw, and the first limiting jaw extends into the limiting slot.

The limiting surface is configured to limit the first limiting jaw.

The limiting slot and a second limiting jaw are disposed. This may help reduce a possibility that the focus mover is excessively detached from the focus stator.

In some embodiments, the second limiting jaw is located on a side that is of the focus stopper and that is away from the focus mover.

The second limiting jaw is located on the side that is of the focus stopper and that is away from the focus mover, so that the focus stopper and the focus stator are assembled from a side close to the ejector cover.

In some embodiments, a buffer is disposed on the limiting surface.

The buffer may buffer between the focus stopper and the focus stator. This helps reduce vibration generated when the focus stopper collides with the focus stator, to reduce impact on elements carried on the focus mover and the focus stator.

With reference to the first aspect, in some implementations of the first aspect, the focus stator further includes a focus guide hole, the lens assembly further includes a focus guide rod, the focus guide hole and the focus guide rod extend along the optical axis, and the focus guide rod is accommodated in the focus guide hole and is fastened to the focus mover.

A focus guide sleeve and the focus guide rod may be configured to guide the plurality of lenses. This helps reduce the displacements of the plurality of lenses from the optical axis.

In some embodiments, an azimuth of the focus guide rod and the focus driver relative to the optical axis is 45° to 135°.

With reference to the first aspect, in some implementations of the first aspect, the ejection driver includes an ejector accommodating hole, and the ejector accommodating hole extends along the optical axis.

The ejector extends along the optical axis, and the ejector is accommodated in the ejector accommodating hole and abuts against a hole wall of the ejector accommodating hole.

A friction between the ejector accommodating hole and the ejector is controlled to be a static friction, so that the ejector can hover relative to the ejection driver; or a friction between the ejector accommodating hole and the ejector is controlled to be a dynamic friction, so that the ejection driver can drive the ejector to move.

In some embodiments, the ejection driver includes a first ejector accommodating hole and a second ejector accommodating hole, the first ejector accommodating hole and the second ejector accommodating hole extend along the optical axis, the first ejector accommodating hole is in communication with the second ejector accommodating hole, the first ejector accommodating hole is located on a side that is of the ejection driver and that is away from the camera support, the second ejector accommodating hole is located on a side that is of the ejection driver and that is close to the camera support, and an aperture of the second ejector accommodating hole is greater than an aperture of the first ejector accommodating hole.

The ejector is accommodated in the first ejector accommodating hole and abuts against a hole wall of the first ejector accommodating hole, and an end that is of the ejector and that is away from the camera support extends out of the first ejector accommodating hole and is fastened to the lens assembly.

With reference to the first aspect, in some implementations of the first aspect, a mounting ear is disposed on a periphery of the ejection driver, the mounting ear is located at a resonance zero point of the ejection driver, and the ejection driver is carried on the camera support through the mounting ear.

A displacement of the ejection driver at the resonance zero point may be zero. A mounting ear is disposed at a position near the resonance zero point on the ejection driver. This helps reduce reciprocating vibration of the mounting ear, and helps improve stability of a connection between the ejection driver and the camera support.

In some embodiments, the mounting ear and the camera support are connected through an elastic connecting piece.

When the ejection driver works, the mounting ear may vibrate reciprocally and slightly along the optical axis. The mounting ear and the camera support are connected through the elastic connecting piece. The elastic connecting piece can absorb vibration of the mounting ear. This helps improve the stability of the connection between the ejection driver and the camera support.

In some embodiments, the ejector has a slit extending along the optical axis.

When the ejector is not accommodated in the first ejector accommodating hole of the ejection driver, the slit of the ejector may be large. When the ejector is accommodated in the first ejector accommodating hole of the ejection driver, the ejector is squeezed by the hole wall of the first ejector accommodating hole, so that the slit of the ejector can be reduced. This helps adjust a coefficient of a friction between the ejector and the ejection driver, so that the ejection driver can drive the ejector to move along the optical axis through a proper force.

With reference to the first aspect, in some implementations of the first aspect, an ejection ring is disposed on the camera support, and the ejection ring encircles the periphery of the ejection driver.

The ejection ring may be configured to limit a displacement of the ejection driver from the optical axis, to help reduce a displacement of the lens from the optical axis.

With reference to the first aspect, in some implementations of the first aspect, the camera module further includes an ejection guide sleeve and an ejection guide rod, the ejection guide sleeve and the ejection guide rod extend along the optical axis, the ejection guide sleeve is fastened to the camera support, and the ejection guide rod is accommodated in the ejection guide sleeve and is fastened to the lens assembly.

The ejection guide sleeve and the ejection guide rod may be configured to guide the plurality of lenses. This helps reduce the displacements of the plurality of lenses from the optical axis.

In some embodiments, an azimuth of the ejection guide sleeve and the ejection driver relative to the optical axis is 45° to 135°.

With reference to the first aspect, in some implementations of the first aspect, the camera support includes a bearer portion and a first protrusion, the bearer portion is vertically disposed relative to the optical axis, the first protrusion extends from the bearer portion to the ejector cover, a limiting table is disposed at an end that is of the first protrusion and that is close to the ejector cover, and between the bearer portion and the limiting table, the first protrusion has a jaw sliding slot extending along the optical axis.

The ejector cover further includes a first limiting jaw, and the first limiting jaw may slide in the jaw sliding slot.

The first limiting jaw may be limited by using the limiting table on the jaw sliding slot. This helps reduce a possibility that the ejector cover is excessively ejected.

With reference to the first aspect, in some implementations of the first aspect, the jaw sliding slot includes a first sliding slot portion and a second sliding slot portion, the first sliding slot portion is disposed opposite to the limiting table, the first sliding slot portion is in communication with the second sliding slot portion, and the first limiting jaw is rotatable around the optical axis and slides from the second sliding slot portion to the first sliding slot portion.

When the ejector cover and the camera support are assembled, the ejector cover may rotate around the optical axis, so that the first limiting jaw may slide from the second sliding slot portion to the first sliding slot portion and cooperate with the limiting table in the first sliding slot portion. When the ejector cover and the camera support are disassembled, the first limiting jaw may slide from the first sliding slot portion to the second sliding slot portion, and the first limiting jaw may not be limited by the limiting table in the second sliding slot portion, so that the ejector cover can be separated from the camera support.

In some embodiments, the ejector cover includes a cover portion and a barrel portion. The cover portion is located at an end that is of the barrel portion and that is away from the camera support, and is fastened to an opening of the barrel portion. The cover portion is fastened to the ejector, and the cover portion is fastened to the lens assembly.

The ejection driver can drive the ejector cover to move along the optical axis by driving the ejector. The ejector cover may further drive the lens to move along the optical axis. This helps enable a mechanical protection housing and the lens of the camera module to move synchronously.

In some embodiments, a buffer is disposed on a side that is of the barrel portion and that faces the camera support.

The buffer may buffer between the ejector cover and the camera support. This helps reduce vibration generated when the ejector cover collides with the camera support, to reduce impact on elements carried on the ejector cover and the camera support.

With reference to the first aspect, in some implementations of the first aspect, the flexible connecting piece includes a first ring, a second ring, and a third ring, an inner diameter of the first ring is greater than an inner diameter of the second ring, the third ring is connected between the first ring and the second ring, the first ring is fastened to the camera support, the second ring is fastened to the ejector cover, and the third ring may be folded in a space between the camera support and the ejector cover.

When the camera module is ejected or retracted, the flexible connecting piece can be expanded or folded accordingly to adapt to an ejection function of the camera module.

In some embodiments, the camera support includes the bearer portion and a second protrusion, the bearer portion is vertically disposed relative to the optical axis, and the second protrusion protrudes from the bearer portion to the ejector cover. The ejector cover may move along the optical axis under driving of the ejector in a space enclosed by the bearer portion and the second protrusion, and an end face that is of the second protrusion and that is away from the bearer portion is fastened to the first ring.

When the camera module is in a retracted state, the ejector cover and a part of the flexible connecting piece may be accommodated in a space enclosed by the camera support. This helps reduce a space occupied by the camera module in the retracted state.

In some embodiments, the ejector cover further includes an epitaxial ring. The epitaxial ring encircles a periphery of the barrel portion and is located at an end that is of the barrel portion and that is away from the cover portion, and the epitaxial ring is fastened to the second ring.

The epitaxial ring is disposed on the ejector cover. This helps flexibly implement a connection between the ejector cover and the flexible connecting piece.

With reference to the first aspect, in some implementations of the first aspect, the camera module further includes a dustproof cover and a dustproof filter, the dustproof cover is sealedly connected to the camera support and the flexible connecting piece, a dustproof through hole is disposed on the dustproof cover, and the dustproof filter covers the dustproof through hole.

The dustproof cover is sealedly connected to the camera support and the flexible connecting piece. This helps reduce a possibility of an external contaminant entering the camera module. When the camera module switches from the retracted state to an ejected state, air can enter the camera module through the dustproof filter. When the camera module switches from the ejected state to the retracted state, air can be exhausted out of the camera module through the dustproof filter. This helps enable an internal air pressure of the camera module to match with an external air pressure in a process in which an internal capacity of the camera module changes.

In some embodiments, a plurality of pins of a circuit board assembly may be disposed close to a dustproof assembly. After the dustproof assembly is disassembled from the camera module, the plurality of pins of the circuit board assembly may be exposed through an opening enclosed by the flexible connecting piece and the camera module. Therefore, when the camera module is disassembled to a small degree, the pins of the circuit board assembly can be easily maintained, detected, adjusted, and the like.

With reference to the first aspect, in some implementations of the first aspect, the camera module further includes a circuit board, and the circuit board is disposed on a side that is of the camera support and that is away from the lens assembly.

The circuit board includes a fourth circuit board portion and a fifth circuit board portion, an image sensor is disposed on the fourth circuit board portion, the fifth circuit board portion includes a second circuit board accommodating slot, and the fourth circuit board portion is accommodated in the second circuit board accommodating slot.

The fourth circuit board portion includes a first circuit board protrusion, the first circuit board protrusion protrudes toward a slot wall of the second circuit board accommodating slot, the fifth circuit board portion includes a second circuit board protrusion, and the second circuit board protrusion protrudes from a slot wall of the second circuit board accommodating slot to the fourth circuit board portion.

The circuit board further includes a first trace, and the first trace is connected between the first circuit board protrusion and the second circuit board protrusion.

The camera module further includes an SMA cable fastening bracket, an SMA cable movable bracket, and a first SMA cable, the SMA cable fastening bracket is fastened to the fifth circuit board portion, one end of the SMA cable movable bracket is fastened to the fourth circuit board portion, the other end of the SMA cable movable bracket is suspended on the fifth circuit board portion, the first SMA cable is connected between the SMA cable fastening bracket and the SMA cable movable bracket, and the first SMA cable is disposed opposite to a first trace portion of the first trace.

The first SMA cable may be configured to implement movement of the image sensor in a direction perpendicular to the optical axis, to implement an image stabilization function. A structure of the circuit board is designed, so that the first trace disposed opposite to the first SMA cable is formed on the circuit board. When the first SMA cable is shortened, the first trace may migrate the image sensor under driving of the first SMA cable to implement the image stabilization function. When the first SMA cable is extended, the first trace may support extension of the first SMA cable through elastic recovery, so that the image sensor moves toward an initial position.

With reference to the first aspect, in some implementations of the first aspect, a second trace portion of the first trace is disposed opposite to a second SMA cable of the camera module.

The circuit board further includes:
a second trace, where the second trace is connected between the first circuit board protrusion and the second circuit board protrusion, a first trace portion of the second trace is disposed opposite to the first SMA cable, and a second trace portion of the second trace is disposed opposite to the second SMA cable; and
a first linkage trace, where the first linkage trace is connected between the first trace and the second trace.

A linkage trace is disposed on two adjacent trace supports. This helps reduce a possibility that the two adjacent traces interfere with each other.

With reference to the first aspect, in some implementations of the first aspect, the circuit board further includes a second linkage trace, the second linkage trace is connected between the first trace and the second trace, third trace portions are obtained by dividing the first trace and the second trace by using the first linkage trace and the second linkage trace, a third trace portion of the first trace is connected between the first trace portion of the first trace and the second trace portion of the first trace, a third trace portion of the second trace is connected between the first trace portion of the second trace and the second trace portion of the second trace, and a length of the third trace portion of the first trace is different from a length of the third trace portion of the second trace.

Lengths of two adjacent traces may be different. To ensure that lengths of main force transfer portions of traces are basically the same, two linkage traces are disposed on two adjacent trace supports. A part of traces between the two linkage traces may have a flexible length design, to adapt to a total length of the traces.

In some embodiments, the first trace and the second trace meet the following:
a length of the first trace portion of the first trace is the same as a length of the first trace portion of the second trace; and/or
a length of the second trace portion of the first trace is the same as a length of the second trace portion of the second trace.

The lengths of the main force transfer portions of the traces are the same. This helps implement uniform force transfer of a plurality of traces, and helps improve use performance of the circuit board.

In some embodiments, an SMA cable control module is disposed on the fourth circuit board portion. The SMA cable control module is electrically connected to a stator end of the first SMA cable through the first circuit board protrusion, the first trace, the second circuit board protrusion, the fifth circuit board portion, and the SMA cable fastening bracket, and the SMA cable control module is electrically connected to a mover end of the first SMA cable through the fourth circuit board portion and the SMA cable movable bracket.

The SMA cable control module can control extension or shortening of the SMA cable through a cable on the circuit board.

With reference to the first aspect, in some implementations of the first aspect, the camera module further includes:
a cable protection bracket, where the cable protection bracket is disposed on a side that is of the circuit board and that is close to the camera support, and covers the first trace.

Because the cable protection bracket covers a trace, when an SMA cable is elongated and loose due to elastic recovery, the cable protection bracket can prevent the SMA cable from falling into a slit on two sides of the trace, to help reduce a risk that the SMA cable is broken by the trace.

With reference to the first aspect, in some implementations of the first aspect, the camera module further includes:
a first pre-pressing pad, where the first pre-pressing pad is disposed between the fourth circuit board portion and the cable protection bracket.

A pre-pressing pad is disposed between the fourth circuit board portion and the cable protection bracket, so that a spacing between the fourth circuit board portion and the cable protection bracket may match a size of the first pre-pressing pad along the optical axis. In other words, the first pre-pressing pad may be configured to prevent the fourth circuit board portion from deforming toward the cable protection bracket. Because the image sensor may be disposed on the fourth circuit board portion, disposing the first pre-pressing pad may help reduce a displacement of the image sensor toward the cable protection bracket.

With reference to the first aspect, in some implementations of the first aspect, the third circuit board assembly further includes a reinforcement plate and a module base, the reinforcement plate and the module base are located on a side away from the camera support, the reinforcement plate is attached to the circuit board, and the reinforcement plate is located between the circuit board and the module base.

The camera module further includes a second pre-pressing pad, and the second pre-pressing pad is disposed between the reinforcement plate and the module base.

A pre-pressing pad is disposed between the fourth circuit board portion and the module base, so that a spacing between the fourth circuit board portion and the module base may match a size of the second pre-pressing pad along the optical axis. In other words, the second pre-pressing pad may be configured to prevent the fourth circuit board portion from deforming toward the module base. Because the image sensor may be disposed on the fourth circuit board portion, disposing the second pre-pressing pad may help reduce a displacement of the image sensor toward the module base.

With reference to the first aspect, in some implementations of the first aspect, the camera module further includes:
a third pre-pressing pad, where the third pre-pressing pad is disposed between the fourth circuit board portion and the camera support.

A pre-pressing pad is disposed between the fourth circuit board portion and the camera support, so that a spacing between the fourth circuit board portion and the camera support may match a size of the third pre-pressing pad along the optical axis. In other words, the third pre-pressing pad may be configured to prevent the fourth circuit board portion from deforming toward the camera support. Because the image sensor may be disposed on the fourth circuit board portion, disposing the third pre-pressing pad may help reduce a displacement of the image sensor toward the camera support.

According to a second aspect, an electronic device is provided, and includes the camera module according to any implementation of the first aspect.

### BRIEF DESCRIPTION OF DRAWINGS

FIG. 1 is a diagram of a structure of an electronic device according to an embodiment of this application;
FIG. 2 is a diagram of a structure of an electronic device according to an embodiment of this application;
FIG. 3 is a diagram of a structure of a camera module in a retracted state according to an embodiment of this application;
FIG. 4 is an exploded view of a camera module according to an embodiment of this application;
FIG. 5 is a cross-sectional view of a camera module on a cross section A-A shown in FIG. 3 according to an embodiment of this application;
FIG. 6 is a diagram of a structure of a lens group according to an embodiment of this application;
FIG. 7 is a cross-sectional view of a lens group on a cross section B-B shown in FIG. 6 according to an embodiment of this application;
FIG. 8 is a diagram of a structure of another lens group according to an embodiment of this application;
FIG. 9 is a cross-sectional view of a lens group on a cross section C-C shown in FIG. 8 according to an embodiment of this application;
FIG. 10 is a diagram of a structure of still another lens group according to an embodiment of this application;
FIG. 11 is a cross-sectional view of a lens group on a cross section D-D shown in FIG. 10 according to an embodiment of this application;
FIG. 12 is a diagram of a structure of a lens group according to an embodiment of this application;
FIG. 13 is a cross-sectional view of a lens group on a cross section E-E shown in FIG. 12 according to an embodiment of this application;
FIG. 14 is an exploded view of a lens assembly according to an embodiment of this application;
FIG. 15 is an exploded view of a lens assembly according to an embodiment of this application;
FIG. 16 is a diagram of an internal structure of a camera module according to an embodiment of this application;
FIG. 17 is a cross-sectional view of a camera module on a cross section M-M shown in FIG. 16 according to an embodiment of this application;
FIG. 18 is a diagram of an assembly structure of a circuit board assembly and a focus stator according to an embodiment of this application;
FIG. 19 is a diagram of an assembly structure of a circuit board assembly and a focus mover according to an embodiment of this application;
FIG. 20 is a diagram of a structure of a circuit board assembly according to an embodiment of this application;
FIG. 21 is a cross-sectional view of a camera module on a cross section F-F shown in FIG. 19 according to an embodiment of this application;
FIG. 22 is a diagram of a structure of a focus stator according to an embodiment of this application;
FIG. 23 is a cross-sectional view of a camera module on a cross section G-G shown in FIG. 22 according to an embodiment of this application;
FIG. 24 is a diagram of a structure of a camera support according to an embodiment of this application;
FIG. 25 is a cross-sectional view of a camera module in a retracted state on a cross section H-H shown in FIG. 22 according to an embodiment of this application;
FIG. 26 is a cross-sectional view of a camera module in an ejected state on a cross section G-G shown in FIG. 22 according to an embodiment of this application;
FIG. 27 is a diagram of a structure of an ejector cover according to an embodiment of this application;
FIG. 28 is a cross-sectional view of a camera module in a retracted state on a cross section J-J shown in FIG. 27 according to an embodiment of this application;
FIG. 29 is a cross-sectional view of a camera module in an ejected state on a cross section K-K shown in FIG. 27 according to an embodiment of this application;
FIG. 30 is a diagram of an assembly structure of an ejection assembly and a camera support according to an embodiment of this application;
FIG. 31 is a cross-sectional view of a camera module in a retracted state on a cross section L-L shown in FIG. 16 according to an embodiment of this application;
FIG. 32 is a diagram of a structure of a camera module in an ejected state according to an embodiment of this application;
FIG. 33 is a cross-sectional view of a camera module in an ejected state on a cross section A-A shown in FIG. 16 according to an embodiment of this application;
FIG. 34 is a cross-sectional view of a camera module in an ejected state on a cross section L-L shown in FIG. 16 according to an embodiment of this application;
FIG. 35 is a cross-sectional view of a camera module in a focus mode on a cross section A-A shown in FIG. 16 according to an embodiment of this application;
FIG. 36 is a cross-sectional view of a camera module in a focus mode on a cross section L-L shown in FIG. 16 according to an embodiment of this application;
FIG. 37 is a diagram of a structure of a camera module according to an embodiment of this application;
FIG. 38 is an exploded view of a camera module according to an embodiment of this application;
FIG. 39 is a diagram of a structure of a circuit board assembly according to an embodiment of this application;
FIG. 40 is an exploded view of a circuit board assembly according to an embodiment of this application;
FIG. 41 is a diagram of a structure of a circuit board assembly according to an embodiment of this application;
FIG. 42 is a diagram of a structure of a reinforcement plate according to an embodiment of this application;
FIG. 43 is a cross-sectional view of a circuit board assembly on a cross section N-N shown in FIG. 39 according to an embodiment of this application;
FIG. 44 is a diagram of a structure of another circuit board assembly according to an embodiment of this application;
FIG. 45 is a cross-sectional view of another circuit board assembly on a cross section P-P shown in FIG. 44 according to an embodiment of this application;
FIG. 46 is a diagram of a structure of still another circuit board assembly according to an embodiment of this application;
FIG. 47 is a cross-sectional view of still another circuit board assembly on a cross section Q-Q shown in FIG. 46 according to an embodiment of this application;
FIG. 48 is a diagram of a structure of yet another circuit board assembly according to an embodiment of this application;
FIG. 49 is a diagram of a structure of still yet another circuit board assembly according to an embodiment of this application;
FIG. 50 is an exploded view of still yet another circuit board assembly according to an embodiment of this application;
FIG. 51 is a cross-sectional view of still yet another circuit board assembly on a cross section R-R shown in FIG. 49 according to an embodiment of this application;
FIG. 52 is a cross-sectional view of a further circuit board assembly on a cross section R-R shown in FIG. 49 according to an embodiment of this application;
FIG. 53 is a diagram of a structure of a still further circuit board assembly according to an embodiment of this application; and
FIG. 54 is a cross-sectional view of a still further circuit board assembly on a cross section S-S shown in FIG. 53 according to an embodiment of this application.

### DESCRIPTION OF EMBODIMENTS

The following describes technical solutions in embodiments of this application with reference to accompanying drawings.

For ease of understanding, the following first explains and describes related technical terms in embodiments of this application.

An optical axis may refer to a direction in which an optical system conducts light, with reference to main light of a central field of view, and generally coincides with a rotation center line of the optical system in a symmetric transmission system.

Auto focus (auto focus, AF) may mean that according to a lens imaging principle and a light reflection principle, light reflected by a photographed object may be imaged on an image sensor after passing through a lens; and a clear image may be formed on the image sensor by moving one or more lenses based on an object distance of the photographed object. Auto focus can be simply considered as movement of the lens relative to the image sensor along the optical axis.

Optical image stabilization (optical image stabilization, OIS) may mean that a placement angle, a placement position, and the like of the lens relative to the image sensor can be adjusted, so that an instrument jitter phenomenon that occurs in a process of capturing an optical signal can be reduced, and imaging quality can be improved. A possible method is as follows: A to-be-compensated displacement or angle is detected by using, for example, a gyroscope, and then the lens or the image sensor is driven by using a motor to perform translation or rotation, so that image blur caused by a jitter of imaging equipment during exposure can be compensated. Optical image stabilization can be simply considered as translation or rotation of the lens relative to the image sensor on a plane perpendicular to the optical axis.

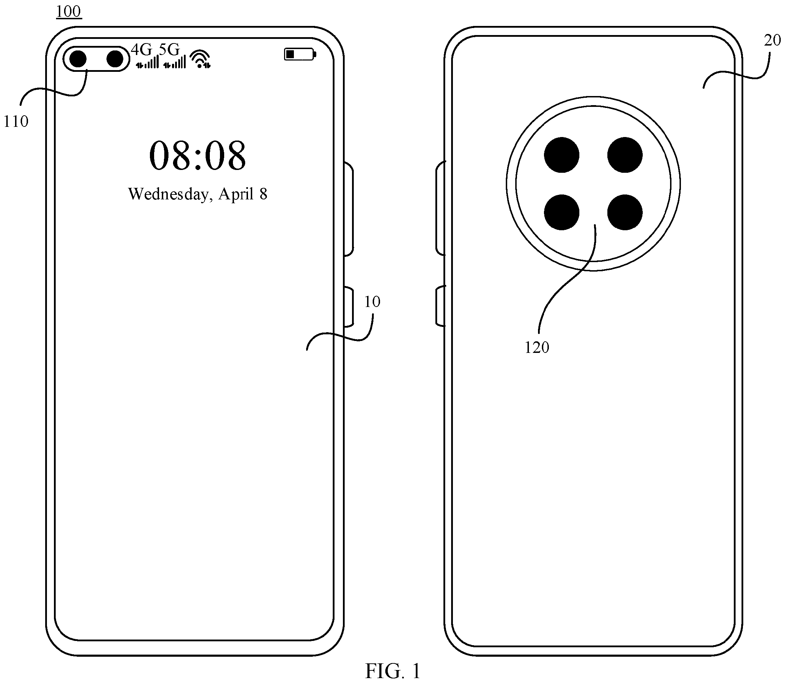

FIG. 1 is a diagram of a structure of an electronic device 100. The electronic device 100 may be an electronic device having a video recording or photographing function, for example, a mobile phone, a tablet computer, a television (or a smart screen), a laptop computer, a video camera, a video recorder, or a camera. For ease of understanding, an example in which the electronic device 100 is a mobile phone is used for description in embodiments of this application.

The electronic device 100 may include a display 10 and a housing. The housing may include a frame and a rear cover 20. The frame may encircle a periphery of the display 10, and the frame may encircle a periphery of the rear cover 20. There may be a specific interval between the display 10 and the rear cover 20. The display 10 may be disposed in parallel with the rear cover 20.

A front camera module (camera compact module, CCM) 110 may be disposed on the display 10 of the electronic device 100. As shown in the left figure in FIG. 1, the front camera module 110 may be mounted in an upper left part of the display 10. For example, the front camera module 110 may be configured to take a selfie.

A rear camera module 120 may be disposed on the rear cover 20 of the electronic device 100. As shown in the right figure in FIG. 1, the rear camera module 120 may be mounted in an upper middle part of the rear cover 20. For example, the rear camera module 120 may be configured to shoot a scene around the electronic device 100.

It should be understood that mounting positions of the front camera module 110 and the rear camera module 120 shown in FIG. 1 are merely examples, and the mounting positions of the camera modules may not be limited in this application. In some other embodiments, the front camera module 110 and the rear camera module 120 may alternatively be mounted in other positions of the electronic device 100. For example, the front camera module 110 may be mounted in an upper middle part or an upper right part of the display 10. For another example, the rear camera module 120 may be mounted in an upper left part or an upper right part of the rear cover 20.

It should be understood that quantities of mounted front camera modules 110 and rear camera modules 120 shown in FIG. 1 are merely examples, and a quantity of mounted camera modules may not be limited in this application. The electronic device 100 may include more or fewer camera modules.

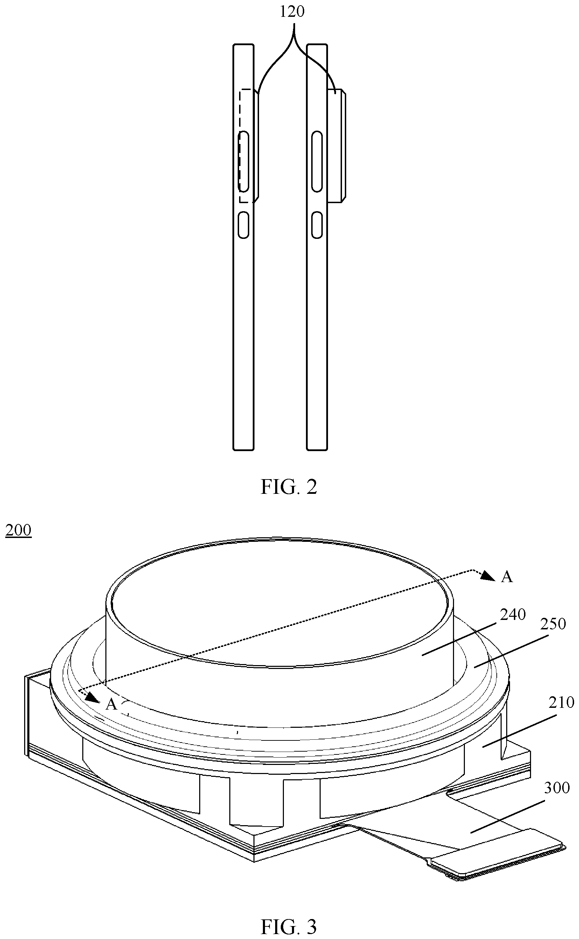

In the embodiment shown in FIG. 2, the rear camera module 120 may be a camera module having an ejection function (which may also be referred to as a scaling function, a lifting function, or the like). As shown in the left figure in FIG. 2, the rear camera module 120 may be partially or completely hidden inside the electronic device. As shown in the right figure in FIG. 2, the rear camera module 120 may be ejected to the outside of the electronic device. In some other embodiments, the front camera module 110 may also be a camera module having a scaling function.

In this embodiment of this application, that the camera module has an ejection function may mean that the camera module is entirely movable relative to the electronic device 100, so that at least a part of camera modules may be ejected from the electronic device 100 and may be hidden inside the electronic device 100.

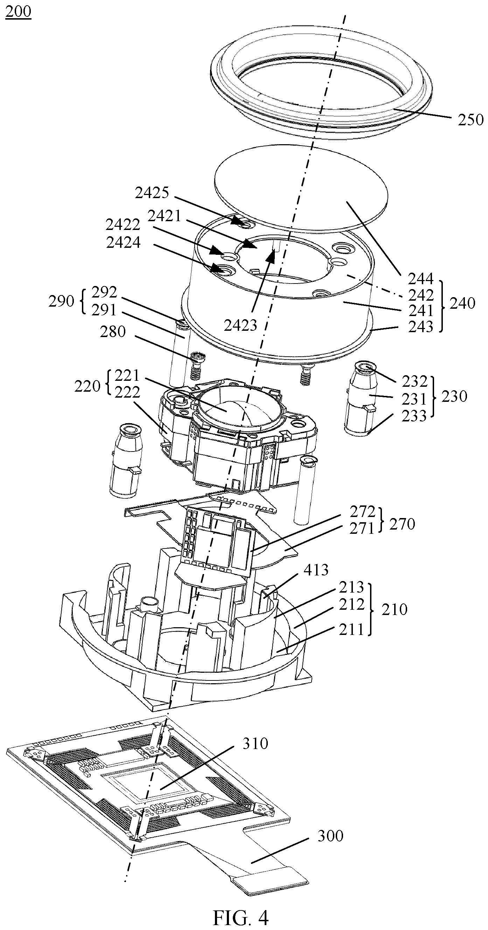

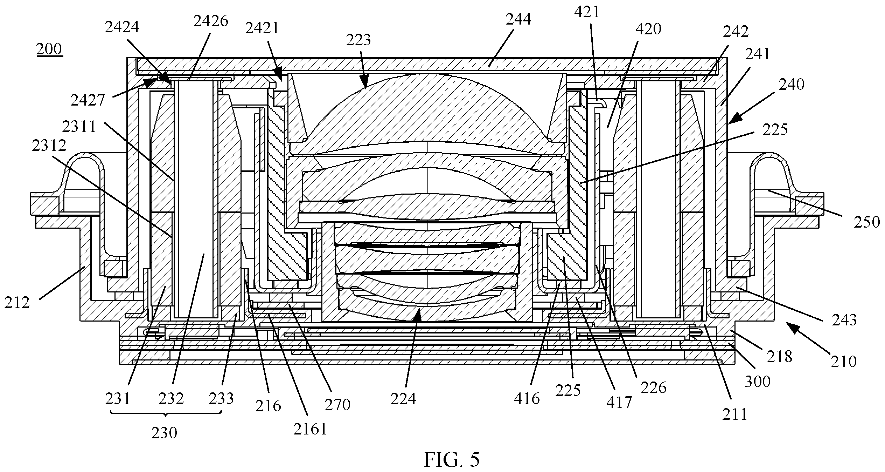

FIG. 3 is a diagram of a structure of a camera module 200 according to an embodiment of this application. FIG. 4 is an exploded view of the camera module 200 according to an embodiment of this application. A cross-sectional view shown in FIG. 5 may be obtained by viewing the camera module 200 along a cross section A-A shown in FIG. 3. A dotted line in FIG. 4 shows an optical axis of the camera module (optical axis for short). The camera module 200 may include a camera support 210, a lens assembly 220, an ejection assembly 230, an ejector cover 240, and a circuit board assembly 300.

The camera support 210 may be configured to carry a plurality of components in the camera module 200. The camera support 210 may include a bearer portion 211 and a protrusion 212. The protrusion 212 may protrude from the bearer portion 211. In a possible case, the bearer portion 211 may be vertically disposed relative to the optical axis. In an embodiment, a protruding direction of the protrusion 212 may be parallel with the optical axis. The protrusion 212 may encircle a periphery of the bearer portion 211. A space enclosed by the protrusion 212 and the bearer portion 211 may be used to accommodate the lens assembly 220, the ejection assembly 230, and the ejector cover 240.

The lens assembly 220 may include a plurality of lenses 221 and a focus assembly 222. The plurality of lenses 221 may be arranged along the optical axis. Optical axes of the plurality of lenses 221 may be aligned. The optical axes of the plurality of lenses 221 may be the optical axis of the camera module 200. The plurality of lenses 221 may be configured to project an image on an image sensor 310 of the circuit board assembly 300. The focus assembly 222 may be configured to move the lens 221 along the optical axis, to implement auto focus. In a possible scenario, the focus assembly 222 may be referred to as a focus motor.

The ejection assembly 230 may be configured to drive the ejector cover 240 to move relative to the camera support 210 along the optical axis. In a possible scenario, the ejection assembly 230 may be referred to as an ejection motor.

The ejector cover 240 may be connected to the lens assembly 220, and the lens assembly 220 may move relative to the camera support 210 along the optical axis under driving of the ejector cover 240. The ejector cover 240 may be further configured to accommodate the lens assembly 220, to provide mechanical protection for the lens assembly 220.

The image sensor 310 of the circuit board assembly 300 may output captured image information. A center of the image sensor 310 may be disposed opposite to the optical axis. In a possible case, the optical axis may pass through the center of the image sensor 310. The circuit board assembly 300 may be fastened to a side that is of the camera support 210 and that is away from the lens assembly 220.

The plurality of lenses 221 of the lens assembly 220 may be classified into a lens group 223 and a lens group 224. The lens group 223 may include one or more lenses 221a. The lens group 224 may include one or more lenses 221b.

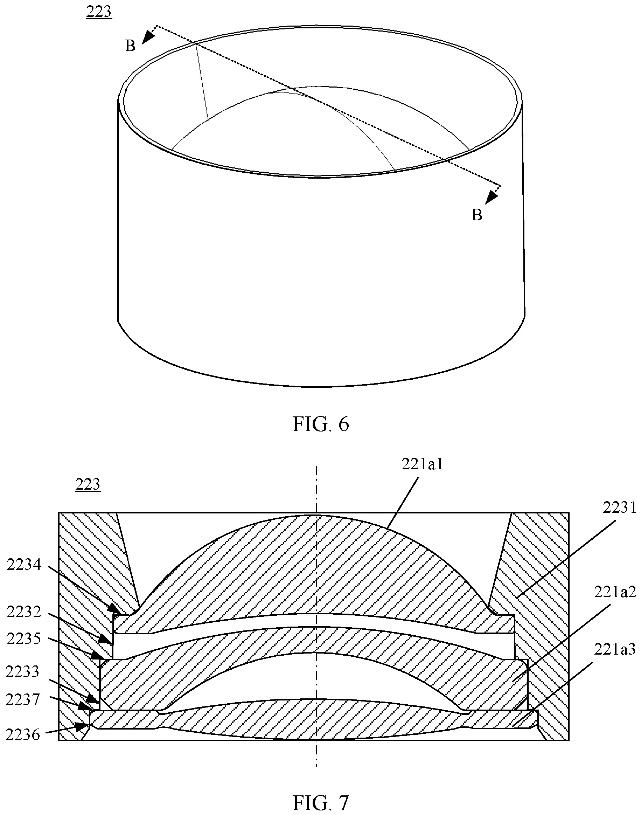

FIG. 6 is a diagram of a structure of a lens group 223 according to an embodiment of this application. A cross-sectional view of the lens group 223 shown in FIG. 7 may be obtained by viewing along a cross section B-B shown in FIG. 6. In some embodiments provided in this application, the lens group 223 may be a lens group farthest away from the image sensor 310. It should be understood that a lens shape, a lens quantity, and the like shown in FIG. 6 and FIG. 7 are merely examples, and embodiments of this application may not be limited to the embodiments shown in FIG. 6 and FIG. 7.

The lens group 223 may include a lens 221a1 and a lens 221a2, and the lens 221a1 and the lens 221a2 may be two adjacent lenses 221a. In some embodiments shown in FIG. 6 and FIG. 7, the lens 221a1 may be a lens 221a that is of the lens group 223 and that is farthest away from the image sensor 310.

As shown in FIG. 7, the lens group 223 may further include a lens barrel 2231, and the lens barrel 2231 may be configured to accommodate the lens 221a1 and the lens 221a2. The lens 221a2 may be fastened to an inner wall of the lens barrel 2231. The lens barrel 2231 may include a barrel wall 2232 and a barrel wall 2233. An inner diameter of the barrel wall 2232 may be the same as or approximately the same as an outer diameter of the lens 221a1. The barrel wall 2232 may be fastened to the lens 221a1. An inner diameter of the barrel wall 2233 may be the same as or approximately the same as an outer diameter of the lens 221a2. The barrel wall 2233 may be fastened to the lens 221a2. With reference to FIG. 5 and FIG. 7, an outer wall of the lens barrel 2231 may be fastened to a hole wall of a lens accommodating cavity 2251 of a focus stator 225.

To facilitate mounting of the lens 221a, the inner diameter of the barrel wall 2233 may be greater than the inner diameter of the barrel wall 2232. In other words, the inner diameter of the barrel wall 2233 is not excessively small, to prevent mounting of the lens 221a1 from being blocked. When the lens 221a1 and the lens 221a2 are mounted, the lens 221a1 may be pushed into the lens barrel 2231 through an opening that is of the lens barrel 2231 and that is close to the barrel wall 2233, and pushed to the barrel wall 2232. Then, the lens 221a2 may be pushed into the lens barrel 2231 through the opening that is of the lens barrel 2231 and that is close to the barrel wall 2233, and pushed to the barrel wall 2233.

The lens barrel 2231 may further include a lens bearer surface 2234, and the lens bearer surface 2234 may be connected to a side that is of the barrel wall 2232 and that is away from the barrel wall 2233. The lens 221a1 may be carried on the lens bearer surface 2234. In other words, the lens bearer surface 2234 may be configured to position the lens 221a1 in the lens barrel 2231, so that the lens 221a1 can be accurately mounted at a specified position in the lens barrel 2231.

The lens barrel 2231 may further include a lens bearer surface 2235, and the lens bearer surface 2235 may be connected between the barrel wall 2232 and the barrel wall 2233. The lens 221a2 may be carried on the lens bearer surface 2235. In other words, the lens bearer surface 2235 may be configured to position the lens 221a2 in the lens barrel 2231.

In the embodiment shown in FIG. 7, the lens group 223 may further include a lens 221a3, and the lens 221a3 may be accommodated in the lens barrel 2231. The lens barrel 2231 may further include a barrel wall 2236 and a lens bearer surface 2237. An inner diameter of the barrel wall 2236 may be the same as or approximately the same as an outer diameter of the lens 221a3, and the inner diameter of the barrel wall 2236 may be greater than the inner diameter of the barrel wall 2233. The lens bearer surface 2237 may be connected between the barrel wall 2233 and the barrel wall 2236. The lens 221a3 may be carried on the lens bearer surface 2237, and is fastened to the barrel wall 2236.

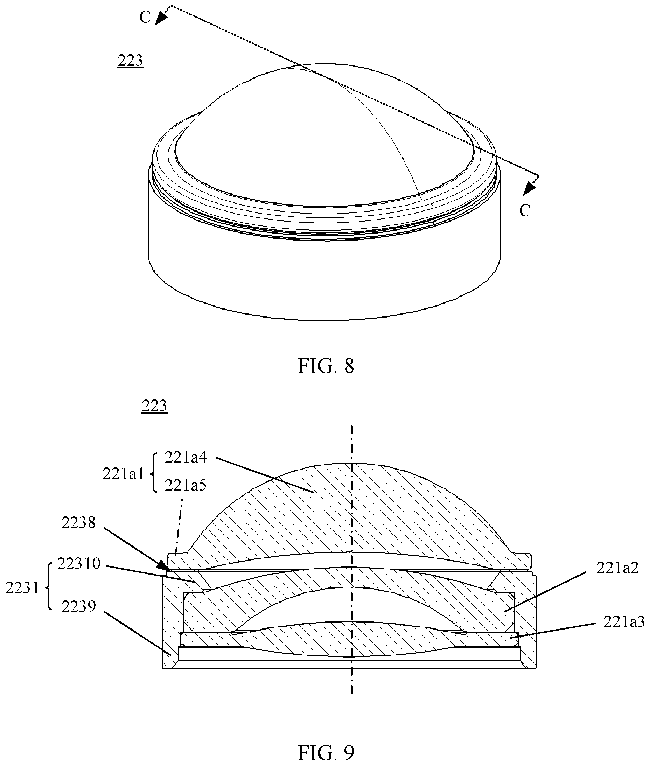

FIG. 8 is a diagram of a structure of another lens group 223 according to an embodiment of this application. A cross-sectional view of the lens group 223 shown in FIG. 9 may be obtained by viewing along a cross section C-C shown in FIG. 8. It should be understood that a lens shape, a lens quantity, and the like shown in FIG. 8 and FIG. 9 are merely examples, and embodiments of this application may not be limited to the embodiments shown in FIG. 8 and FIG. 9.

Similar to that in the embodiments shown in FIG. 6 and FIG. 7, the lens group 223 shown in FIG. 8 and FIG. 9 may include a lens 221a1, a lens 221a2, a lens 221a3, and a lens barrel 2231. The lens barrel 2231 may be configured to accommodate the lens 221a2 and the lens 221a3. The lens 221a2 and the lens 221a3 may be fastened to an inner wall of the lens barrel 2231. Different from the embodiments shown in FIG. 6 and FIG. 7, the lens 221a1 shown in FIG. 8 and FIG. 9 may be disposed outside the lens barrel 2231.

As shown in FIG. 8 and FIG. 9, an end face 2238 that is of the lens barrel 2231 and that is away from the lens 221a2 may be configured to fasten the lens 221a1. The lens 221a1 may include a lens 221a4 and a lens 221a5. The lens 221a4 may be an effective imaging region of the lens 221a1. The lens 221a5 may extend away from the optical axis from the lens 221a4. The lens 221a5 may be located outside the effective imaging region of the lens 221a1. A side that is of the lens 221a5 and that is close to the lens 221a2 may be fastened to the end face 2238 that is of the lens barrel 2231 and that is away from the lens 221a2.

In an embodiment, the lens barrel 2231 may include a lens barrel 2239 and a lens barrel protrusion 22310, and the lens barrel protrusion 22310 may protrude from the lens barrel 2239 toward the optical axis. The lens barrel protrusion 22310 may be located at an end that is of the lens barrel 2239 and that is away from the lens group 224. The lens barrel protrusion 22310 may be sandwiched between the lens 221a1 and the lens 221a2. One side of the lens barrel protrusion 22310 may be configured to carry the lens 221a1, and the other side of the lens barrel protrusion 22310 may be configured to carry the lens 221a2. A size of the lens barrel protrusion 22310 along a direction of the optical axis may be used to position the lens 221a1 and the lens 221a2, so that a spacing between the lens 221a1 and the lens 221a2 meets an image shooting requirement.

In a possible case, a projection region of the lens barrel protrusion 22310 on the lens 221a1 may be located outside the effective imaging region of the lens 221a1. A projection region of the lens barrel protrusion 22310 on the lens 221a2 may be located outside an effective imaging region of the lens 221a2. In other words, the lens barrel protrusion 22310 may not block imaging of the lens 221a1 and the lens 221a2.

In the embodiments shown in FIG. 6 and FIG. 7, for ease of mounting, sizes of the lens 221a1, the lens 221a2, and the lens 221a3 are in ascending order. Correspondingly, a periphery size of the lens barrel 2231 is greater than at least a periphery size of a largest lens 221a accommodated in the lens barrel 2231. In the embodiments shown in FIG. 8 and FIG. 9, the lens 221a1 may be disposed outside the lens barrel 2231. Therefore, a small quantity of lenses 221a need to be mounted in the lens barrel 2231. This helps reduce an outer diameter of the lens barrel 2231, and further helps reduce a space occupied by the lens group 223 in the camera module 200.

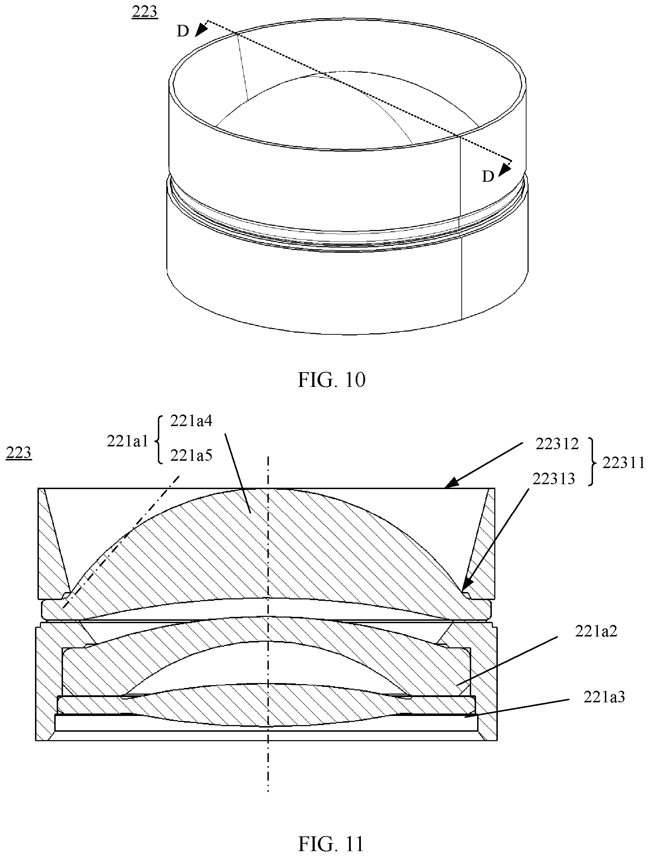

FIG. 10 is a diagram of a structure of still another lens group 223 according to an embodiment of this application. A cross-sectional view of the lens group 223 shown in FIG. 11 may be obtained by viewing along a cross section D-D shown in FIG. 10. It should be understood that a lens shape, a lens quantity, and the like shown in FIG. 10 and FIG. 11 are merely examples, and embodiments of this application may not be limited to the embodiments shown in FIG. 10 and FIG. 11.

Similar to that in the embodiments shown in FIG. 8 and FIG. 9, the lens group 223 shown in FIG. 10 and FIG. 11 may include a lens 221a1, a lens 221a2, a lens 221a3, and a lens barrel 2231. The lens 221a1 may be disposed outside the lens barrel 2231. The lens barrel 2231 may be configured to accommodate the lens 221a2 and the lens 221a3.

In the embodiments shown in FIG. 10 and FIG. 11, the lens barrel 2231 may further include a lens cover 22311. The lens cover 22311 may be disposed on a side that is of a lens 221a5 of the lens 221a1 and that is away from the lens 221a2. In other words, the lens cover 22311 may be fastened to the lens 221a5 of the lens 221a1. The lens 221a1 may be sandwiched between the lens barrel 2231 and the lens cover 22311. With reference to FIG. 5 and FIG. 11, an outer wall of the lens cover 22311 may be fastened to the hole wall of the lens accommodating cavity 2251 of the focus stator 225.

The lens cover 22311 may be in a barrel shape. The lens cover 22311 may include a hollow cavity, and the lens cover 22311 may have a lens cover opening 22312 and a lens cover opening 22313 at two ends of the cavity. The lens cover opening 22312 may be an opening that is of the lens cover 22311 and that is away from the lens 221a1. The lens cover opening 22313 may be an opening that is of the lens cover 22311 and that is close to the lens 221a1. In some embodiments, an inner diameter of the lens cover 22311 may be gradually reduced from the lens cover opening 22312 to the lens cover opening 22313.

In some embodiments, a periphery size of the lens cover 22311 may be basically the same as a periphery size of the lens barrel 2231. In other words, being viewed along the optical axis, an outer contour of a projection region of the lens cover 22311 may overlap or approximately overlap with an outer contour of a projection region of the lens barrel 2231. In a possible case, a periphery size of the lens 221a1 may be less than the periphery size of the lens cover 22311 or the lens barrel 2231.

With reference to FIG. 5 and FIG. 11, the lens barrel 2231 and the lens cover 22311 may be fastened to an inner wall of the lens accommodating cavity 2251 of the focus stator 225 by using, for example, a colloid. Because the lens 221a1 may be sandwiched between the lens barrel 2231 and the lens cover 22311, a combination of the lens barrel 2231 and the lens cover 22311 helps strengthen fastening stability of the lens 221a1 in the lens accommodating cavity 2251, and helps prevent the lens 221a1 from falling off from the lens barrel 2231. A space between the lens 221a1 and the lens accommodating cavity 2251 may be used to accommodate the colloid. This helps reduce a possibility that the colloid overflows at a seam between the lens 221a1 and the lens cover opening 22313.

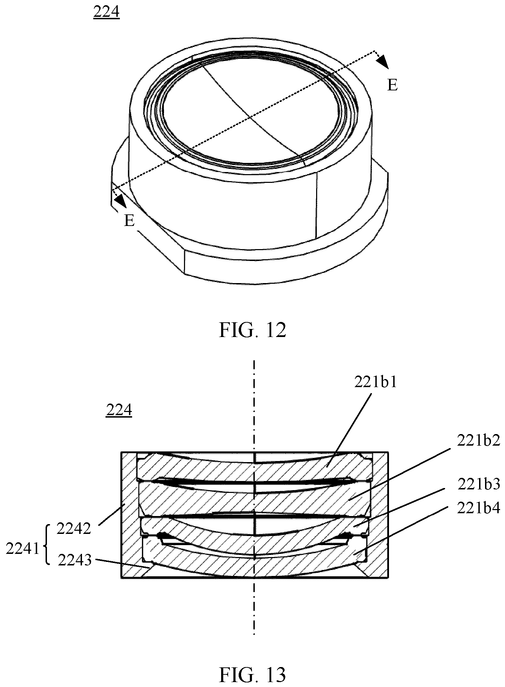

FIG. 12 is a diagram of a structure of a lens group 224 according to an embodiment of this application. A cross-sectional view of the lens group 224 shown in FIG. 13 may be obtained by viewing along a cross section E-E shown in FIG. 12. It should be understood that a lens shape, a lens quantity, and the like shown in FIG. 12 and FIG. 13 are merely examples, and embodiments of this application may not be limited to the embodiments shown in FIG. 12 and FIG. 13.

The lens group 224 may include a lens 221b1, a lens 221b2, a lens 221b3, a lens 221b4, and a lens barrel 2241, and the lens barrel 2241 may be configured to accommodate the lens 221b1, the lens 221b2, the lens 221b3, and the lens 221b4. The lens 221b1, the lens 221b2, the lens 221b3, and the lens 221b4 may be fastened to an inner wall of the lens barrel 2241. With reference to FIG. 5 and FIG. 12, periphery sizes of the lens 221b1, the lens 221b2, the lens 221b3, and the lens 221b4 may be in descending order. Therefore, the lens 221b 1, the lens 221b2, the lens 221b3, and the lens 221b4 may be mounted into the lens barrel 2241 through an opening that is of the lens barrel 2241 and that is away from the lens group 223.

The lens 221b1 may be carried on a lens of the lens 221b2, the lens 221b2 may be carried on a lens of the lens 221b3, and the lens 221b3 may be carried on a lens of the lens 221b4. The lens barrel 2241 may include a lens barrel 2242 and a lens barrel protrusion 2243. The lens barrel protrusion 2243 may protrude from the lens barrel 2242 to the optical axis. With reference to FIG. 5 and FIG. 13, the lens barrel protrusion 2243 may be located at an end that is of the lens barrel 2242 and that is away from the lens group 223. The lens 221b4 may be carried on the lens barrel protrusion 2243. The lens barrel protrusion 2243 may not block imaging of the lens 221b 1, the lens 221b2, the lens 221b3, and the lens 221b4.

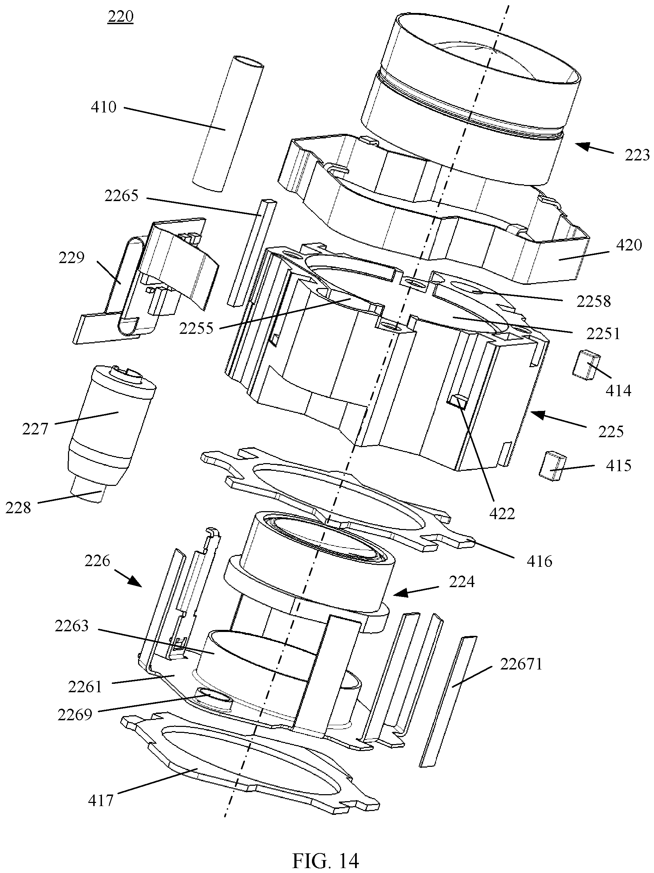

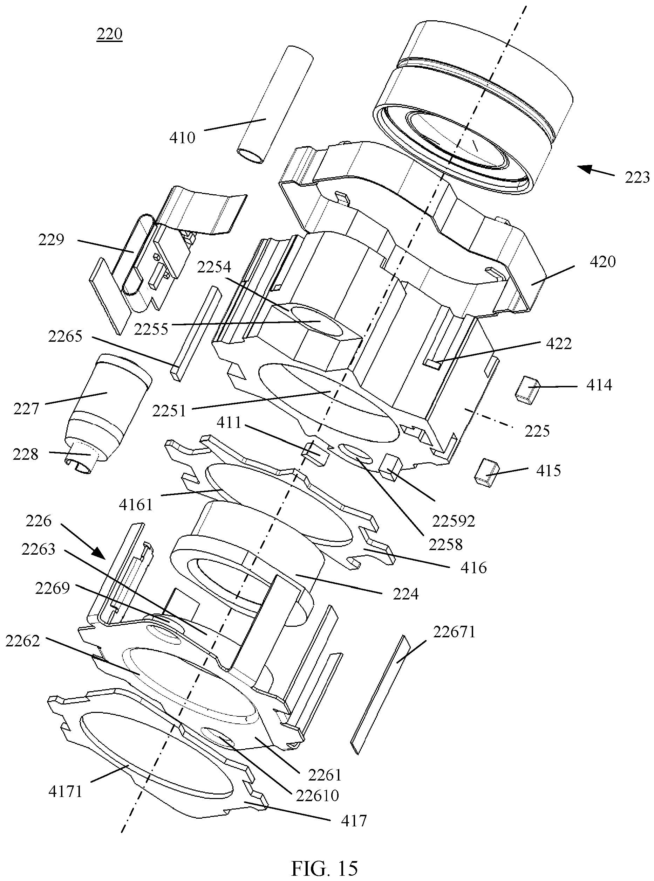

FIG. 14 and FIG. 15 are exploded views of the lens assembly 220 according to an embodiment of this application. Dotted lines in FIG. 14 and FIG. 15 show the optical axis.

The focus assembly 222 may include the focus stator 225 and a focus mover 226, and the focus mover 226 may move relative to the focus stator 225. The lens group 223 may be fastened to the focus stator 225. The lens group 224 may be fastened to the focus mover 226. When the focus mover 226 moves relative to the focus stator 225 along the optical axis, the lens group 224 may move relative to the lens group 223 along the optical axis under driving of the focus mover 226, so that an auto focus function can be implemented.

With reference to FIG. 14 and FIG. 15, the lens accommodating cavity 2251 may be disposed in a central region of the focus stator 225. The lens group 223 may be fastened in the lens accommodating cavity 2251. In an embodiment, the lens group 223 may be directly fastened to the inner wall of the lens accommodating cavity 2251 in a manner of attaching, clamping, or the like. In another embodiment, the lens assembly 220 may further include a lens barrel, the lens group 223 may be assembled in the lens barrel, and the lens barrel may be fastened to the inner wall of the lens accommodating cavity 2251. The lens group 224 may be accommodated in the lens accommodating cavity 2251, and is located at an end that is of the lens accommodating cavity 2251 and that is away from the lens group 223. The lens group 224 may move along the optical axis in the lens accommodating cavity 2251.

With reference to FIG. 14 and FIG. 15, the focus mover 226 may include a platform portion 2261. A light transmission hole 2262 may be further disposed in a central region of the platform portion 2261. The light transmission hole 2262 may be disposed opposite to the lens group 224. Light passing through the lens group 224 may further pass through the light transmission hole 2262. In a possible case, the platform portion 2261 may be vertically disposed relative to the optical axis.

In an embodiment, the focus mover 226 may further include a lens mounting ring 2263. The lens mounting ring 2263 may be disposed on a side that is of the platform portion 2261 and that is close to the focus stator 225. A cavity encircled by the lens mounting ring 2263 may be in communication with the light transmission hole 2262. The lens group 224 may be accommodated in the cavity encircled by the lens mounting ring 2263. The lens group 224 may be fastened to an inner wall of the lens mounting ring 2263. The lens group 224 is mounted on the inner wall of the lens mounting ring 2263, so that the lens group 224 can be fastened to the focus mover 226. The lens mounting ring 2263 may help increase a region that is of the focus mover 226 and that is used to fasten the lens group 224, and help improve stability of a fixed connection between the lens group 224 and the focus mover 226.

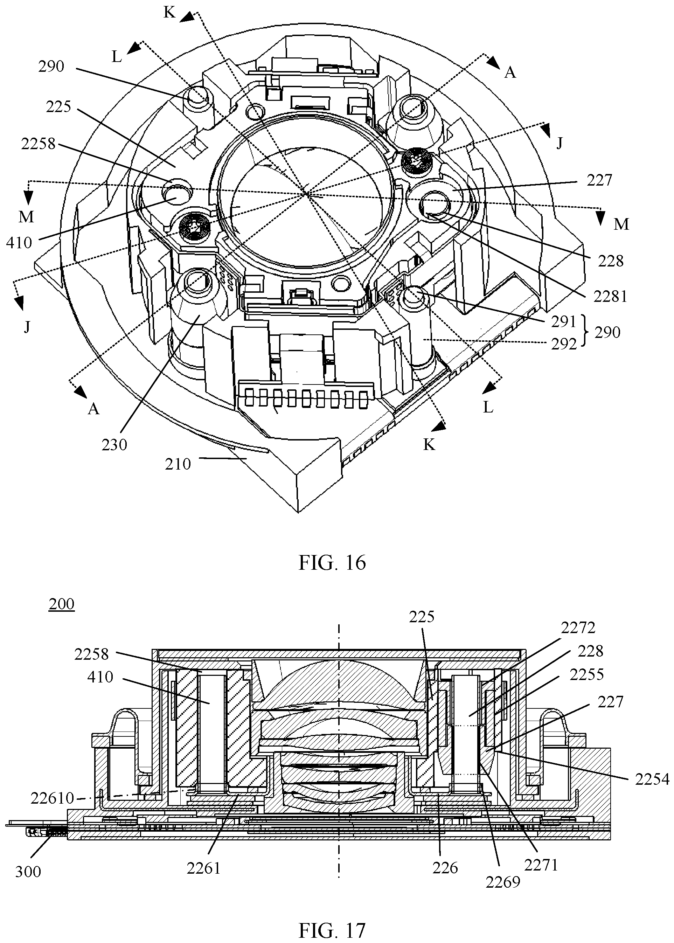

FIG. 16 is a diagram of an internal structure of a camera module 200 according to an embodiment of this application.

Still refer to FIG. 14 to FIG. 16. In some embodiments provided in this application, the focus assembly 222 may further include a focus driver 227 and a focus pusher 228. The focus driver 227 and the focus pusher 228 may drive the focus mover 226 to move relative to the focus stator 225 along the optical axis. A cross-sectional view shown in FIG. 17 may be obtained by viewing the camera module 200 according to this embodiment of this application along a cross section M-M shown in FIG. 16.

The focus driver 227 may be carried on the focus stator 225. The focus driver 227 may be configured to drive the focus pusher 228 to move along the optical axis. The focus pusher 228 may be fastened to the focus mover 226. Therefore, the focus mover 226 may move along the optical axis under driving of the focus pusher 228. In this way, the focus mover 226 may move relative to the focus stator 225 along the optical axis.

With reference to FIG. 5 and FIG. 14 to FIG. 16, in some embodiments provided in this application, the focus mover 226 may be located between the focus stator 225 and the camera support 210. The focus driver 227 and the focus pusher 228 may be configured to drive the focus mover 226 to move between the focus stator 225 and the camera support 210 along the optical axis. In another embodiment provided in this application, the focus mover 226 may be located on a side that is of the focus stator 225 and that is away from the camera support 210. The focus driver 227 and the focus pusher 228 may be configured to drive the focus mover 226 to move along the optical axis on the side that is of the focus stator 225 and that is away from the camera support 210. In this application, the embodiments shown in FIG. 5 and FIG. 14 to FIG. 16 are used as examples for description. For other embodiments, refer to the embodiments shown in FIG. 5 and FIG. 14 to FIG. 16.

In embodiments provided in this application, the focus driver 227 can drive the focus pusher 228 by using a mechanical transmission principle (for example, a stepper motor), an electromagnetic principle (for example, a Hall magnet), a piezoelectric principle (for example, a piezoelectric ceramic), and the like.

The following describes a focus mode according to embodiments of this application with reference to FIG. 14 to FIG. 17.

A step 2254 may be disposed on a side that is of the focus stator 225 and that faces the focus mover 226. The step 2254 may be located in an edge region of the focus stator 225, and located on a side that is of the focus stator 225 and that is close to the focus mover 226. In other words, the step 2254 may be located in a region outside the lens accommodating cavity 2251. As shown in FIG. 16 and FIG. 17, a focus driver accommodating hole 2255 may be disposed on the step 2254. The focus driver accommodating hole 2255 may extend along the optical axis. The focus driver accommodating hole 2255 may be configured to accommodate the focus driver 227. The focus driver 227 may vibrate reciprocally along the optical axis in the focus driver accommodating hole 2255.

As shown in FIG. 17, the focus driver 227 may include a focus pusher accommodating hole 2271 and a focus pusher accommodating hole 2272. The focus pusher accommodating hole 2271 is in communication with the focus pusher accommodating hole 2272. A hole axis of the focus pusher accommodating hole 2272 may be aligned with a hole axis of the focus pusher accommodating hole 2272. The focus pusher accommodating hole 2271 is located at an end that is of the focus driver 231 and that is close to the focus mover 226. The focus pusher accommodating hole 2272 is located at an end that is of the focus driver 231 and that is away from the focus mover 226. An inner diameter of the focus pusher accommodating hole 2271 may be smaller than that of the focus pusher accommodating hole 2272. In a possible case, the focus driver 227 may have a piezoelectric ceramic. The focus pusher accommodating hole 2272 may be disposed on the piezoelectric ceramic.

The focus pusher 228 may be disposed in the focus pusher accommodating hole 2271 and the focus pusher accommodating hole 2272. The focus pusher 228, the focus pusher accommodating hole 2271, and the focus pusher accommodating hole 2272 may extend along the optical axis. An end of the focus pusher 228 may extend out of the focus pusher accommodating hole 2271, and is fastened to the platform portion 2261 of the focus mover 226. As shown in FIG. 14, FIG. 15, and FIG. 17, a fastening ring 2269 may be disposed on the platform portion 2261, and the focus pusher 228 may be fastened in the fastening ring 2269.

The focus pusher 228 may be obtained by bending a sheet. As shown in FIG. 16, the focus pusher 228 may be a tube structure with a slit 2281. In a possible case, the slit 2281 of the focus pusher 228 may be disposed in parallel with the optical axis. When the focus pusher 228 is not accommodated in the focus pusher accommodating hole 2271 of the focus driver 227, the slit 2281 of the focus pusher 228 may be large. When the focus pusher 228 is accommodated in the focus pusher accommodating hole 2271 of the focus driver 227, the focus pusher 228 is squeezed by a hole wall of the focus pusher accommodating hole 2271, so that the slit 2281 of the focus pusher 228 can be narrowed. Therefore, a periphery of the focus pusher 228 may press against the hole wall of the focus pusher accommodating hole 2271, so that a friction force may exist between the focus pusher 228 and the focus pusher accommodating hole 2271. When the focus driver 227 does not work, there may be a static friction between the focus pusher 228 and the focus pusher accommodating hole 2271, and the static friction may enable the focus pusher 228 to be relatively static in the focus pusher accommodating hole 2271. This helps hover the focus mover 226 relative to the focus stator 225.

The focus driver 227 may turn on a focus resonance signal. At a same moment, a direction of a displacement of an end that is of the focus driver 227 and that is close to the circuit board assembly 300 may be opposite to a direction of a displacement of an end that is of the focus driver 227 and that is away from the circuit board assembly 300. For example, at a same moment, an end that is of the focus driver 227 and that is close to the circuit board assembly 300 moves toward the circuit board assembly 300, and an end that is of the focus driver 227 and that is away from the circuit board assembly 300 moves toward the ejector cover 240. In other words, the focus driver 227 may be in an elongated state. For another example, at a same moment, an end that is of the focus driver 227 and that is close to the circuit board assembly 300 moves toward the ejector cover 240, and an end that is of the focus driver 227 and that is away from the circuit board assembly 300 moves toward the circuit board assembly 300. In other words, the focus driver 227 may be in a retracted state. The focus driver 227 may periodically switch between the elongated state and the retracted state.

In a process in which the focus pusher 228 moves toward the circuit board assembly 300, time in which the focus driver 227 is in the elongated state may be longer than time in which the focus driver 227 is in the retracted state. In other words, an elongation speed of the focus driver 227 is slower, and a retraction speed of the focus driver 227 is faster.

In a periodicity, when the focus driver 227 slowly elongates, because of the friction between the focus pusher 228 and the focus pusher accommodating hole 2271, the focus pusher 228 may move toward the circuit board assembly 300 under driving of the focus driver 227. A displacement of the focus pusher 228 moving toward the circuit board assembly 300 may be the same as or close to 50% of an elongation amount of the focus driver 227. When the focus driver 227 rapidly retracts, because of an inertia action, a displacement of the focus pusher 228 moving away from the circuit board assembly 300 is less than 50% of a retraction amount of the focus driver 227. Because an elongation amount and a retraction amount of the focus driver 227 are the same in a periodicity, in the periodicity, the displacement of the focus pusher 228 moving toward the circuit board assembly 300 may be greater than the displacement of the focus pusher 228 moving away from the circuit board assembly 300. The focus driver 227 may repeatedly retract in a plurality of periodicities, so that the focus pusher 228 may be gradually moved out of the focus pusher accommodating hole 2272 toward the circuit board assembly 300.

For a principle of gradually moving the focus pusher 228 back to the focus pusher accommodating hole 2272, refer to the embodiment of gradually moving the focus pusher 228 out of the focus pusher accommodating hole 2272.

As described above, at a same moment, movement directions of two ends of the focus driver 227 are opposite. Therefore, the focus driver 227 may have a focus resonance zero point, and a displacement of the focus driver 227 at the focus resonance zero point may be considered as zero. A position near the resonance zero point on the focus driver 227 may be connected to the step 2254 of the focus mover 225. The step 2254 may be disposed opposite to the position near the resonance zero point on the focus driver 227. In a possible case, there may be a mounting ear (not shown in the figure) at the position near the resonance zero point on the focus driver 227, and the focus driver 227 may be connected to the step 2254 of the focus mover 225 through the mounting ear.

When the focus driver 227 works, the focus driver 227 may vibrate reciprocally and slightly along the optical axis. The focus driver 227 may be connected to the step 2254 of the focus mover 225 through an elastic connecting piece, where the elastic connecting piece may be, for example, foam or silicone. The elastic connecting piece can absorb slight vibration of the focus driver 227. This helps improve stability of a connection between the focus driver 227 and the focus mover 225.

In another embodiment provided in this application, the stepper motor may be used to drive the focus mover 226 to move relative to the focus stator 225. However, the stepper motor, an associated variable speed transmission assembly, and the like occupy a large space. In addition, the stepper motor may rotate the lens, so that the lens moves along the optical axis. In a process in which the stepper motor rotates the lens, a displacement of the lens from the optical axis is difficult to control. The camera module usually has a large quantity of lenses. Therefore, in a focusing process, it is difficult to align centers of a plurality of lenses. As a result, an imaging effect is affected. The stepper motor is also prone to introduce noise, affecting quality of video shooting. The piezoelectric principle may be applied to the focus assembly provided in this application. The focus assembly occupies a small space, and the focus mover 226 may move along the optical axis in a straight line. This helps reduce a displacement of the focus mover 226 from the optical axis, and the focus assembly causes less noise.

In another embodiment provided in this application, the Hall magnet may be used to drive the focus mover 226 to move relative to the focus stator 225. However, a stroke that can be achieved by the Hall magnet is short when the Hall magnet occupies a proper space. In embodiments provided in this application, because the focus stator 225 may be ejected, a movable stroke of the focus stator 226 is large. To meet stroke requirements, a plurality of Hall magnets may be disposed in the camera module 200. However, the plurality of Hall magnets may interfere with each other. Driving by using the Hall magnet further requires an additional self-locking module. The piezoelectric principle may be applied to the focus assembly provided in this application, so that a long focusing stroke can be implemented in a small space. This helps meet requirements such as a stroke and an occupied space.

Still refer to FIG. 14 to FIG. 17. In some embodiments provided in this application, the focus stator 225 may further include a focus through hole 2258. The lens assembly 220 may further include a focus guide rod 410. The focus guide rod 410 may be fastened to the platform portion 2261 of the focus mover 226, and is accommodated in the focus through hole 2258. As shown in FIG. 15 and FIG. 17, a fastening ring 22610 may be disposed on the platform portion 2261, and the focus guide rod 410 may be fastened in the fastening ring 22610. The focus through hole 2258 and the focus guide rod 410 may extend along the optical axis. A projection region of the focus guide rod 410 on the platform portion 2261 of the focus mover 226 may be located outside the light transmission hole 2262 of the platform portion 2261. The focus guide rod 410 and the focus guide hole 2258 cooperate with each other. When the focus mover 226 moves relative to the focus stator 225 along the optical axis, the focus mover 226 may drive the focus guide rod 410 to move along the optical axis. The focus through hole 2258 may be configured to guide the focus guide rod 410. This helps reduce the displacement of the focus mover 226 from the optical axis. In a possible case, the focus guide rod 410 and the focus driver 227 may be symmetrically disposed relative to a plane on which the optical axis is located.

In a possible case, an azimuth of the focus guide rod 410 and the focus driver 227 relative to the optical axis is 45° to 135°. In other words, projection is performed along the optical axis, a connection line between a center of a projection region of the focus guide rod 410 and the optical axis is a connection line e, a connection line between a center of a projection region of the focus driver 227 and the optical axis is a connection line f, and an angle between the connection line e and the connection line f is 45° to 135°. The focus guide rod 410 and the focus driver 227 may guide the focus mover 226 from different orientations. This helps reduce the displacement of the focus mover 226 from the optical axis.

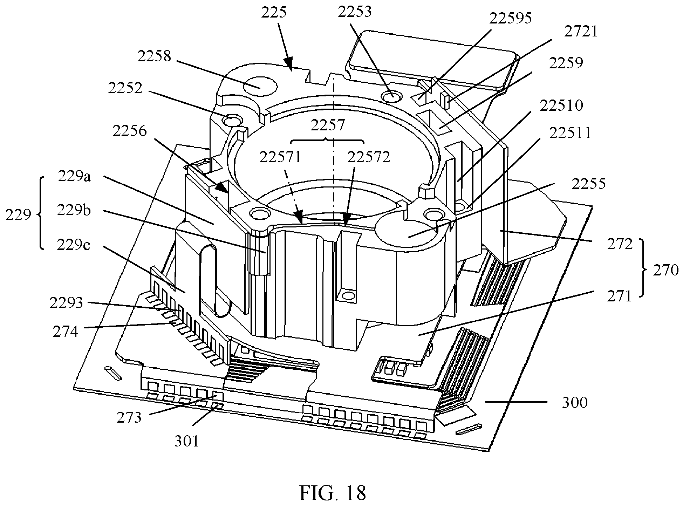

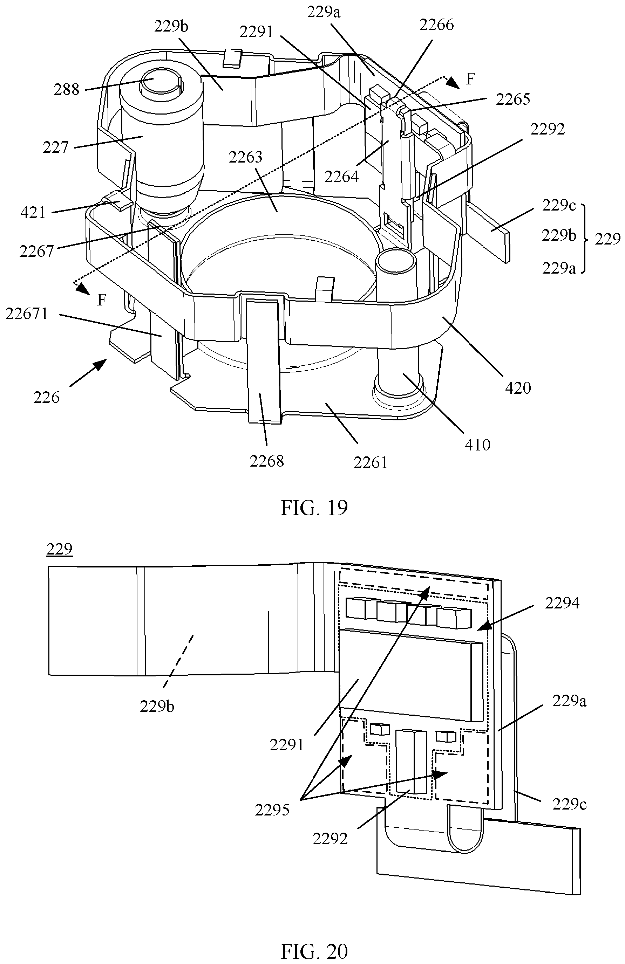

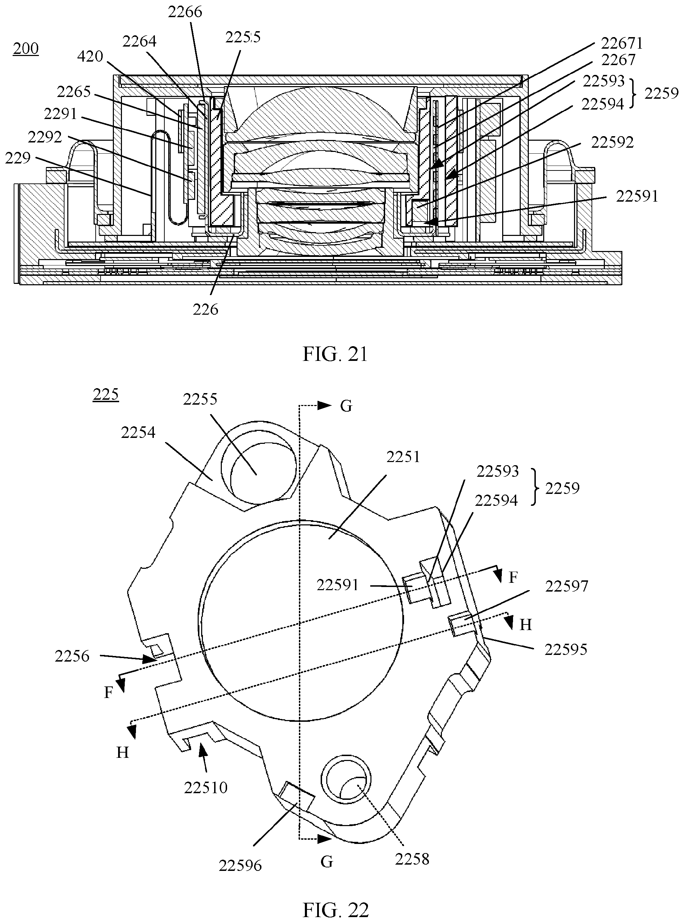

Still refer to FIG. 14 and FIG. 15. In some embodiments provided in this application, a circuit board assembly 229 may be fastened to the focus stator 225. FIG. 18 shows an assembly relationship between the circuit board assembly 229 and the focus stator 225. FIG. 19 shows an assembly relationship between the circuit board assembly 229 and the focus mover 226. FIG. 20 is a diagram of a structure of the circuit board assembly 229 according to an embodiment of this application. A cross-sectional view shown in FIG. 21 may be obtained by viewing the camera module 200 along a cross section F-F shown in FIG. 19.

The circuit board assembly 229 may include a circuit board portion 229a, a circuit board portion 229b, and a circuit board portion 229c. The circuit board portion 229a may be connected between the circuit board portion 229b and the circuit board portion 229c.

The circuit board portion 229a may include an element region 2294 (shown by a short dashed line in FIG. 20) and a fixed region 2295 (shown by a long dashed line in FIG. 20). In an embodiment, the circuit board portion 229a may be a rigid board. It should be understood that the element region 2294 and the fixed region 2295 shown in FIG. 20 are merely examples and are mainly used for ease of description, and embodiments of this application may not be limited to the specific example shown in FIG. 20.

The element region 2294 and the fixed region 2295 may be located on a same side of the circuit board portion 229a, and the element region 2294 and the fixed region 2295 may not intersect with each other.

The element region 2294 may be configured to dispose an element. With reference to FIG. 18 and FIG. 20, the focus stator 225 may further include an element accommodating slot 2256, and the element accommodating slot 2256 may be disposed opposite to the element region 2294 of the circuit board portion 229a. In other words, the element region 2294 may be located in a projection region of the element accommodating slot 2256 on the circuit board portion 229a. A space enclosed by the element accommodating slot 2256 and the circuit board portion 229a may be configured to accommodate the element on the element region 2294.

With reference to FIG. 18 and FIG. 20, the fixed region 2295 may be fastened to a side wall of the focus stator 225. In a possible case, the side wall of the focus stator 225 may be a wall parallel with the optical axis.

The focus stator 225 may further have a circuit board accommodating slot 2257. The circuit board accommodating slot 2257 may be recessed from the side wall of the focus stator 225 to the optical axis. The circuit board accommodating slot 2257 may have a slot wall 22571 and a slot wall 22572, and the slot wall 22571 and the slot wall 22572 may be disposed opposite to each other. The circuit board portion 229b of the circuit board assembly 229 may be sandwiched between the slot wall 22571 and the slot wall 22572. A spacing between the slot wall 22571 and the slot wall 22572 may be greater than or equal to a thickness of the circuit board portion 229b. The circuit board portion 229b may be fastened to the slot wall 22571 and/or the slot wall 22572. In an embodiment, the circuit board portion 229b may be a flexible board.

With reference to FIG. 14, FIG. 15, FIG. 18, and FIG. 20, a focus control module 2291 may be disposed on the circuit board portion 229a. The focus control module 2291 may be configured to turn on an alternating current for the focus driver 227. The circuit board portion 229b may extend from the circuit board portion 229a to the focus driver accommodating hole 2255 of the focus stator 225, and is electrically connected to the focus driver 227 in the focus driver accommodating hole 2255. Therefore, the focus control module 2291 may be electrically connected to the focus driver 227 through the circuit board portion 229a and the circuit board portion 229b.

In an embodiment, the circuit board portion 229b may be connected to the focus driver 227 in the focus driver accommodating hole 2255 (for example, by welding or attaching a conductive adhesive). A pin b 1 may be disposed in a region that is of the circuit board portion 229b and that is connected to the focus driver 227, and the pin b1 may be electrically connected to the focus driver 227. In another embodiment, a pin b1 may be disposed on a side that is of the circuit board portion 229b and that is close to the focus driver 227, and the pin b 1 may be electrically connected to the focus driver 227 through a lead.

With reference to FIG. 14, FIG. 15, FIG. 19, and FIG. 20, in some embodiments provided in this application, a magnetic grid 2265 may be disposed on the focus mover 226, and a magnetoresistor 2292 may be further disposed on the circuit board assembly 229. The magnetic grid 2265 and the magnetoresistor 2292 may be disposed opposite to each other, and a spacing between the magnetic grid 2265 and the magnetoresistor 2292 may be small. The magnetoresistor 2292 may be configured to detect a distance between the magnetoresistor 2292 and the magnetic grid 2265. The magnetoresistor 2292 may be, for example, a tunnel magnetoresistor (tunnel magnetoresistor, TMR) 2292. A moving displacement of the magnetic grid 2265 relative to the magnetoresistor 2292 may be obtained by using a signal output by the magnetoresistor 2292, so that an electrical signal turned on by the focus control module 2291 may be adjusted in time, where the electrical signal may be, for example, a current and/or a voltage.

In some embodiments, the focus mover 226 may further include an extension strip 2264. The extension strip 2264 is disposed at an edge position of the platform portion 2261, and the extension strip 2264 may extend from the platform portion 2261 along the optical axis. The magnetic grid 2265 may be fastened to the extension strip 2264. In an embodiment, the magnetic grid 2265 may be attached to the extension strip 2264 by using a colloid. In another embodiment, a clamping jaw 2266 may be further disposed on the extension strip 2264. The magnetic grid 2265 is fastened in the clamping jaw 2266, so that the magnetic grid 2265 can be fastened to the extension strip 2264.

With reference to FIG. 15, FIG. 18, and FIG. 20, the circuit board portion 229c may extend from the circuit board portion 229a toward the camera support 210. Because the lens assembly 220 may move relative to the camera support 210 along the optical axis, when the lens assembly 220 is located at a position closer to the camera support 210, the circuit board portion 229c may be in a folded state. When the lens assembly 220 is located at a position far away from the camera support 210, the circuit board portion 229c may be in an expanded state. In an embodiment, a foldable part of the circuit board portion 229c may be a flexible board.

Still refer to FIG. 4, FIG. 5, and FIG. 18. In some embodiments provided in this application, a circuit board assembly 270 may be disposed on the bearer portion 211 of the camera support 210. The circuit board assembly 270 and the circuit board assembly 300 may be respectively located on two sides of the camera support 210.

A pin 301 may be disposed on the circuit board assembly 300, and a pin 273 may be disposed on the circuit board assembly 270b. The pin 301 on the circuit board assembly 300 may be disposed close to the pin 273 on the circuit board assembly 270b, so that the pin 301 and the pin 273 may be electrically connected. For example, the pin 301 and the pin 273 are electrically connected through a solder ball, a lead, or the like. A pin 274 may be disposed on the circuit board assembly 270a, and a pin 2293 may be disposed on the circuit board assembly 229c. The pin 274 on the circuit board assembly 270a may be disposed close to the pin 2293 on the circuit board assembly 229c, so that the pin 274 and the pin 2293c may be electrically connected.

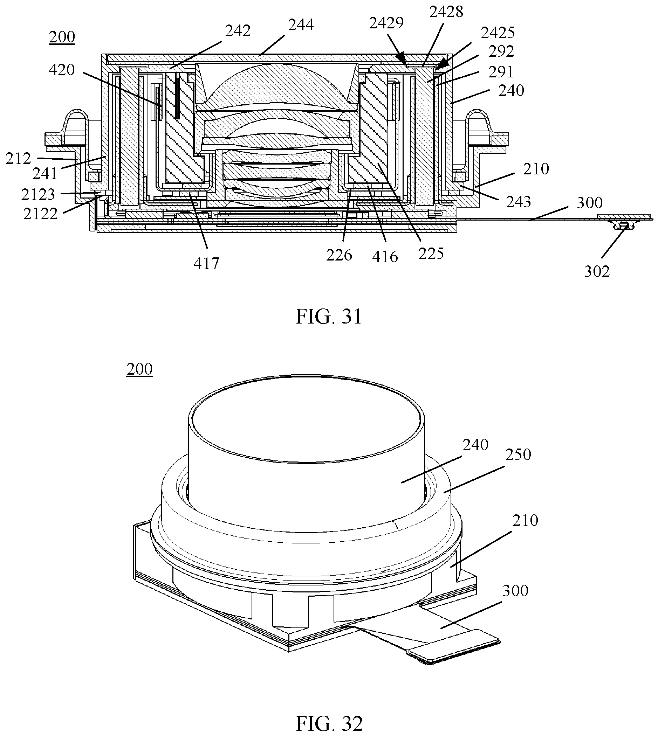

A pin 302 may be further disposed on the circuit board assembly 300 (for details, refer to FIG. 31). The pin 302 may be a communication port between the camera module 200 and the electronic device. A signal (for example, a feed signal) from the pin 302 may be transmitted to the pin 273 of the circuit board assembly 270 through the pin 301 of the circuit board assembly 300, so that communication with an element on the circuit board assembly 270 can be implemented. The circuit board assembly 270 may further transmit a signal to the pin 2293 of the circuit board assembly 229 through the pin 274, to communicate with an element on the circuit board assembly 229.

Still refer to FIG. 14 and FIG. 15. In some embodiments provided in this application, the lens assembly 220 may further include a focus stopper 420. The focus stopper 420 may be fastened to the focus mover 226. The focus stopper 420 may further cooperate with the focus stator 225. When the focus mover 226 moves relative to the focus stator 225, the focus stopper 420 may move relative to the focus stator 225 under driving of the focus mover 226, and the focus stopper 420 and the focus stator 225 may always have a cooperation relationship. Therefore, under a limiting effect of the focus stopper 420, the displacement of the focus mover 226 from the optical axis can be reduced.

As shown in FIG. 19, the focus stopper 420 may be in a ring shape. The focus stopper 420 may encircle a periphery of the focus stator 225. An inner ring surface of the focus stopper 420 may match an outer peripheral surface of the focus stator 225. In a possible scenario, for example, that the inner ring surface of the focus stopper 420 matches the outer peripheral surface of the focus stator 225 may mean that the inner ring surface of the focus stopper 420 may be obtained by biasing the outer peripheral surface of the focus stator 225 by a distance a, where the distance a may be an (average) spacing between the focus stopper 420 and the focus stator 225.

In some embodiments, the focus mover 226 may further include one or more extension strips 2268. The extension strip 2268 may be disposed at an edge position of the platform portion 2261 of the focus mover 226. The extension strip 2268 may extend from the platform portion 2261 along the optical axis. The extension strip 2268 may be fastened to a periphery or an inner circumference of the focus stopper 420.

As described above, the focus mover 226 may move relative to the focus stator 225 along the optical axis. Because the extension strip 2268 of the focus mover 226 is fastened to the focus stopper 420, the focus stopper 420 may move relative to the focus stator 225 under driving of the focus mover 226. A ring formed by the focus stopper 420 may be a movement sliding slot of the focus stopper 420 relative to the focus stator 225. Therefore, the focus stopper 420 may help limit the displacement of the focus mover 226 from the optical axis.

The circuit board portion 229a and the circuit board portion 229b of the circuit board assembly 229 may be fastened to the focus stator 225. As shown in FIG. 19, the focus stopper 420 may encircle a periphery of the circuit board portion 229a and the circuit board portion 229b. In other words, the circuit board portion 229a and the circuit board portion 229b may be located in a cavity enclosed by the focus stopper 420. The circuit board portion 229c of the circuit board assembly 229 may extend from the circuit board portion 229a to the outside of the focus stopper 420. With reference to FIG. 19 to FIG. 21, when the focus stopper 420 is far away from the ejector cover 240, the circuit board portion 229c may be folded on the outside of the focus stopper 420. When the focus stopper 420 is close to the ejector cover 240, the circuit board portion 229c may be expanded on the outside of the focus stopper 420.

Still refer to FIG. 18. In some embodiments provided in this application, a limiting slot 22510 may be further disposed on the side wall of the focus stator 225, and an extension direction of the limiting slot 22510 may be parallel with the optical axis. The limiting slot 22510 may have a limiting surface 22511. The limiting surface 22511 may be located on a side that is of the limiting slot 22510 and that is away from the ejector cover 240. In a possible case, the limiting surface 22511 may be vertically disposed relative to the optical axis.

With reference to FIG. 19, the focus stopper 420 may further include a limiting jaw 421. The limiting jaw 421 may extend into the limiting slot 22510 shown in FIG. 18. For example, the limiting jaw 421 may be disposed on a side that is of the focus stopper 420 and that is close to the ejector cover 240. In a possible case, the limiting jaw 421 may be vertically disposed relative to the optical axis.

When the focus mover 226 and the focus stator 225 move close to each other, the limiting jaw 421 may be located at an end that is of the limiting slot 22510 and that is away from the limiting surface 22511. When the focus mover 226 moves away from the focus stator 225 along the optical axis, the limiting jaw 421 may move toward the limiting surface 22511 in the limiting slot 22510. When a distance between the focus mover 226 and the focus stator 225 is long, the limiting jaw 421 may directly or indirectly abut against the limiting surface 22511. The limiting surface 22511 may limit the limiting jaw 421 to move away from the focus stator 225. The limiting slot 22510 and the limiting jaw 421 are disposed. This may help reduce a possibility that the focus mover 226 is excessively detached from the focus stator 225.

In a possible case, with reference to FIG. 14, FIG. 15, and FIG. 18, a buffer 422 may be disposed on the limiting surface 22511. The buffer 422 may be configured to provide a buffer between the limiting surface 22511 and the limiting jaw 421.

Still refer to FIG. 5, FIG. 14, and FIG. 15. In some embodiments provided in this application, a buffer 416 may be further disposed on the platform portion 2261 of the focus mover 226. The buffer 416 may be located on a side that is of the platform portion 2261 and that faces the focus stator 225. When the focus mover 226 and the focus stator 225 move close to each other, the buffer 416 may be in contact with the focus stator 225. The buffer 416 may be configured to reduce vibration generated when the focus mover 226 collides with the focus stator 225.

In a possible case, a light transmission hole 4161 may be disposed in a central region of the buffer 416. The light transmission hole 4161 may encircle a periphery of the lens mounting ring 2263 of the focus mover 226. Alternatively, the light transmission hole 4161 may be in communication with the light transmission hole 2262 of the platform portion 2261. An aperture of the light transmission hole 4161 may be greater than an aperture of the light transmission hole 2262. This helps reduce a possibility that light acts on the buffer 416, and further helps reduce a possibility that a light spot appears in an image.

Still refer to FIG. 5, FIG. 14, and FIG. 15. In some embodiments provided in this application, a buffer 417 may be further disposed on the platform portion 2261 of the focus mover 226. The buffer 417 may be located on a side that is of the platform portion 2261 and that is away from the focus stator 225. When the focus mover 226 is far away from the focus stator 225, the buffer 417 may be in contact with the camera support 210 or the circuit board assembly 270. The buffer 417 may be configured to reduce vibration generated when the focus mover 226 collides with the camera support 210 or the circuit board assembly 270.

In a possible case, a light transmission hole 4171 may be disposed in a central region of the buffer 417. The light transmission hole 4171 may be in communication with the light transmission hole 2262 of the platform portion 2261. An aperture of the light transmission hole 4171 may be greater than an aperture of the light transmission hole 2262. This helps reduce a possibility that light acts on the buffer 417, and further helps reduce a possibility that a light spot appears in an image.

FIG. 22 is a diagram of a structure of the focus stator 225 according to an embodiment of this application. A cross-sectional view shown in FIG. 21 may be obtained by viewing the camera module 200 along a cross section F-F shown in FIG. 22.

Still refer to FIG. 14, FIG. 15, FIG. 18, FIG. 19, FIG. 21, and FIG. 22. In some embodiments provided in this application, the focus stator 225 may include a guide slot 2259, and the guide slot 2259 may extend along the optical axis. The focus mover 226 may further include an extension strip 2267. The extension strip 2267 may be disposed on the platform portion 2261 of the focus mover 226. The extension strip 2267 may extend from the platform portion 2261 along the optical axis. The extension strip 2267 may extend into the guide slot 2259 of the focus stator 225 and cooperate with the guide slot 2259. When the focus mover 226 moves relative to the focus stator 225, the extension strip 2267 of the focus mover 226 may move in the guide slot 2259 of the focus stator 225 along the optical axis, to provide guidance along the optical axis for the focus mover 226. In a possible case, the extension strip 2267 and the extension strip 2264 may be symmetrically disposed relative to the plane on which the optical axis is located.

In some embodiments, the focus stator 225 may further include a magnet accommodating slot 22591. The magnet accommodating slot 22591 may be in communication with the guide slot 2259. The magnet accommodating slot 22591 may be configured to accommodate a fixed magnet 22592. For example, the magnet accommodating slot 22591 may be located on the side that is of the focus stator 225 and that is close to the focus mover 226. A movable magnet 22671 may be further disposed on the extension strip 2267 of the focus mover 226. A spacing between the fixed magnet 22592 and the movable magnet 22671 may be small, so that a magnetic force meeting a requirement exists between the fixed magnet 22592 and the movable magnet 22671.

The movable magnet 22671 and the fixed magnet 22592 may attract or repel each other. As shown in FIG. 21 and FIG. 22, the guide slot 2259 of the focus stator 225 includes a guide slot wall 22593 and a guide slot wall 22594 that are disposed opposite to each other. The extension strip 2267 of the focus mover 226 may be sandwiched between the guide slot wall 22593 and the guide slot wall 22594, where the guide slot wall 22593 and the fixed magnet 22592 are located on a same side of the extension strip 2267, and the guide slot wall 22594 and the fixed magnet 22592 are located on two sides of the extension strip 2267.

It is assumed that the movable magnet 22671 and the fixed magnet 22592 may attract each other. In this case, under attraction of the movable magnet 22671 and the fixed magnet 22592, a spacing between the extension strip 2267 and the guide slot wall 22593 may be less than a spacing between the extension strip 2267 and the guide slot wall 22594. In other words, in the guide slot 2259, the extension strip 2267 may be closer to the guide slot wall 22593 and farther away from the guide slot wall 22594.

Therefore, because the movable magnet 22671 interacts with the fixed magnet 22592, when the extension strip 2267 moves in the guide slot 2259, the extension strip 2267 may always be biased toward a side of the guide slot 2259. This helps reduce a displacement of the extension strip 2267 from the optical axis. In addition, because a plurality of lenses 221b are disposed on the focus mover 226, and the plurality of lenses 221b may always be biased to a side of the focus stator 225, displacements of the plurality of lenses 221b from the optical axis may be small.

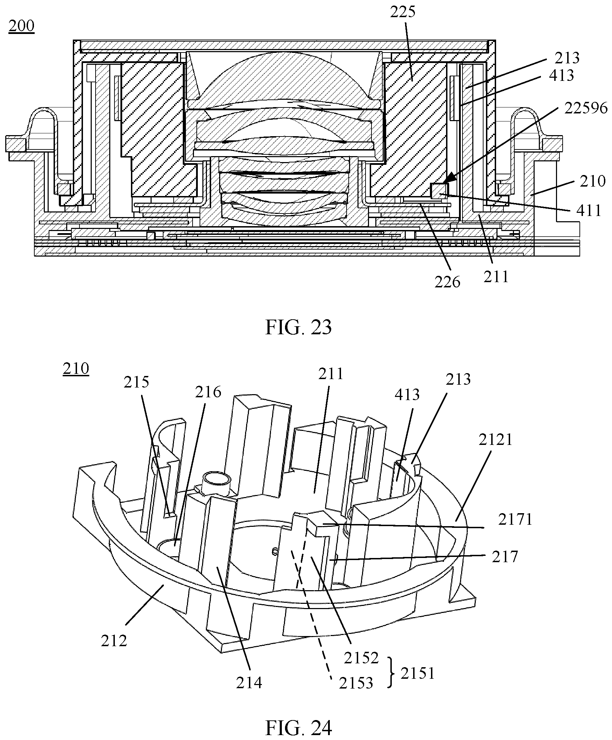

With reference to FIG. 15 and FIG. 22, in some embodiments provided in this application, the focus stator 225 may further include a magnet accommodating slot 22596. The magnet accommodating slot 22596 may be configured to accommodate a guide magnet 411. The magnet accommodating slot 22596 may be disposed on the side wall of the focus stator 225. A cross-sectional view shown in FIG. 23 may be obtained by viewing the camera module 200 along a cross section G-G shown in FIG. 22. FIG. 24 is a diagram of a structure of the camera support 210 according to an embodiment of this application.

As shown in FIG. 23, a guide magnet 413 may be disposed at a position that is of the camera support 210 and that faces the guide magnet 411. In other words, the guide magnet 411 and the guide magnet 413 may be disposed opposite to each other. A spacing between the guide magnet 411 and the guide magnet 413 may be small, so that a magnetic force meeting a requirement exists between the guide magnet 411 and the guide magnet 413.

In an embodiment, for example, the magnet accommodating slot 22596 may be disposed on the side that is of the focus stator 225 and that is close to the focus mover 226.

As shown in FIG. 23 and FIG. 24, the camera support 210 may further include a protrusion 213. The protrusion 213 may extend from the bearer portion 211 toward the focus stator 225. A protruding direction of the protrusion 213 may be parallel with the optical axis. The protrusion 213 may be disposed opposite to the guide magnet 411. A side that is of the protrusion 213 and that faces the focus stator 225 may be configured to dispose the guide magnet 413.

The guide magnet 413 and the guide magnet 411 may attract or repel each other. Because of an acting force between the guide magnet 413 and the guide magnet 411, the focus stator 225 may be closer to the protrusion 213 or farther away from the protrusion 213. Therefore, when the focus stator 225 moves along the optical axis under driving of the ejector cover 240, the focus stator 225 may always be biased to a side of the camera support 210. This helps reduce a displacement of the focus stator 225 from the optical axis. In addition, because a plurality of lenses 221a are disposed on the focus stator 225, and the plurality of lenses 221a may always be biased to a side of the camera support 210, displacements of the plurality of lenses 221a from the optical axis may be small.

In a possible case, an azimuth of the guide magnet 411 and the fixed magnet 22592 relative to the optical axis is 0° to 15° or 165° to 180°. In other words, projection is performed along the optical axis, a connection line between a center of a projection region of the guide magnet 411 and the optical axis is a connection line g, a connection line between a center of a projection region of the fixed magnet 22592 and the optical axis is a connection line h, and an angle between the connection line g and the connection line h is 0° to 15° or 165° to 180°. The guide magnet 411 and the fixed magnet 22592 may work together, so that a plurality of lenses on the focus stator 225 and a plurality of lenses on the focus mover 226 may be biased toward a same side of the camera module. This helps align a center of the plurality of lenses on the focus stator 225 with a center of the plurality of lenses on the focus mover 226.

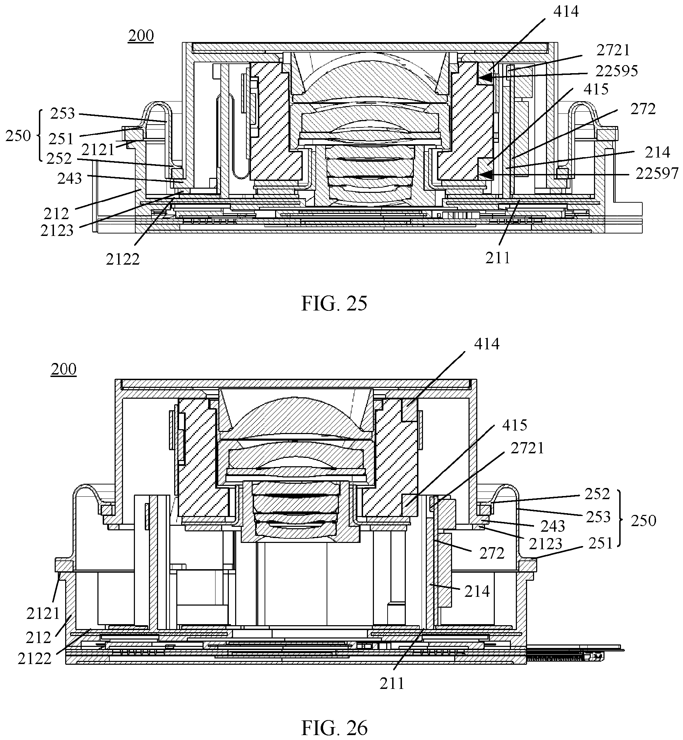

With reference to FIG. 14, FIG. 15, and FIG. 22, in some embodiments provided in this application, a positioning magnet 414 and a positioning magnet 415 may be disposed on the focus stator 225 (for example, a positioning magnet may be a Hall magnet). The positioning magnet 414 may be disposed in the magnet accommodating slot 22595 of the focus stator 225. The positioning magnet 415 may be disposed in the magnet accommodating slot 22597 of the focus stator 225. Cross-sectional views shown in FIG. 25 and FIG. 26 may be obtained by viewing the camera module 200 along a cross section H-H shown in FIG. 22.

In an embodiment, the positioning magnet 414 and the positioning magnet 415 may be arranged along the optical axis. In other words, projection is performed along the optical axis, and a projection region of the positioning magnet 414 may at least intersect with a projection region of the positioning magnet 415. The positioning magnet 414 may be located on a side that is of the focus stator 225 and that is close to the ejector cover 240. The positioning magnet 415 may be located on a side that is of the focus stator 225 and that is close to the camera support 210. A distance between the positioning magnet 414 and the positioning magnet 415 along the optical axis may be the same as an ejection distance of the focus stator 225.

Still refer to FIG. 18, FIG. 25, and FIG. 26. In some embodiments provided in this application, the circuit board assembly 270 may include a circuit board portion 271 and a circuit board portion 272. The circuit board portion 271 may be disposed on the bearer portion 211 of the camera support 210. The circuit board portion 272 may extend from the circuit board portion 271 toward the ejector cover 240. As shown in FIG. 18, the circuit board portion 272 may be located on a side of the focus stator 225. In a possible case, the circuit board portion 272 may be vertically disposed relative to the circuit board portion 271. In an embodiment, the circuit board portion 271 may be a rigid board, a flexible board, or a rigid-flexible board, and the circuit board portion 272 may be a rigid board, a flexible board, or a rigid-flexible board.

In some embodiments, as shown in FIG. 24 to FIG. 26, the camera support 210 may include a protrusion 214. The protrusion 214 may protrude from the bearer portion 211, and a protruding direction of the protrusion 214 may be parallel with the optical axis. The circuit board portion 272 may be attached to the protrusion 214. The camera support 210 supports the circuit board portion 272 through the protrusion 214. This may help reduce a possibility of tilting the circuit board portion 272. If the circuit board portion 272 tilts, a component on the circuit board portion 272 may deviate. The camera support 210 supports the circuit board portion 272 through the protrusion 214. This may further help improve stability of a connection between the circuit board portion 271 and the circuit board portion 272.

A displacement sensor 2721 may be disposed on the circuit board portion 272 (for example, the displacement sensor 2721 may be a Hall displacement sensor). For example, the displacement sensor 2721 may be disposed on the circuit board portion 272 by using a surface mounted technology (surface mounted technology, SMT).

As shown in FIG. 25, when the focus stator 225 is close to the camera support 210, in other words, when the camera module 200 is in a retracted state, a spacing between the positioning magnet 414 and the displacement sensor 2721 is small, so that the positioning magnet 414 can be located within an effective detection range of the displacement sensor 2721. The positioning magnet 414 may be disposed opposite to the displacement sensor 2721. The positioning magnet 415 may be located outside the effective detection range of the displacement sensor 2721. In other words, a magnetic field generated by the positioning magnet 415 has little impact on the displacement sensor 2721.

As shown in FIG. 26, when the focus stator 225 is away from the camera support 210, in other words, when the camera module 200 is in an ejected state, a spacing between the positioning magnet 415 and the displacement sensor 2721 is small, so that the positioning magnet 415 can be located within the effective detection range of the displacement sensor 2721. The positioning magnet 415 may be disposed opposite to the displacement sensor 2721. The positioning magnet 414 may be located outside the effective detection range of the displacement sensor 2721. In other words, a magnetic field generated by the positioning magnet 414 has little impact on the displacement sensor 2721.

The positioning magnet 414 may correspond to an initial ejection position of the camera module 200. The positioning magnet 415 may correspond to an end ejection position of the camera module 200. The positioning magnet 414, the positioning magnet 415, and the displacement sensor 2721 are disposed, so that it may be determined whether the camera module 200 is ejected to a specified height, or whether the camera module 200 is retracted to a specified position. This helps improve stability of ejection and retraction of the camera module 200.

Still refer to FIG. 4 and FIG. 5. In some embodiments provided in this application, the lens assembly 220 may be fastened to the ejector cover 240 through the focus stator 225. The focus stator 225 may be fastened to the ejector cover 240 in one or more of the following manners: by using a threaded fastener, by using an adhesive, by welding, and the like. In an embodiment, as shown in FIG. 4, the camera module 200 may include a threaded fastener 280.

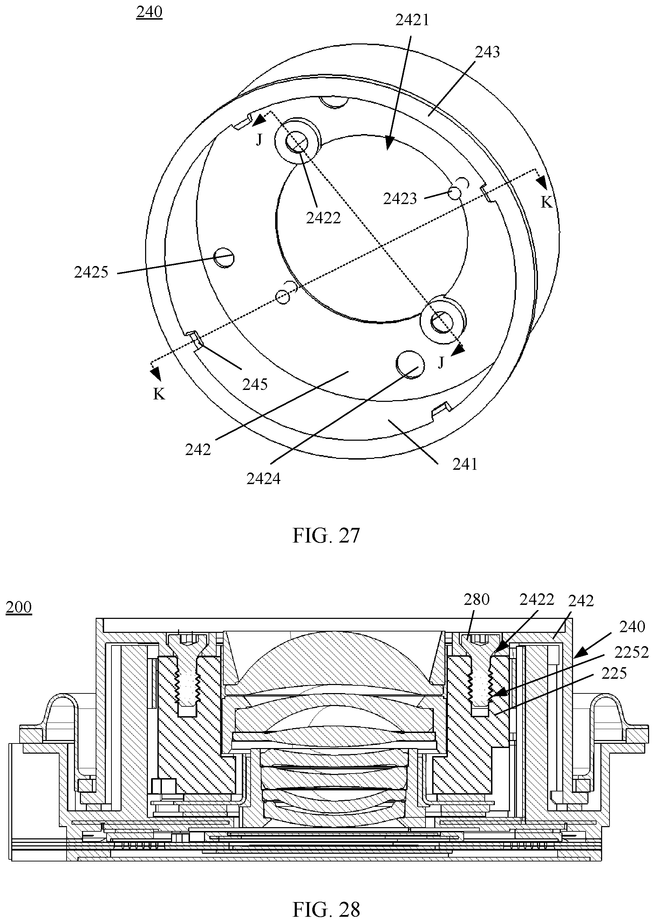

FIG. 27 is a diagram of a structure of the ejector cover 240 according to an embodiment of this application.

The ejector cover 240 may include a barrel portion 241 and a cover portion 242. For example, a cross section of the barrel portion 241 may be a circular ring, an elliptical ring, or another shape. The cover portion 242 may be disposed and fastened to an end of the barrel portion 241. In a possible case, the cover portion 242 may be connected to an inner wall or a periphery of the barrel portion 241. The cover portion 242 may include a light transmission region. Light from the outside may pass through the light transmission region of the cover portion 242, to be emitted to the plurality of lenses 221 of the lens assembly 220. The light transmission region may be disposed opposite to the plurality of lenses 221.

In an embodiment, the cover portion 242 may be entirely transparent, in other words, the entire cover portion 242 may be the light transmission region of the cover portion 242. In another embodiment, a light transmission hole 2421 may be disposed in the cover portion 242, and a region that is of the cover portion 242 and that is located in the light transmission hole 2421 may be a light transmission region of the cover portion 242. A region that is of the cover portion 242 and that is located outside the light transmission hole 2421 may be opaque. In a possible case, a center of the light transmission hole 2421 may be aligned with the optical axis.

In this application, it may be considered that a component a is disposed opposite to a component b when the component a and the component b meet any one of the following cases: a projection region of the component a is located in a projection region of the component b; the projection region of the component b is located in the projection region of the component a; and the projection region of the component a intersects with the projection region of the component b, and an intersection of the projection region of the component a and the projection region of the component b accounts for more than 50% of the projection region of the component a or the projection region of the component b.

In an embodiment, the ejector cover 240 may further include a transparent cover 244. The transparent cover 244 may be disposed on a side that is of the cover portion 242 and that is away from the lens assembly 220. The transparent cover 244 may cover the light transmission hole 2421. In other words, the transparent cover 244 may be connected to a region that is of the cover portion 242 and that is located outside the light transmission hole 2421. The transparent cover 244 may be configured to prevent an external contaminant from entering the camera module 200 through the light transmission hole 2421. For example, the transparent cover 244 may be attached to the cover portion 242 by using a transparent optical colloid.

As shown in FIG. 27, the cover portion 242 of the ejector cover 240 may have a mounting through hole 2422. A cross-sectional view shown in FIG. 28 may be obtained by viewing the camera module 200 along a cross section J-J shown in FIG. 27. It should be noted that the cross section J-J shown in FIG. 27 may correspond to the cross section J-J shown in FIG. 16. A threaded hole 2252 may be disposed on a side that is of the focus stator 225 and that faces the cover portion 242 of the ejector cover 240. The threaded fastener 280 may pass through the mounting through hole 2422 on the ejector cover 240 and cooperate with the threaded hole 2252, to fasten the ejector cover 240 to the focus stator 225.

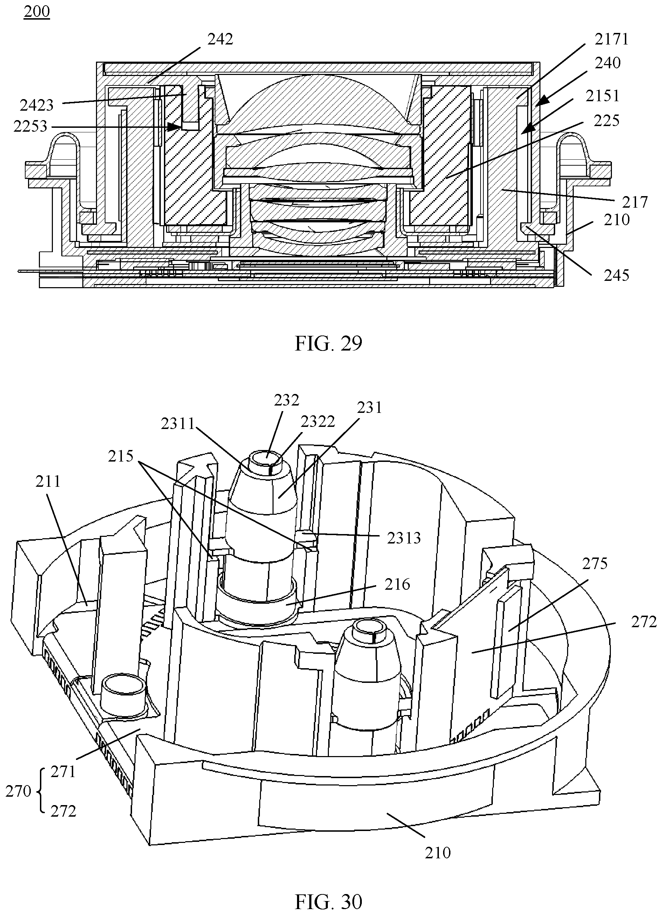

In some embodiments, a positioning protrusion 2423 may be disposed on one of the ejector cover 240 and the focus stator 225, a positioning hole 2253 may be disposed on the other, and the positioning protrusion 2423 may cooperate with the positioning hole 2253. This helps improve accuracy of positioning between the focus stator 225 and the ejector cover 240. As shown in FIG. 27, the positioning protrusion 2423 may be disposed on a side that is of the cover portion 242 of the ejector cover 240 and that faces the focus stator 225. A cross-sectional view shown in FIG. 29 may be obtained by viewing the camera module 200 along a cross section K-K shown in FIG. 27. It should be noted that the cross section K-K shown in FIG. 27 may correspond to the cross section K-K shown in FIG. 16. As shown in FIG. 29, the positioning hole 2253 may be disposed on the side that is of the focus stator 225 and that faces the cover portion 242 of the ejector cover 240. The positioning protrusion 2423 may extend into the positioning hole 2253.

Still refer to FIG. 4 and FIG. 5. In some embodiments provided in this application, the camera module 200 may further include a flexible connecting piece 250. One end of the flexible connecting piece 250 may be fastened to the camera support 210. The other end of the flexible connecting piece 250 may be connected to the barrel portion 241 of the ejector cover 240, and fastened to an opening of the barrel portion 241. The flexible connecting piece 250 may be connected to a periphery or an inner wall of the barrel portion 241. In other words, the flexible connecting piece 250 may be connected between the ejector cover 240 and the camera support 210.

Because of flexibility of the flexible connecting piece 250, when the ejector cover 240 moves away from the camera support 210, the flexible connecting piece 250 may extend (or expand) along the optical axis. When the ejector cover 240 moves close to the camera support 210, the flexible connecting piece 250 may retract (or fold) along the optical axis. In a possible case, the flexible connecting piece 250 may further have high sealing performance. For example, the flexible connecting piece 250 may have waterproof performance. The flexible connecting piece 250 may be sealedly connected between the camera support 210 and the ejector cover 240. This helps reduce a possibility of an external contaminant entering a cavity between the camera support 210 and the ejector cover 240.

In some embodiments, as shown in FIG. 27 and FIG. 29, a limiting jaw 245 may be disposed at an end that is of the ejector cover 240 and that is close to the camera support 210. With reference to FIG. 24, the camera support 210 further includes a protrusion 217 disposed opposite to the limiting jaw 245. The protrusion 217 extends from the bearer portion 211 of the camera support 210 to the ejector cover 240.

As shown in FIG. 24 and FIG. 29, a limiting table 2171 is disposed at an end that is of the protrusion 217 and that is close to the ejector cover 240. A jaw sliding slot 2151 extending along the optical axis is disposed between the limiting table 2171 and the bearer portion 211. The limiting jaw 2452 may extend into the jaw sliding slot 2151 and move in the jaw sliding slot 2151. After the limiting jaw 245 moves to the limiting table 2171, the limiting jaw 245 may cooperate with the limiting table 2171, and the limiting table 2171 may prevent the limiting jaw 245 from continuing moving away from the camera support 210.

In an embodiment, as shown in FIG. 24, the jaw sliding slot 2151 includes a sliding slot portion 2152 and a sliding slot portion 2153, and the sliding slot portion 2152 may be opposite to the limiting table 2171. In other words, a projection region of the limiting table 2171 on the bearer portion 211 of the camera support 210 may be located in a projection region of the jaw sliding slot 2151 on the bearer portion 211. The sliding slot portion 2153 may be located in a projection region of the bearer portion 211, and may be located outside the projection region of the limiting table 2171 on the bearer portion 211. When the ejector cover 240 and the camera support 210 are assembled, the ejector cover 240 may rotate around the optical axis, so that the limiting jaw 245 may slide from the sliding slot portion 2153 to the sliding slot portion 2152 and cooperate with the limiting table 2171 in the sliding slot portion 2152. When the ejector cover 240 and the camera support 210 are disassembled, the limiting jaw 245 may slide from the sliding slot portion 2152 to the sliding slot portion 2153, and the limiting jaw 245 may not be limited by the limiting table 2171 in the sliding slot portion 2153, so that the ejector cover 240 can be separated from the camera support 210.

In some embodiments, as shown in FIG. 4, FIG. 5, and FIG. 25 to FIG. 27, the ejector cover 240 may further include an epitaxial ring 243, the epitaxial ring 243 may encircle the periphery of the barrel portion 241, and the epitaxial ring 243 and the cover portion 241 may be respectively located at two ends of the barrel portion 242. The epitaxial ring 243 may extend away from the optical axis from the barrel portion 241. In a possible case, the epitaxial ring 243 may be vertically disposed relative to the optical axis.

As shown in FIG. 24 to FIG. 26, the protrusion 212 of the camera support 210 may have an end face 2121. The end face 2121 may be located on a side that is of the protrusion 212 and that is away from the bearer portion 211. In a possible case, the end face 2121 may be vertically disposed relative to the optical axis.

The flexible connecting piece 250 may have a ring 251, a ring 252, and a ring 253, and the ring 253 may be connected between the ring 251 and the ring 252. An outer diameter of the ring 251 may be greater than an outer diameter of the ring 252. The ring 251 may be fastened to the end face 2121 of the camera support 210. The ring 252 may be fastened to the epitaxial ring 243 of the ejector cover 240. The ring 253 may be configured to provide the ring 252 with a deformation amount along the optical axis, so that the ring 252 may move relative to the ring 251 along the optical axis. When the ejector cover 240 moves away from the camera support 210, the ring 252 and an end that is of the ring 253 and that is close to the ring 252 may move away from the camera support 210 with the ejector cover 240. When the ejector cover 240 moves close to the camera support 210, the ring 252 and the end that is of the ring 253 and that is close to the ring 252 may move close to the camera support 210 with the ejector cover 240.

With reference to FIG. 24 to FIG. 26, the ejector cover 240 may move along the optical axis in a cavity enclosed by the protrusion 212. A size of a periphery of the ejector cover 240 may be smaller than a size of the cavity enclosed by the protrusion 212. In a possible case, the size of the periphery of the ejector cover 240 may correspond to a size of a periphery of the epitaxial ring 243.

With reference to FIG. 25, when the ejector cover 240 is in a retracted state, the epitaxial ring 243 of the ejector cover 240 may be located at a position close to the bearer portion 211 and in the cavity enclosed by the protrusion 212. Because the ring 252 is connected to the epitaxial ring 243, the ring 252 may be located in the cavity enclosed by the protrusion 212. A region that is of the ring 253 and that is close to the ring 252 may be located in the cavity enclosed by the protrusion 212, and a region that is of the ring 253 and that is close to the ring 251 may be located outside the cavity enclosed by the protrusion 212.

With reference to FIG. 26, when the ejector cover 240 is in an ejected state, the epitaxial ring 243 of the ejector cover 240 may move out of the cavity enclosed by the protrusion 212, and the flexible connecting piece 250 may be entirely located outside a cavity enclosed by the bearer portion 211 and the protrusion 212.

In an embodiment, the protrusion 212 may include a bearer platform 2122, and the bearer platform 2122 may be located at an end that is of the protrusion 212 and that is away from the end face 2121. In a possible case, the bearer platform 2122 may be vertically disposed relative to the optical axis. The bearer platform 2122 may be flush with or not flush with the bearer portion 211. The bearer platform 2122 may be in a ring shape. A projection of the epitaxial ring 243 on the camera support 210 may be located on the bearer platform.

When the ejector cover 240 is in the retracted state, the epitaxial ring 243 of the ejector cover 240 directly or indirectly abuts against the bearer platform 2122. As shown in FIG. 25 and FIG. 26, a buffer 2123 is disposed on the epitaxial ring 243 of the ejector cover 240, and the buffer 2123 may be located on a side that is of the epitaxial ring 243 and that is away from the cover portion 242. When the ejector cover 240 is in the retracted state, the buffer 2123 may be in contact with the bearer platform 2122. The buffer 2123 may buffer between the bearer platform 2122 and the epitaxial ring 243. This helps reduce vibration generated when the epitaxial ring 243 collides with the bearer platform 2122.

Still refer to FIG. 4 and FIG. 5. In some embodiments provided in this application, the ejection assembly 230 may include an ejection driver 231 and an ejector 232. The ejection driver 231 may be carried on the camera support 210. The ejection driver 231 may be configured to drive the ejector 232 to move along the optical axis. The ejector 232 may be fastened to the ejector cover 240. Therefore, the ejector cover 240 may move along the optical axis under driving of the ejector 232. In this way, the ejector cover 240 can move relative to the camera support 210 along the optical axis. In some embodiments, the focus stator 225 may have a recess avoidance structure of the ejection driver 231. The recess avoidance structure may be recessed from the side wall of the focus stator 225 to the optical axis. The ejection driver 231 may be close to or disposed in the recess avoidance structure, to reduce a space occupied after the focus stator 225 and the ejection driver 231 are assembled.

The ejection assembly 230 may implement driving of the ejector 232 by the ejection driver 231 by using the mechanical transmission principle (for example, the stepper motor), the electromagnetic principle (for example, the Hall magnet), the piezoelectric principle (for example, the piezoelectric ceramic), and the like. FIG. 30 is a diagram of a structure of the ejection assembly 230 according to an embodiment of this application. FIG. 30 further shows an assembly relationship between the ejection assembly 230 and the camera support 210.

The ejection driver 231 may include an ejector accommodating hole 2311 and an ejector accommodating hole 2312. The ejector accommodating hole 2311 is in communication with the ejector accommodating hole 2312. A hole axis of the ejector accommodating hole 2312 may be aligned with a hole axis of the ejector accommodating hole 2312. The ejector accommodating hole 2311 is located at an end that is of the ejection driver 231 and that is close to the ejector cover 240. The ejector accommodating hole 2312 is located at an end that is of the ejection driver 231 and that is close to the camera support 210. An inner diameter of the ejector accommodating hole 2311 may be smaller than that of the ejector accommodating hole 2312. In a possible case, the ejection driver 231 may have a piezoelectric ceramic. The ejector accommodating hole 2312 may be disposed on the piezoelectric ceramic.

The ejector 232 may be disposed in the ejector accommodating hole 2311 and the ejector accommodating hole 2312. The ejector 232, the ejector accommodating hole 2311, and the ejector accommodating hole 2312 may extend along the optical axis. An end that is of the ejector 232 and that is away from the camera support 210 may extend out of the ejector accommodating hole 2311, and is fastened to the ejector cover 240.

With reference to FIG. 4, FIG. 5, and FIG. 27, the ejector cover 240 may include a mounting through hole 2424. The end that is of the ejector 232 and that is away from the camera support 210 may extend into the mounting through hole 2424. A welding sheet 2426 may be disposed on a side that is of the ejector cover 240 and that is away from the camera support 210. An edge region of the welding sheet 2426 may be welded to the ejector cover 240, and a central region of the welding sheet 2426 may be welded to the ejector 232. Therefore, the ejector 232 may be fastened to the ejector cover 240. An outer diameter of the ejector 232 may be smaller than an aperture of the mounting through hole 2424, and an outer diameter of the welding sheet 2426 may be greater than the aperture of the mounting through hole 2424.

In a possible case, as shown in FIG. 5, a mounting slot 2427 may be disposed on the cover portion 242 of the ejector cover 240, and the mounting slot 2427 may be located on a side that is of the cover portion 242 and that is away from the camera support 210. An opening of the mounting slot 2427 may be disposed away from the camera support 210. A slot bottom of the mounting slot 2427 may be in communication with the mounting through hole 2424, and the cover welding sheet 2426 may be disposed in the mounting slot 2427 and is fastened to the slot bottom of the mounting slot 2427. The mounting slot 2427 is disposed, and this helps embed the cover welding sheet 2426 in the mounting slot 2427, so that the ejector cover 240 has no clear protrusion on a side away from the camera support 210. This further helps increase a contact area between the cover portion 242 and the transparent cover 244.

The ejector 232 may be obtained by bending a sheet. As shown in FIG. 30, the ejector 232 may be a tube structure with a slit 2322. In a possible case, the slit 2322 of the ejector 232 may be disposed in parallel with the optical axis. When the ejector 232 is not accommodated in the ejector accommodating hole 2311 of the ejection driver 231, the slit 2322 of the ejector 232 may be large. When the ejector 232 is accommodated in the ejector accommodating hole 2311 of the ejection driver 231, the ejector 232 is squeezed by a hole wall of the ejector accommodating hole 2311, so that the slit 2322 of the ejector 232 can be reduced. Therefore, a periphery of the ejector 232 may press against the hole wall of the ejector accommodating hole 2311, so that a friction force may exist between the ejector 232 and the ejector accommodating hole 2311. There may be a spacing between the ejector 232 and the ejector accommodating hole 2312.

When the ejection driver 231 does not work, there may be a static friction between the ejector 232 and the ejector accommodating hole 2311, and the static friction may enable the ejector 232 to be relatively static in the ejector accommodating hole 2311. Therefore, the ejector 232 can hover in the ejector accommodating hole 2311.

The ejection driver 231 may turn on a piezoelectric resonance signal. At a same moment a direction of a displacement of an end that is of the ejection driver 231 and that is close to the ejector cover 240 may be opposite to a direction of a displacement of an end that is of the ejection driver 231 and that is close to the camera support 210. For example, at a same moment, a portion that is of the ejection driver 231 and that has the ejector accommodating hole 2311 may move toward the ejector cover 240, and a portion that is of the ejection driver 231 and that has the ejector accommodating hole 2312 may move toward the camera support 210. In other words, the ejection driver 231 may be in an elongated state. For another example, at a same moment, a portion that is of the ejection driver 231 and that has the ejector accommodating hole 2311 may move toward the camera support 210, and a portion that is of the ejection driver 231 and that has the ejector accommodating hole 2312 may move toward the ejector cover 240. In other words, the ejection driver 231 may be in a retracted state. The ejection driver 231 may periodically switch between the elongated state and the retracted state.

In a process in which the ejector 232 moves toward the ejector cover, time in which the ejection driver 231 is in the elongated state may be longer than time in which the ejection driver 231 is in the retracted state. In other words, an elongation speed of the ejection driver 231 is slower, and a retraction speed of the ejection driver 231 is faster.

In a periodicity, when the ejection driver 231 slowly elongates, because of the friction between the ejector 232 and the ejector accommodating hole 2311 of the ejection driver 231, the ejector 232 may move toward the ejector cover 240 under driving of the ejection driver 231. A displacement of the ejector 232 moving toward the ejector cover 240 may be the same as or close to 50% of an elongation amount of the ejection driver 231. When the ejection driver 231 rapidly retracts, because of an inertia action, a displacement of the ejector 232 moving toward the camera support 210 is less than 50% of a retraction amount of the ejection driver 231. Because an elongation amount and a retraction amount of the ejection driver 231 are the same in a periodicity, in the periodicity, the displacement of the ejector 232 moving toward the ejector cover 240 may be greater than the displacement of the ejector 232 moving toward the camera support 210. The ejection driver 231 may repeatedly retract in a plurality of periodicities, so that the ejector 232 may be gradually moved out of the ejector accommodating hole 2311.

For a principle of gradually moving the ejector 232 back to the ejector accommodating hole 2311, refer to the embodiment of gradually moving the ejector 232 out of the ejector accommodating hole 2311.

As described above, at a same moment, movement directions of two ends of the ejection driver 231 are opposite. Therefore, the ejection driver 231 may have a resonance zero point, and a displacement of the ejection driver 231 at the resonance zero point may be zero. In a possible case, the ejector accommodating hole 2311 and the ejector accommodating hole 2312 may be respectively located on two sides of the resonance zero point.

In an embodiment, as shown in FIG. 30, the camera support 210 may include a protrusion 215. The protrusion 215 may extend from the bearer portion 211 of the camera support 210 to the ejector cover 240. In a possible case, an extension direction of the protrusion 215 may be parallel with the optical axis. A mounting ear 2313 may be disposed at a position near the resonance zero point on the ejection driver 231, and the mounting ear 2313 may be connected to the protrusion 215. When the ejection driver 231 works, the mounting ear 2313 may vibrate reciprocally and slightly along the optical axis, and the mounting ear 2313 may be connected to the protrusion 215 through an elastic connecting piece, where the elastic connecting piece may be, for example, foam or silicone.

In some embodiments, as shown in FIG. 30, an ejection control element 275 may be disposed on the circuit board assembly 270. The ejection assembly 230 may be controlled to eject or retract through the ejection control element 275 on the circuit board assembly 270. In an embodiment, as described above, the circuit board assembly 270 may include a circuit board portion 271 and a circuit board portion 272. For example, the ejection control element 275 may be disposed on the circuit board portion 272. The ejection driver 231 may be electrically connected to a cable on the circuit board portion 271. The circuit board portion 272 may be connected to the circuit board portion 271. Therefore, the ejection control element 275 may control reciprocating vibration of the ejection driver 231 through the circuit board portion 272 and the circuit board portion 271.

With reference to FIG. 5 and FIG. 30, in some embodiments provided in this application, an ejection ring 216 may be further disposed on the camera support 210. The ejection ring 216 may be disposed on the bearer portion 211 of the camera support 210, and the ejection ring 216 and the ejection assembly 230 may be located on a same side of the bearer portion 211. The ejection ring 216 may encircle a periphery of the ejection driver 231 of the ejection assembly 230. The ejection driver 231 may vibrate reciprocally in the ejection ring 216. The ejection ring 216 may be configured to limit a displacement of the ejection driver 231 from the optical axis.

In an embodiment, the ejection ring 216 may be disposed on the camera support 210 by using an embedding process. As shown in FIG. 5, the camera module 200 may include an embedded portion 2161 of the ejection ring 216 that is embedded in the camera support 210 and a remaining portion that extends out of the camera support 210. In a possible scenario, the embedded portion 2161 of the ejection ring 216 may be vertically disposed relative to the optical axis, and the remaining portion may protrude from the embedded portion 2161 along the optical axis.

The camera support 210 may be obtained through injection molding. A material of the camera support 210 may be, for example, resin, rubber, or glass. Before injection molding, the embedded portion 2161 may be disposed in an injection mold. In an injection molding process, a raw material of the camera support 210 may wrap the embedded portion 2161, so that the embedded portion 2161 may be embedded in the camera support 210. This helps improve stability of a connection between the ejection ring 216 and the camera support 210.

In an embodiment, the ejection assembly 230 may further include an ejection counterweight 233. The ejection counterweight 233 may be located at an end that is of the ejection driver 231 and that is close to the camera support 210. The ejection counterweight 233 may facilitate regular reciprocating vibration of the ejection driver 231. For example, the ejection counterweight 233 may be disposed on the ejection ring 216.

Still refer to FIG. 4 and FIG. 16. In some embodiments provided in this application, the camera module 200 may further include an ejection guide assembly 290. The ejection guide assembly 290 may include an ejection guide sleeve 291 and an ejection guide rod 292. A cross-sectional view shown in FIG. 31 may be obtained by viewing the camera module 200 along a cross section L-L shown in FIG. 16.

The ejection guide sleeve 291 may be disposed on the camera support 210. The ejection guide rod 292 may be accommodated in the ejection guide sleeve 291. An end that is of the ejection guide rod 292 and that is away from the camera support 210 may be fastened to the ejector cover 240. The ejection guide sleeve 291 and the ejection guide rod 292 may extend along the optical axis. When ejector cover 240 moves relative to the camera support 210 along the optical axis, the ejector cover 240 may drive the ejection guide rod 292 to move along the optical axis. The ejection guide sleeve 291 may be configured to guide the ejection guide rod 292. This helps reduce a displacement of the ejection guide rod 292 from the optical axis. In a possible case, FIG. 31 shows two groups of ejection guide sleeves 291 and ejection guide rods 292. A spacing between the first group of ejection guide sleeve 291 and ejection guide rod 292 may be less than 20 µm, and a spacing between the second group of ejection guide sleeve 291 and ejection guide rod 292 may be greater than 50 µm. The first group of ejection guide sleeve 291 and ejection guide rod 292 may be used for mounting positioning, and the second group of ejection guide sleeve 291 and ejection guide rod 292 may be used to provide an interference margin.

In a possible case, an azimuth of the ejection guide sleeve 291 and the ejection driver 231 relative to the optical axis is 45° to 135°. In other words, projection is performed along the optical axis, a connection line between a center of a projection region of the ejection guide sleeve 291 and the optical axis is a connection line a, a connection line between a center of a projection region of the ejection driver 231 and the optical axis is a connection line b, and an angle between the connection line a and the connection line b is 45° to 135°. The ejection guide sleeve 291 and the ejection driver 231 may guide the focus stator 225 from different orientations. This helps reduce the displacement of the focus stator 225 from the optical axis.

In a possible case, an azimuth of the ejection driver 231 and the focus driver 227 relative to the optical axis is 15° to 180°. In other words, projection is performed along the optical axis, a connection line between a center of a projection region of the ejection driver 231 and the optical axis is a connection line c, a connection line between a center of a projection region of the ejection driver 231 and the optical axis is a connection line d, and an angle between the connection line c and the connection line d is 15° to 180°. The ejection driver 231 may be configured to drive the focus stator 226 to move along the optical axis, and the focus driver 227 may be configured to drive the focus mover 225 to move along the optical axis. In other words, the ejection assembly 230 and the focus assembly 222 may be disposed in different orientations of the camera module 200. Therefore, the ejection assembly 230 and the focus assembly 222 can be compactly assembled in the camera module 200.

With reference to FIG. 4, FIG. 27, and FIG. 31, the ejector cover 240 may include a mounting through hole 2425. An end that is of the ejection guide rod 292 and that is away from the camera support 210 may extend into the mounting through hole 2425. A welding sheet 2428 may be disposed on a side that is of the ejector cover 240 and that is away from a camera assembly. An edge region of the welding sheet 2428 may be welded to the ejector cover 240, and a central region of the welding sheet 2428 may be welded to the ejection guide rod 292. Therefore, the ejection guide rod 292 may be fastened to the ejector cover 240. An outer diameter of the ejection guide rod 292 may be smaller than an aperture of the mounting through hole 2425, and an outer diameter of the welding sheet 2428 may be greater than the aperture of the mounting through hole 2425.

In a possible case, a mounting slot 2429 may be disposed on the cover portion 242 of the ejector cover 240, and the mounting slot 2429 may be located on a side that is of the cover portion 242 and that is away from the camera support 210. An opening of the mounting slot 2429 may be disposed away from the camera support 210. A slot bottom of the mounting slot 2429 may be in communication with the mounting through hole 2425. The cover welding sheet 2428 may be disposed in the mounting slot 2429 and is fastened to the slot bottom of the mounting slot 2429. The mounting slot 2429 is disposed, and this helps embed the cover welding sheet 2428 in the mounting slot 2429, so that the ejector cover 240 has no clear protrusion on a side away from the camera support 210. This further helps increase a contact area between the cover portion 242 and the transparent cover 244.

In another embodiment provided in this application, the stepper motor may be used to drive the ejector cover 240 to move relative to the camera support 210. However, the stepper motor, an associated variable speed transmission assembly, and the like occupy a large space. In addition, the stepper motor may rotate the lens, so that the lens moves along the optical axis. In a process in which the stepper motor rotates the lens, a displacement of the lens from the optical axis is difficult to control. The camera module usually has a large quantity of lenses. Therefore, in an ejection process, it is difficult to align centers of a plurality of lenses. As a result, an imaging effect is affected. The stepper motor is also prone to introduce noise, affecting quality of video shooting. The piezoelectric principle may be applied to the ejection assembly provided in this application. The ejection assembly occupies a small space, and the focus stator 225 may move along the optical axis in a straight line with the ejector cover 240. This helps reduce a displacement of the focus stator 225 from the optical axis, and the ejection assembly causes less noise.

In another embodiment provided in this application, the Hall magnet may be used to drive the ejector cover 240 to move relative to the camera support 210. However, a stroke that can be achieved by the Hall magnet is short when the Hall magnet occupies a proper space. In embodiments provided in this application, an ejection stroke of the ejector cover 240 may be large. To meet stroke requirements, a plurality of Hall magnets may be disposed in the camera module 200. However, the plurality of Hall magnets may interfere with each other. Driving by using the Hall magnet further requires an additional self-locking module. The piezoelectric principle may be applied to the focus assembly provided in this application, so that a long ejection stroke can be implemented in a small space. This helps meet requirements such as a stroke and an occupied space.

FIG. 3 is a diagram of a structure of the camera module 200 in a retracted state according to an embodiment of this application. FIG. 32 is a diagram of a structure of the camera module 200 in an ejected state according to an embodiment of this application.

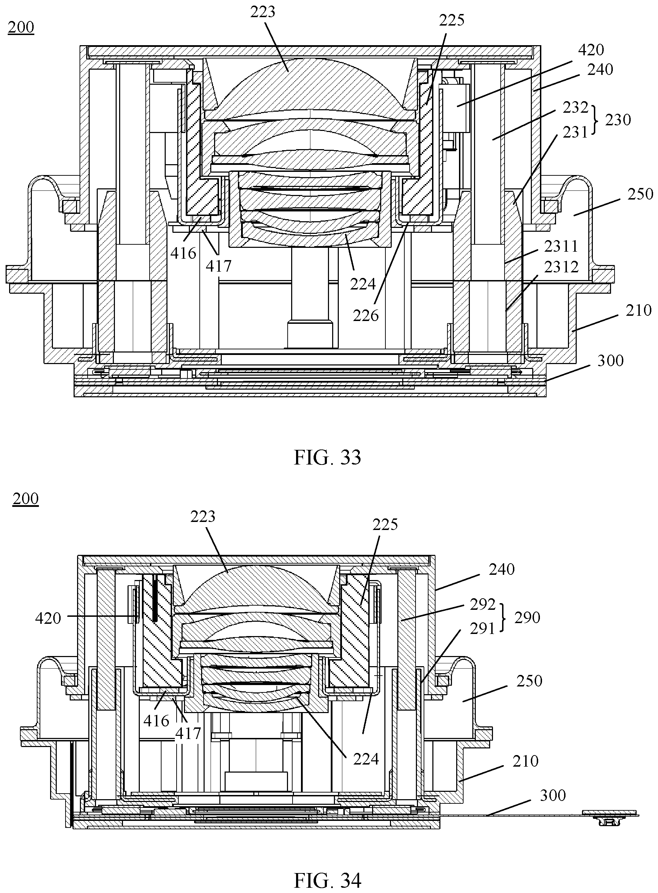

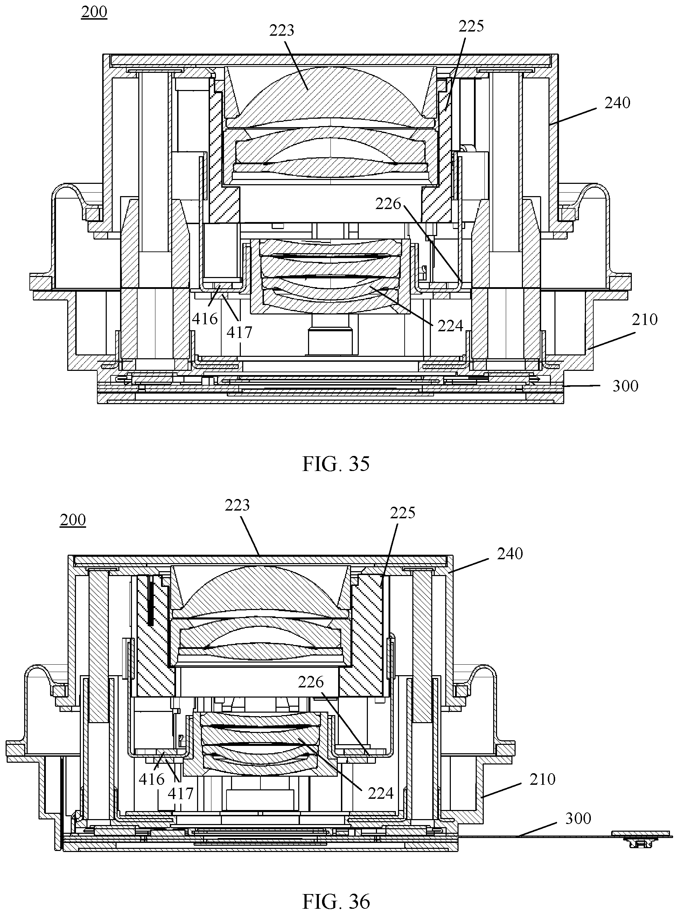

Cross-sectional views shown in FIG. 5, FIG. 33, and FIG. 35 may be obtained by viewing the camera module 200 along a cross section A-A shown in FIG. 16. The camera module 200 shown in FIG. 5 is in a retracted state, the camera module 200 shown in FIG. 33 is in an ejected state, and the camera module 200 in an ejected state shown in FIG. 35 is in a focus mode.

Cross-sectional views shown in FIG. 31, FIG. 34, and FIG. 36 may be obtained by viewing the camera module 200 along a cross section L-L shown in FIG. 16. The camera module 200 shown in FIG. 31 is in a retracted state, the camera module 200 shown in FIG. 34 is in an ejected state, and the camera module 200 in an ejected state shown in FIG. 36 is in a focus mode.

The following describes an ejection principle of the camera module 200 with reference to FIG. 5, and FIG. 31 to FIG. 36.

FIG. 5 and FIG. 31 each are a diagram of a structure of the camera module 200 in a retracted state. When the camera module 200 is in the retracted state, the ejector cover 240 is close to the camera support 210, and the lens assembly 220 is close to the camera support 210. In a possible scenario, the buffer 2123 on the epitaxial ring 243 of the ejector cover 240 may be in contact with the bearer platform 2122 of the camera support 210. A slit may be formed between the barrel portion 241 of the ejector cover 240 and the protrusion 212 of the camera support 210, and the ring 252 of the flexible connecting piece 250 may be located in the slit. As shown in FIG. 5, the ejector 232 of the ejection assembly 230 may be accommodated in the ejector accommodating hole 2312 of the ejection driver 231. As shown in FIG. 31, a majority of the ejection guide rod 292 of the ejection guide assembly 290 may be accommodated in the ejection guide sleeve 291.

Because a space enclosed by the ejector cover 240 and the camera support 210 is small, a spacing between the lens group 223 and the lens group 224 is small, and a spacing between the lens group 224 and the circuit board assembly 300 is small. In a possible scenario, the buffer 416 is disposed on a side that is of the focus mover 226 and that faces the focus stator 225, and the buffer 416 may be in contact with the side that is of the focus stator 225 and that faces the focus mover 226. The buffer 417 is disposed on a side that is of the focus mover 226 and that is away from the focus stator 225, and the buffer 417 may be in contact with the circuit board assembly 270 on the camera support 210. The focus stopper 420 may encircle an end that is of the focus stator 225 and that is close to the ejector cover 240.

FIG. 33 to FIG. 35 each are a diagram of a structure of the camera module 200 in an ejected state.

The camera module 200 may drive, by using the ejection assembly 230, the ejector cover 240 to move along the optical axis, so that the ejector cover 240 can move away from the camera support 210. The ejection guide assembly 290 may guide movement of the ejector cover 240, to reduce a displacement of the ejector cover 240 from the optical axis. The ejector cover 240 may be fastened to the focus stator 225. The ejector cover 240 may drive the focus stator 225 to move away from the camera support 210.

When the camera module 200 is in the ejected state, the ejector cover 240 is far away from the camera support 210, and the focus stator 225 is far away from the camera support 210. In a possible scenario, the ejector cover 240 and the flexible connecting piece 250 may be entirely moved out of a space enclosed by the camera support 210. Under driving of the ejector cover 240, the focus stator 225 may be entirely moved out of the space enclosed by the camera support 210. The ejector 232 of the ejection assembly 230 may be moved out of the ejector accommodating hole 2312 of the ejection driver 231. A majority of the ejection guide rod 292 of the ejection guide assembly 290 may be moved out of the ejection guide sleeve 291.

In a possible scenario, as shown in FIG. 33 and FIG. 34, the focus mover 226 may move away from the camera support 210 with the focus stator 225. In other words, the spacing between the lens group 223 and the lens group 224 may be small, and the spacing between the lens group 224 and the circuit board assembly 300 may be large. The buffer 416 is disposed on the side that is of the focus mover 226 and that faces the focus stator 225, and the buffer 416 may be in contact with the focus stator 225. The focus stopper 420 may encircle the end that is of the focus stator 225 and that is close to the ejector cover 240. The buffer 417 is disposed on the side that is of the focus mover 226 and that is away from the focus stator 225, and a space between the buffer 417 and the camera support 210 may be a movable space of the focus mover 226. In other words, the focus mover 226 may move toward the camera support 210. In the scenarios shown in FIG. 34 and FIG. 35, the camera module 200 may implement, for example, wide-angle image shooting.

In another possible scenario, the focus mover 226 may not move away from the camera support 210 with the focus stator 225. In other words, the spacing between the lens group 223 and the lens group 224 may be large, and the spacing between the lens group 224 and the circuit board assembly 300 may be small. The buffer 417 is disposed on the side that is of the focus mover 226 and that is away from the focus stator 225, and the buffer 417 may be attached to the camera support 210. The focus stopper 420 may encircle an end that is of the focus stator 225 and that is close to the camera support 210. The buffer 416 is disposed on the side that is of the focus mover 226 and that faces the focus stator 225, and a space between the buffer 416 and the focus stator 225 may be a movable space of the focus mover 226. In other words, the focus mover 226 may move toward the ejector cover 240.

In still another possible scenario, the focus mover 226 may move away from the camera support 210, but a displacement of the focus mover 226 may be less than a displacement of the focus stator 225. In other words, there may be a space between the focus mover 226 and the focus stator 225, and there may be a space between the focus mover 226 and the camera support 210. The focus mover 226 may move toward the camera support 210 or the ejector cover 240.

FIG. 35 and FIG. 36 each are a diagram of a structure of the camera module 200 in a focus mode.

In an embodiment, when the camera module 200 is in an ejected state, the camera module 200 may enter a focus mode. In other words, after the camera module 200 is completely ejected, the camera module 200 may perform focusing. In another embodiment, when the camera module 200 is not completely ejected, that is, when the camera module 200 is between the rejected state and the ejected state, the camera module 200 may enter the focus mode. In other words, when the camera module 200 is not completely ejected, the camera module 200 may perform focusing. A space between the focus stator 225 and the camera support 210 may be the movable space of the focus mover 226.

When the camera module 200 is in the focus mode, there may be a space between the focus mover 226 and the focus stator 225. There may or may not be a space between the focus mover 226 and the camera support 210. In a possible scenario, the buffer 416 is disposed on the side that is of the focus mover 226 and that faces the focus stator 225, and there may be a space between the buffer 416 and the focus stator 225. The buffer 417 is disposed on the side that is of the focus mover 226 and that is away from the focus stator 225, and the buffer 417 may be attached to the camera support 210, or there may be a space between the buffer 417 and the camera support 210. In an embodiment, focusing may be implemented in a macro scenario by adjusting a distance between the focus mover 226 and the focus stator 225.

In the macro scenario, a distance between the camera module 200 and a photographed (person) object is short. Compared with overall focusing of the lens group 223 and the lens group 224, the lens group 224 is independently used for focusing. This helps improve an angle of view in the macro scenario. Therefore, within an effective focusing range of the camera module 200, the distance between the camera module 200 and the photographed (person) object may be short.

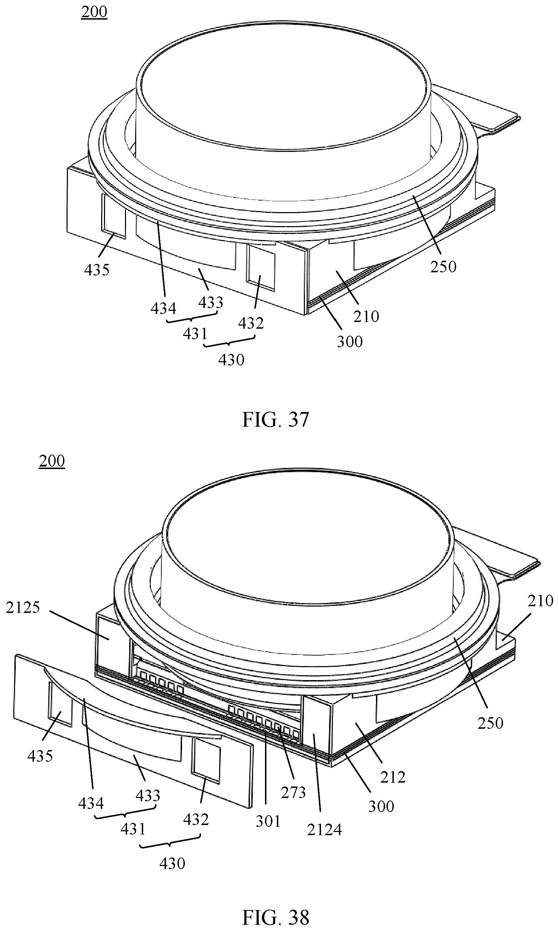

FIG. 37 is a diagram of a structure of the camera module 200 according to this application. FIG. 38 is an exploded view of the camera module 200 according to this application. With reference to FIG. 37 and FIG. 38, in some embodiments provided in this application, the camera module 200 may further include a dustproof assembly 430.

The dustproof assembly 430 may include a dustproof cover 431 and a dustproof filter 432. The dustproof cover 431 may include a dustproof cover 433 and a dustproof cover protrusion 434.

The dustproof cover 433 may be provided with a dustproof through hole 435. The dustproof filter 432 may cover the dustproof through hole 435. This helps reduce a contaminant entering the camera module 200 through the dustproof through hole 435. In an embodiment, the dustproof filter 432 may be disposed in the camera module 200. In other words, the dustproof filter 432 may be disposed on a side that is of the dustproof cover 433 and that is close to the camera support 210.

A region that is of the dustproof cover 433 and that is outside the dustproof through hole 435 may be sealedly connected to the camera support 210 and the circuit board assembly 300. As shown in FIG. 38, the protrusion 212 of the camera support 210 may have a protruding end 2124 and a protruding end 2125. With reference to FIG. 5, the end face 2121 that is of the protrusion 212 and that is connected to the flexible connecting piece 250 may extend from the protruding end 2124 to the protruding end 2125 in an encircling manner. The region that is of the dustproof cover 433 and that is outside the dustproof through hole 435 may be sealedly connected to the protruding end 2124, the protruding end 2124, and a side wall of the circuit board assembly 300.

The dustproof cover protrusion 434 may be located on a side that is of the dustproof cover 433 and that is close to the flexible connecting piece 250, and protrudes away from the camera support 210 from the dustproof cover 433. The dustproof cover protrusion 434 may be connected to the flexible connecting piece 250 in a sealed manner.

The dustproof cover 431 may be sealedly connected to the camera support 210, the circuit board assembly 300, and the flexible connecting piece 250, the flexible connecting piece 250 may be sealedly connected to the camera support 210, and the circuit board assembly 300 may be sealedly connected to the camera support 210. This helps reduce a possibility of an external contaminant entering the camera module 200.

When the camera module 200 switches from the retracted state to the ejected state, air can enter the camera module 200 through the dustproof filter 432. When the camera module 200 switches from the ejected state to the retracted state, air can be exhausted out of the camera module 200 through the dustproof filter 432. This helps enable an internal air pressure of the camera module 200 to match with an external air pressure in a process in which an internal capacity of the camera module 200 changes.

A plurality of pins 301 on the circuit board assembly 300 and a plurality of pins 273 on the circuit board assembly 270 may be disposed close to the dustproof assembly 430. After the dustproof assembly 430 is disassembled from the camera module 200, the plurality of pins 301 and the plurality of pins 273 may be exposed through an opening enclosed by the flexible connecting piece 250, the camera module 200, and the circuit board assembly 300. Therefore, when the camera module 200 is disassembled to a small degree, the plurality of pins 301 and the plurality of pins 273 can be easily maintained, detected, adjusted, and the like.

Still refer to FIG. 5. In some embodiments provided in this application, the camera support 210 may include a protrusion 218, and the protrusion 218 may protrude from the bearer portion 211 of the camera support 210 to the circuit board assembly 300. In an embodiment, a protruding direction of the protrusion 218 may be parallel with the optical axis. The protrusion 218 may encircle a periphery of the bearer portion 211. A space enclosed by the protrusion 218 and the bearer portion 211 may be configured to accommodate an element on the circuit board assembly 300. An end face that is of the protrusion 218 and that is away from the bearer portion 211 may be fastened to the circuit board assembly 300.

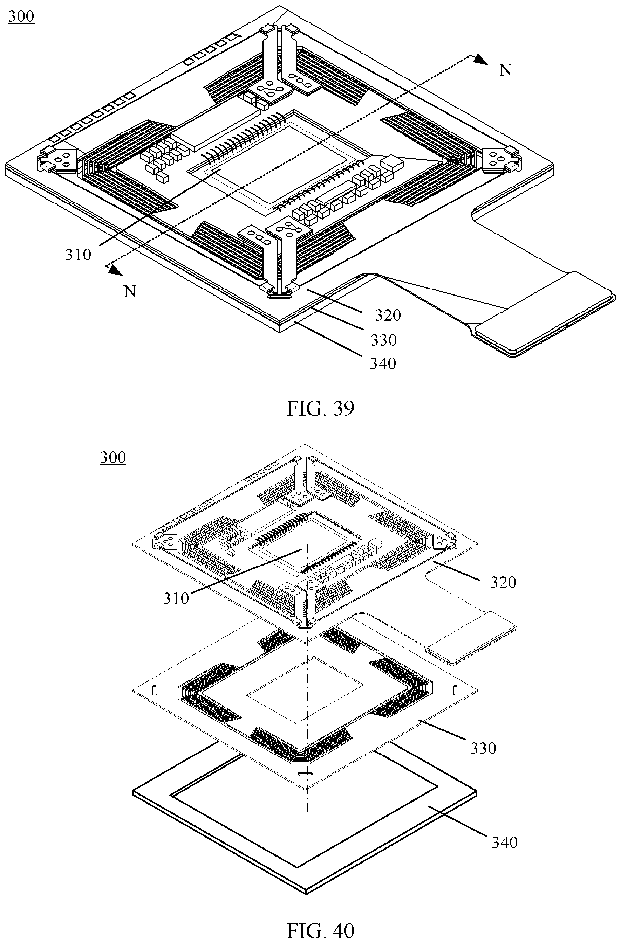

FIG. 39 is a diagram of a structure of the circuit board assembly 300 according to an embodiment of this application. FIG. 40 is an exploded view of the circuit board assembly 300 according to an embodiment of this application. As shown in FIG. 39 and FIG. 40, the circuit board assembly 300 may include a circuit board 320 and a reinforcement plate 330. The reinforcement plate 330 may be located on a side that is of the circuit board 320 and that is away from the camera support 210. An element may be disposed on a side that is of the circuit board 320 and that is away from the reinforcement plate 330. The reinforcement plate 330 may be attached to the circuit board 320, so that a structure formed by the reinforcement plate 330 and the circuit board 320 can meet a strength requirement.

With reference to FIG. 39 and FIG. 40, in some embodiments provided in this application, the circuit board assembly 300 may further include a module base 340. In some other embodiments, the module base 340 may be a component of the camera module 200. The module base 340 may be fastened to a side that is of the reinforcement plate 330 and that is away from the circuit board 320. The module base 340 may be configured to reduce a possibility that an external contaminant enters the camera module 200 through the circuit board assembly 300. The module base 340 may include a base bracket and a base plate. In an embodiment, the base plate may be fastened to the base bracket through insert molding (insert molding). The base bracket may be fastened to the reinforcement plate 330. The base station plate and the reinforcement plate 330 may be parallel with each other and disposed at intervals. The base bracket may encircle a periphery of the base plate. The base station plate may be, for example, a metal plate, which facilitates heat dissipation of the camera module 200 and further helps shield an external signal.

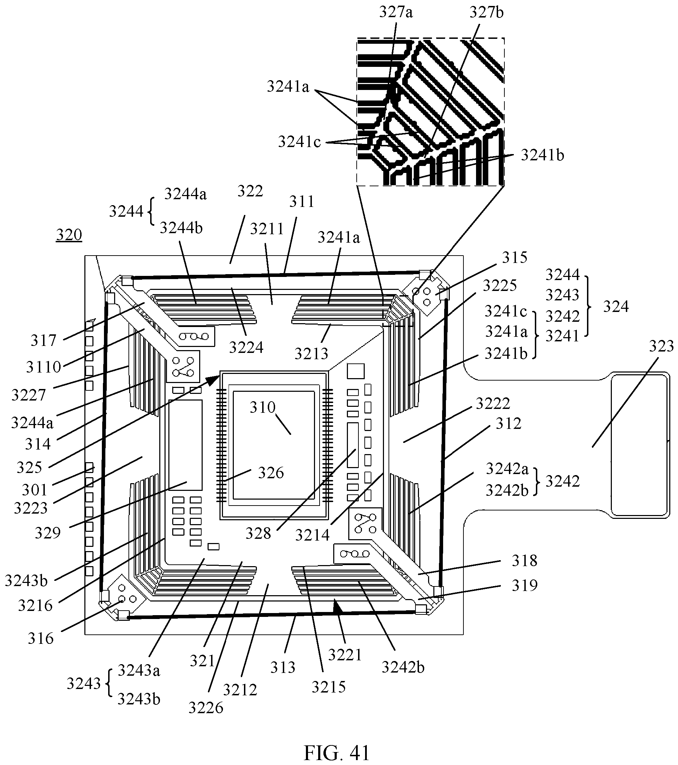

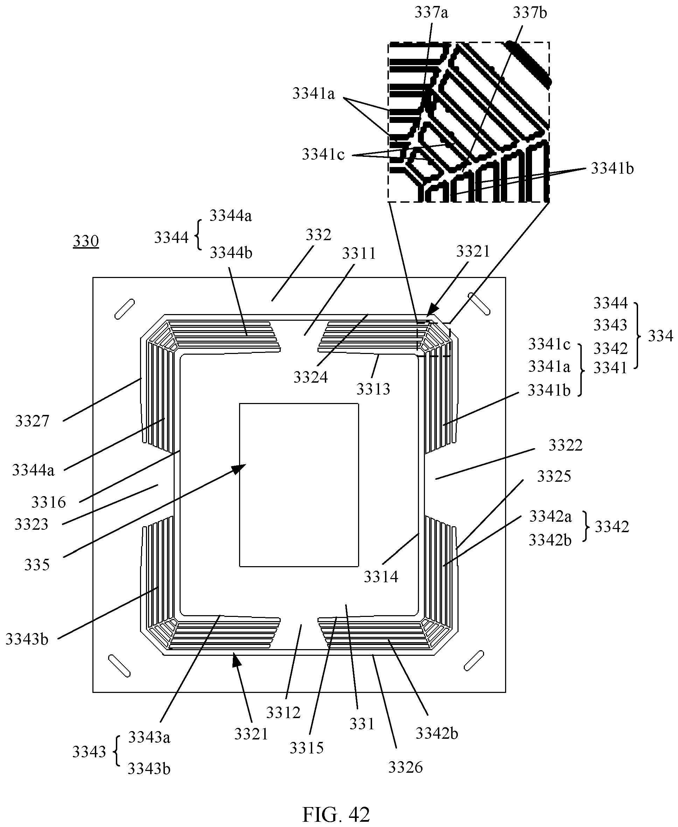

A structural diagram shown in FIG. 41 may be obtained by viewing the circuit board 320 along the optical axis shown in FIG. 40. A structural diagram shown in FIG. 42 may be obtained by viewing the reinforcement plate 330 along the optical axis shown in FIG. 40.

The circuit board 320 may include a circuit board portion 321, a circuit board portion 322, and a circuit board portion 323. In an embodiment, the circuit board 320 may be a rigid-flexible board. The circuit board portion 321 and the circuit board portion 322 may be rigid boards. The circuit board portion 323 may be a flexible board. The circuit board portion 322 may encircle a periphery of the circuit board portion 321. The circuit board portion 323 may be connected to a periphery of the circuit board portion 322. With reference to FIG. 31 and FIG. 41, a pin 302 may be disposed at an end that is of the circuit board portion 323 and that is away from the circuit board portion 322. The pin 302 may be configured to implement signal interaction between the camera module 200 and another component in the electronic device. A pin 301 may be disposed on the circuit board portion 322. For example, the pin 301 may be located in an outer edge region of the circuit board portion 322. With reference to FIG. 18 and FIG. 41, the pin 302 may be electrically connected to the pin 273 on the circuit board assembly 270.

The reinforcement plate 330 may be a plate whose strength meets a requirement. A material of the reinforcement plate 330 may be, for example, metal. Strength of the reinforcement plate 330 may be higher than strength of the circuit board 320, to provide reinforcement for the circuit board 320. The reinforcement plate 330 may include a reinforcement plate portion 331 and a reinforcement plate portion 332. With reference to FIG. 41 and FIG. 42, the reinforcement plate portion 331 may be attached to the circuit board portion 321, and the reinforcement plate portion 332 may be attached to the circuit board portion 322. An outer contour of a projection of the reinforcement plate portion 331 along the optical axis may match an outer contour of a projection of the circuit board portion 321 along the optical axis. An outer contour of a projection of the reinforcement plate portion 332 along the optical axis may match an outer contour of a projection of the circuit board portion 322 along the optical axis. In embodiments provided in this application, that an outer contour of a projection of the component a matches an outer contour of a projection of the component b may meet one or more of the following: same shapes, similar shapes, same sizes, and approximately same sizes.

As shown in FIG. 41, the circuit board portion 321 and the circuit board portion 322 may be connected through one or more traces. The reinforcement plate portion 331 and the reinforcement plate portion 332 may be connected through one or more reinforcement traces. One or more traces between the circuit board portion 321 and the circuit board portion 322 may be in a one-to-one correspondence with and disposed opposite to one or more reinforcement traces between the reinforcement plate portion 331 and the reinforcement plate portion 332. The trace may be attached to the corresponding reinforcement trace. Along the optical axis, a projection region of the trace may mostly overlap a projection region of the reinforcement trace.

In embodiments of this application, that the projection region of the component a mostly overlaps the projection region of the component b may meet any one of the following: the projection region of the component a is located in the projection region of the component b; the projection region of the component b is located in the projection region of the component a; and an intersection of the projection region of the component a and the projection region of the component b accounts for more than 50% of the projection region of the component a or the projection region of the component b.

As shown in FIG. 18 to FIG. 20, the circuit board portion 321 and the circuit board portion 322 may be connected through a plurality of traces 324. The reinforcement plate portion 331 and the reinforcement plate portion 332 may be connected through a plurality of reinforcement traces 324. The plurality of traces 324 and the plurality of reinforcement traces 334 may form a trace suspension assembly (trace suspension assembly, TSA).

The circuit board portion 322 may include a circuit board accommodating slot 3221, and the circuit board portion 321 and the trace 324 may be accommodated in the circuit board accommodating slot 3221, where the trace 324 may be located in a space between the circuit board portion 321 and the circuit board portion 322. The circuit board portion 321 may include a circuit board protrusion 3211, and the circuit board portion 322 may include a circuit board protrusion 3222. The circuit board protrusion 3211 and circuit board protrusion 3222 may be staggered. In other words, projection regions of the circuit board protrusion 3211 and the circuit board protrusion 3222 along the optical axis may not overlap with each other. The one or more traces 324 may include a trace 3241, and the trace 3241 may be connected between the circuit board protrusion 3211 and the circuit board protrusion 3222.

In an embodiment, the circuit board protrusion 3211 may protrude from a side wall 3213 of the circuit board portion 321 to a slot wall 3224 of the circuit board accommodating slot 3221, and the circuit board protrusion 3222 may protrude from a slot wall 3225 of the circuit board accommodating slot 3221 to a side wall 3214 of the circuit board portion 321. The side wall 3213 and the side wall 3214 of the circuit board portion 321 may be two different side walls of the circuit board portion 321, and the slot wall 3224 and the slot wall 3225 of the circuit board accommodating slot 3221 may be two different slot walls of the circuit board accommodating slot 3221.

The reinforcement plate portion 332 may include a reinforcement plate accommodating slot 3321, and the reinforcement plate portion 331 and the reinforcement trace 334 may be accommodated in the reinforcement plate accommodating slot 3321, where the reinforcement trace 334 may be located in a space between the reinforcement plate portion 331 and the reinforcement plate portion 332. The reinforcement plate portion 331 may include a reinforcement plate protrusion 3311, and the reinforcement plate portion 332 may include a reinforcement plate protrusion 3322. With reference to FIG. 41 and FIG. 42, the reinforcement plate protrusion 3311 may be disposed opposite to the circuit board protrusion 3211, and the circuit board protrusion 3211 may be attached to the reinforcement plate protrusion 3311. The reinforcement plate protrusion 3322 may be disposed opposite to the circuit board protrusion 3222, and the circuit board protrusion 3222 may be attached to the reinforcement plate protrusion 3322. In other words, projection regions of the reinforcement plate protrusion 3311 and the circuit board protrusion 3211 along the optical axis may mostly overlap, and projection regions of the reinforcement plate protrusion 3322 and the circuit board protrusion 3222 along the optical axis may mostly overlap. The one or more reinforcement traces 334 may include a reinforcement trace 3341, and the reinforcement trace 3341 may be connected between the reinforcement plate protrusion 3311 and the reinforcement plate protrusion 3322. The reinforcement trace 3341 may correspond to the trace 3241.

In an embodiment, the reinforcement plate protrusion 3311 may protrude from a side wall 3313 of the reinforcement plate portion 331 to a slot wall 3324 of the reinforcement plate accommodating slot 3321, and the reinforcement plate protrusion 3322 may protrude from a slot wall 3325 of the reinforcement plate accommodating slot 3321 to a side wall 3314 of the reinforcement plate portion 331. With reference to FIG. 41 and FIG. 42, the side wall 3313 of the reinforcement plate portion 331 and the side wall 3213 of the circuit board portion 321 may be located on a same side of the circuit board assembly 300, the side wall 3314 of the reinforcement plate portion 331 and the side wall 3214 of the circuit board portion 321 may be located on a same side of the circuit board assembly 300, the slot wall 3324 of the reinforcement plate portion 332 and the slot wall 3224 of the circuit board portion 322 may be located on a same side of the circuit board assembly 300, and the slot wall 3325 of the reinforcement plate portion 332 and the slot wall 3225 of the circuit board portion 322 may be located on a same side of the circuit board assembly 300.

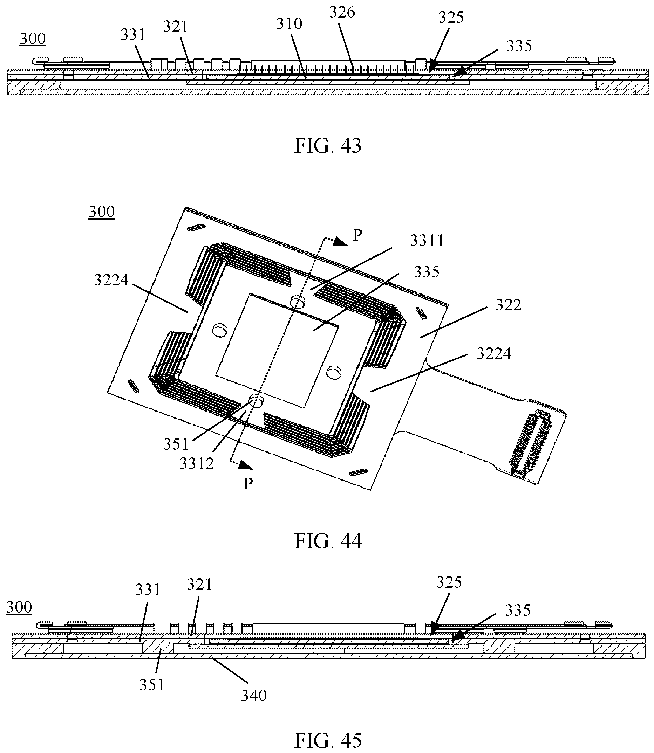

A cross-sectional view shown in FIG. 43 may be obtained by viewing the circuit board assembly 300 along a cross section N-N shown in FIG. 39.

With reference to FIG. 41 to FIG. 43, in some embodiments provided in this application, the circuit board 320 may further include a light transmission hole 325, and the reinforcement plate 330 may further include a light transmission hole 335. The light transmission hole 325 and the light transmission hole 335 may be disposed opposite to each other and in communication with each other. In a possible case, along the optical axis, projection regions of the light transmission hole 325 and the light transmission hole 335 may mostly overlap. As shown in FIG. 43, the image sensor 310 may be fastened to a side that is of the reinforcement plate portion 331 and that is away from the circuit board portion 321. The circuit board assembly 300 may further include a lead 326. The lead 326 may pass through the light transmission hole 325 and the light transmission hole 335, and is electrically connected between the image sensor 310 and the circuit board 321. Light from the lens assembly 220 may pass through the light transmission hole 325 and the light transmission hole 335 and be incident to the image sensor 310. Along the optical axis, an imaging region of the image sensor 310 may be located in a projection region of the light transmission hole 325 or the light transmission hole 335.

In some other embodiments, for example, by using a chip on board (chip on board, COB) process, the image sensor 310 may be further disposed on a side that is of the circuit board portion 321 and that is away from the reinforcement plate portion 331.

With reference to FIG. 41, an SMA cable 311, an SMA cable fastening bracket 315, an SMA cable movable bracket 317, and an SMA cable control module 329 may be further disposed on the circuit board 320.

The SMA cable 311 may be disposed opposite to the trace 3241. In some embodiments, that the SMA cable 311 is disposed opposite to the trace 3241 may mean that, in a direction perpendicular to the SMA cable, a projection region of the trace 3241 may at least partially overlap a projection region of the SMA cable 311. In an embodiment, the trace 3241 may include a trace portion 3241a, and the trace portion 3241a may be disposed in parallel or approximately parallel with the SMA cable 311.

Two ends of the SMA cable 311 may be connected to the SMA cable fastening bracket 315 and the SMA cable movable bracket 317.

The SMA cable fastening bracket 315 is fastened to the circuit board portion 322. An end that is of the SMA cable 311 and that is connected to the SMA cable fastening bracket 315 may be a stator end of the SMA cable 311.

A first end of the SMA cable movable bracket 317 may be fastened to the circuit board portion 321, and the SMA cable movable bracket 317 may extend from the circuit board portion 321 to the circuit board portion 322, and is suspended above the circuit board portion 322. A projection region of a second end of the SMA cable movable bracket 317 on the circuit board 320 may be located on the circuit board portion 322. The SMA cable movable bracket 317 may be elastically deformed, so that the second end of the SMA cable movable bracket 317 may be movable relative to the circuit board portion 322. The second end of the SMA cable movable bracket 317 may be connected to the SMA cable 311. An end that is of the SMA cable 311 and that is connected to the SMA cable movable bracket 317 may be a mover end of the SMA cable 311.

Energization and de-energization of the SMA cable 311 may be controlled through the SMA cable control module 329. In some embodiments, the SMA cable control module 329 may be disposed on the circuit board portion 321. The SMA cable control module 329 may be electrically connected to the stator end of the SMA cable 311 through the circuit board protrusion 3211 of the circuit board portion 321, the trace 3241, the circuit board protrusion 3222 of the circuit board portion 322, and the SMA cable fastening bracket 315. The SMA cable control module 329 may be further electrically connected to the mover end of the SMA cable 311 through the circuit board portion 321 and the SMA cable movable bracket 317.

In an embodiment, the SMA cable control module 329 may be located on a side of the light transmission hole 325. In a possible case, a counterweight element 328 may be disposed on a side that is of the light transmission hole 325 and that is away from a driver module, so that a weight of the circuit board portion 321 may be balanced with that of the optical axis.

After the SMA cable 311 is energized, the SMA cable 311 may be heated and retract. The SMA cable 311 may pull the second end of the SMA cable movable bracket 317 to move toward the SMA cable fastening bracket 315. Because the SMA cable movable bracket 317 is fastened to the circuit board portion 321, under pulling of the SMA cable 311, a portion that is of the circuit board portion 321 and that is fastened to the SMA cable movable bracket 317 may move toward a portion that is of the circuit board portion 322 and that is fastened to the SMA cable fastening bracket 315. Therefore, the circuit board portion 321 may deviate or move under driving of the SMA cable 311. The circuit board portion 321 may drive the image sensor 310 to deviate or move, to implement an image stabilization function of the camera module 200. In addition, because the trace 3241 connected between the circuit board portion 321 and the circuit board portion 322 is disposed opposite to the SMA cable 311, the trace 3241 may be compressed and elastically deformed. The trace 3241 is attached to the reinforcement trace 3341. Therefore, the reinforcement trace 3341 may also be compressed and elastically deformed.

After the SMA cable 311 is de-energized, the SMA cable 311 elongates due to cold, elongation elastic recovery may occur on the trace 3241 and the reinforcement trace 3341, and the circuit board portion 321 may move toward an original position under the action of the trace 3241 and the reinforcement trace 3341.

In the embodiments shown in FIG. 18 to FIG. 20, the circuit board portion 321 may further include a circuit board protrusion 3212, and the circuit board portion 322 may further include a circuit board protrusion 3223. The circuit board protrusion 3212 may protrude from a side wall 3215 of the circuit board portion 321 to a slot wall 3226 of the circuit board accommodating slot 3221, and the circuit board protrusion 3223 may protrude from a slot wall 3227 of the circuit board accommodating slot 3221 to a side wall 3216 of the circuit board portion 321. The side wall 3213 and the side wall 3215 of the circuit board portion 321 may be disposed opposite to each other, the side wall 3214 and the side wall 3216 of the circuit board portion 321 may be disposed opposite to each other, the slot wall 3224 and the slot wall 3226 of the circuit board accommodating slot 3221 may be disposed opposite to each other, and the slot wall 325 and the slot wall 3227 of the circuit board accommodating slot 3221 may be disposed opposite to each other.

The reinforcement plate portion 331 may further include a reinforcement plate protrusion 3312, and the reinforcement plate portion 332 may further include a reinforcement plate protrusion 3323. The reinforcement plate protrusion 3312 may protrude from a side wall 3315 of the reinforcement plate portion 331 to a slot wall 3326 of the reinforcement plate accommodating slot 3321, and the reinforcement plate protrusion 3322 may protrude from a slot wall 3327 of the reinforcement plate accommodating slot 3321 to a side wall 3316 of the reinforcement plate portion 331. With reference to FIG. 41 and FIG. 42, the side wall 3315 of the reinforcement plate portion 331 and the side wall 3215 of the circuit board portion 321 may be located on a same side of the circuit board assembly 300, the side wall 3316 of the reinforcement plate portion 331 and the side wall 3216 of the circuit board portion 321 may be located on a same side of the circuit board assembly 300, the slot wall 3326 of the reinforcement plate portion 332 and the slot wall 3226 of the circuit board portion 322 may be located on a same side of the circuit board assembly 300, and the slot wall 3327 of the reinforcement plate portion 332 and the slot wall 3227 of the circuit board portion 322 may be located on a same side of the circuit board assembly 300.

The circuit board 320 may include a plurality of traces 324, and the plurality of traces 324 may include a trace 3242, a trace 3243, and a trace 3244. The trace 3242 may be connected between the circuit board protrusion 3212 of the circuit board portion 321 and the circuit board protrusion 3222 of the circuit board portion 322. The trace 3243 may be connected between the circuit board protrusion 3212 of the circuit board portion 321 and the circuit board protrusion 3223 of the circuit board portion 322. The trace 3244 may be connected between the circuit board protrusion 3211 of the circuit board portion 321 and the circuit board protrusion 3223 of the circuit board portion 322.

The reinforcement plate 330 may include a plurality of reinforcement traces 334, and the plurality of reinforcement traces 334 may include a reinforcement trace 3342, a reinforcement trace 3343, and a reinforcement trace 3344. The reinforcement trace 3342 may be connected between the reinforcement plate protrusion 3312 of the reinforcement plate portion 331 and the reinforcement plate protrusion 3322 of the reinforcement plate portion 332. The reinforcement trace 3343 may be connected between the reinforcement plate protrusion 3312 of the reinforcement plate portion 331 and the reinforcement plate protrusion 3323 of the reinforcement plate portion 332. The reinforcement trace 3344 may be connected between the reinforcement plate protrusion 3311 of the reinforcement plate portion 331 and the reinforcement plate protrusion 3323 of the reinforcement plate portion 332. The reinforcement trace 3342 may correspond to the trace 3242, the reinforcement trace 3343 may correspond to the trace 3243, and the reinforcement trace 3344 may correspond to the trace 3244.

As shown in FIG. 41, an SMA cable 312, an SMA cable 313, an SMA cable 314, an SMA cable fastening bracket 316, an SMA cable movable bracket 318, an SMA cable movable bracket 319, and an SMA cable movable bracket 3110 may be further disposed on the circuit board 320.

The SMA cable 311, the SMA cable 312, the SMA cable 313, and the SMA cable 314 may be disposed adjacent to each other. In other words, one end of the SMA cable 311 may be disposed close to the SMA cable 312, and the other end of the SMA cable 311 may be disposed close to the SMA cable 314. One end of the SMA cable 312 may be disposed close to the SMA cable 311, and the other end of the SMA cable 312 may be disposed close to the SMA cable 313. One end of the SMA cable 313 may be disposed close to the SMA cable 312, and the other end of the SMA cable 313 may be disposed close to the SMA cable 314. One end of the SMA cable 314 may be disposed close to the SMA cable 313, and the other end of the SMA cable 314 may be disposed close to the SMA cable 311. The SMA cable 311 may be disposed opposite to (or in parallel or approximately parallel with) the SMA cable 313, and the SMA cable 314 may be disposed opposite to (or in parallel or approximately parallel with) the SMA cable 313.

The trace 3241 may include a trace portion 3241a and a trace portion 3241b. The trace portion 3241a may be vertically or approximately vertically disposed relative to the trace portion 3241b. The trace portion 3241a may be disposed opposite to the SMA cable 311. The trace portion 3241b may be disposed opposite to the SMA cable 312. The reinforcement trace 3341 may include a reinforcement trace portion 3341a and a reinforcement trace portion 3341b. The reinforcement trace portion 3341a may be disposed opposite to the trace portion 3241a, and the reinforcement trace portion 3341b may be disposed opposite to the trace portion 3241b.

The trace 3242 may include a trace portion 3242a and a trace portion 3242b. The trace portion 3242a may be vertically or approximately vertically disposed relative to the trace portion 3242b. The trace portion 3242a may be disposed opposite to the SMA cable 312. The trace portion 3242b may be disposed opposite to the SMA cable 313. The reinforcement trace 3342 may include a reinforcement trace portion 3342a and a reinforcement trace portion 3342b. The reinforcement trace portion 3342a may be disposed opposite to the trace portion 3242a, and the reinforcement trace portion 3342b may be disposed opposite to the trace portion 3242b.

The trace 3243 may include a trace portion 3243a and a trace portion 3243b. The trace portion 3243a may be vertically or approximately vertically disposed relative to the trace portion 3243b. The trace portion 3243a may be disposed opposite to the SMA cable 313. The trace portion 3243b may be disposed opposite to the SMA cable 314. The reinforcement trace 3343 may include a reinforcement trace portion 3343a and a reinforcement trace portion 3343b. The reinforcement trace portion 3343a may be disposed opposite to the trace portion 3243a, and the reinforcement trace portion 3343b may be disposed opposite to the trace portion 3243b.

The trace 3244 may include a trace portion 3244a and a trace portion 3244b. The trace portion 3244a may be vertically or approximately vertically disposed relative to the trace portion 3244b. The trace portion 3244a may be disposed opposite to the SMA cable 314. The trace portion 3244b may be disposed opposite to the SMA cable 311. The reinforcement trace 3344 may include a reinforcement trace portion 3344a and a reinforcement trace portion 3344b. The reinforcement trace portion 3344a may be disposed opposite to the trace portion 3244a, and the reinforcement trace portion 3344b may be disposed opposite to the trace portion 3244b.

In other words, a first portion of the SMA cable 311 may be disposed opposite to (or in parallel or approximately parallel with) the trace portion 3241a and the reinforcement trace portion 3341a, and a second portion of the SMA cable 311 may be disposed opposite to (or in parallel or approximately parallel with) the trace portion 3244b and the reinforcement trace portion 3344b. A first portion of the SMA cable 312 may be disposed opposite to (or in parallel or approximately parallel with) the trace portion 3241b and the reinforcement trace portion 3341b, and a second portion of the SMA cable 312 may be disposed opposite to (or in parallel or approximately parallel with) the trace portion 3242a and the reinforcement trace portion 3342a. A first portion of the SMA cable 313 may be disposed opposite to (or in parallel or approximately parallel with) the trace portion 3242b and the reinforcement trace portion 3342b, and a second portion of the SMA cable 313 may be disposed opposite to (or in parallel or approximately parallel with) the trace portion 3243a and the reinforcement trace portion 3343a. A first portion of the SMA cable 314 may be disposed opposite to (or in parallel or approximately parallel with) the trace portion 3243b and the reinforcement trace portion 3343b, and a second portion of the SMA cable 314 may be disposed opposite to (or in parallel or approximately parallel with) the trace portion 3244a and the reinforcement trace portion 3344a.

The SMA cable fastening bracket 315 may be disposed at a corner 1 of the circuit board portion 322. The SMA cable fastening bracket 316 may be disposed at a corner 3 of the circuit board portion 322. The corner 1 and the corner 3 may be two diagonals of the circuit board portion 322.

A first end of the SMA cable movable bracket 317 and a first end of the SMA cable movable bracket 3110 may be fastened to a corner 4 of the circuit board portion 321, and a second end of the SMA cable movable bracket 317 and a second end of the SMA cable movable bracket 3110 may extend to a corner 4 of the circuit board portion 322. In an embodiment, an extension arm 1 of the SMA cable movable bracket 317 may extend from the first end of the SMA cable movable bracket 317 to the second end of the SMA cable movable bracket 317, an extension arm 4 of the SMA cable movable bracket 3110 may extend from the first end of the SMA cable movable bracket 3110 to the second end of the SMA cable movable bracket 3110, and the extension arm 1 may be disposed in parallel with the extension arm 4.

A first end of the SMA cable movable bracket 318 and a first end of the SMA cable movable bracket 319 may be fastened to a corner 2 of the circuit board portion 321, and a second end of the SMA cable movable bracket 318 and a second end of the SMA cable movable bracket 319 may extend to a corner 2 of the circuit board portion 322. In an embodiment, an extension arm 2 of the SMA cable movable bracket 318 may extend from the first end of the SMA cable movable bracket 318 to the second end of the SMA cable movable bracket 318, an extension arm 3 of the SMA cable movable bracket 319 may extend from the first end of the SMA cable movable bracket 319 to the second end of the SMA cable movable bracket 319, and the extension arm 2 may be disposed in parallel with the extension arm 3. The corner 2 and the corner 4 may be two diagonals of the circuit board portion 322.

The SMA cable 312 may be connected between the SMA cable fastening bracket 315 and the SMA cable movable bracket 318. An end that is of the SMA cable 312 and that is connected to the SMA cable fastening bracket 315 may be a stator end of the SMA cable 312. An end that is of the SMA cable 312 and that is connected to the SMA cable movable bracket 318 may be a mover end of the SMA cable 312.

The SMA cable 313 may be connected between the SMA cable fastening bracket 316 and the SMA cable movable bracket 319. An end that is of the SMA cable 313 and that is connected to the SMA cable fastening bracket 316 may be a stator end of the SMA cable 313. An end that is of the SMA cable 313 and that is connected to the SMA cable movable bracket 319 may be a mover end of the SMA cable 313.

The SMA cable 314 may be connected between the SMA cable fastening bracket 316 and the SMA cable movable bracket 3110. An end that is of the SMA cable 314 and that is connected to the SMA cable fastening bracket 316 may be a stator end of the SMA cable 314. An end that is of the SMA cable 314 and that is connected to the SMA cable movable bracket 3110 may be a mover end of the SMA cable 314.

Energization and de-energization of the SMA cable 312, the SMA cable 313, and the SMA cable 314 may be further controlled through the SMA cable control module 329.

In an embodiment, the SMA cable control module 329 may be electrically connected to the SMA cable fastening bracket 315 through the circuit board protrusion 3211 of the circuit board portion 321, the trace 3241, and the circuit board protrusion 3222 of the circuit board portion 322, so that the SMA cable control module 329 is electrically connected to an end of the SMA cable 311 and an end of the SMA cable 314. In another embodiment, the SMA cable control module 329 may be electrically connected to the SMA cable fastening bracket 315 through the circuit board protrusion 3211 of the circuit board portion 321, the trace 3244, and the circuit board protrusion 3223 of the circuit board portion 322, so that the SMA cable control module 329 is electrically connected to an end of the SMA cable 311 and an end of the SMA cable 314. In still another embodiment, the SMA cable control module 329 may be electrically connected to the SMA cable fastening bracket 315 through the circuit board protrusion 3212 of the circuit board portion 321, the trace 3242, and the protrusion 2 of the circuit board portion 322, so that the SMA cable control module 329 is electrically connected to an end of the SMA cable 311 and an end of the SMA cable 314. In yet another embodiment, the SMA cable control module 329 may be electrically connected to the SMA cable fastening bracket 315 through the circuit board protrusion 3212 of the circuit board portion 321, the trace 3243, and the circuit board protrusion 3223 of the circuit board portion 322, so that the SMA cable control module 329 is electrically connected to an end of the SMA cable 311 and an end of the SMA cable 314.

In an embodiment, the SMA cable control module 329 may be electrically connected to the SMA cable fastening bracket 316 through the circuit board protrusion 3212 of the circuit board portion 321, the trace 3243, and the circuit board protrusion 3223 of the circuit board portion 322, so that the SMA cable control module 329 is electrically connected to an end of the SMA cable 312 and an end of the SMA cable 313. In another embodiment, the SMA cable control module 329 may be electrically connected to the SMA cable fastening bracket 316 through the circuit board protrusion 3212 of the circuit board portion 321, the trace 3242, and the circuit board protrusion 3222 of the circuit board portion 322, so that the SMA cable control module 329 is electrically connected to an end of the SMA cable 312 and an end of the SMA cable 313. In still another embodiment, the SMA cable control module 329 may be electrically connected to the SMA cable fastening bracket 316 through the circuit board protrusion 3211 of the circuit board portion 321, the trace 3241, and the protrusion 2 of the circuit board portion 322, so that the SMA cable control module 329 is electrically connected to an end of the SMA cable 312 and an end of the SMA cable 313. In yet another embodiment, the SMA cable control module 329 may be electrically connected to the SMA cable fastening bracket 316 through the circuit board protrusion 3211 of the circuit board portion 321, the trace 3244, and the circuit board protrusion 3223 of the circuit board portion 322, so that the SMA cable control module 329 is electrically connected to an end of the SMA cable 312 and an end of the SMA cable 313.

The SMA cable control module 329 may be further electrically connected to the other end of the SMA cable 312 through the circuit board portion 321 and the SMA cable movable bracket 318. The SMA cable control module 329 may be further electrically connected to the other end of the SMA cable 313 through the circuit board portion 321 and the SMA cable movable bracket 319. The SMA cable control module 329 may be further electrically connected to the other end of the SMA cable 314 through the circuit board portion 271 and the SMA cable movable bracket 317.

After the SMA cable 311 is energized, the SMA cable 311 may be heated and retract. The SMA cable 311 may pull the second end of the SMA cable movable bracket 317 to move toward the SMA cable fastening bracket 315. With reference to the foregoing description, the image sensor 310 on the circuit board portion 321 may deviate or move under driving of the SMA cable 311, to implement an image stabilization function of the camera module 200. In addition, the trace portion 3241a of the trace 3241, the trace portion 3244b of the trace 3244, the reinforcement trace portion 3341a of the reinforcement trace 3341, and the reinforcement trace portion 3344b of the reinforcement trace 3344 may be compressed and elastically deformed. After the SMA cable 311 is de-energized, the SMA cable 311 elongates due to cold, elongation elastic recovery may occur on the trace portion 3241a of the trace 3241, the trace portion 3244b of the trace 3244, the reinforcement trace portion 3341a of the reinforcement trace 3341, and the reinforcement trace portion 3344b of the reinforcement trace 3344, so that the circuit board portion 321 may move toward an initial position.

After the SMA cable 312 is energized, the SMA cable 312 may be heated and retract. The SMA cable 312 may pull the second end of the SMA cable movable bracket 318 to move toward the SMA cable fastening bracket 315. With reference to the foregoing description, the image sensor 310 on the circuit board portion 321 may deviate or move under driving of the SMA cable 312, to implement an image stabilization function of the camera module 200. In addition, the trace portion 3241b of the trace 3241, the trace portion 3242a of the trace 3242, the reinforcement trace portion 3341b of the reinforcement trace 3341, and the reinforcement trace portion 3342a of the reinforcement trace 3342 may be compressed and elastically deformed. After the SMA cable 312 is de-energized, the SMA cable 312 elongates due to cold, elongation elastic recovery may occur on the trace portion 3241b of the trace 3241, the trace portion 3242a of the trace 3242, the reinforcement trace portion 3341b of the reinforcement trace 3341, and the reinforcement trace portion 3342a of the reinforcement trace 3342, so that the circuit board portion 321 may move toward an initial position.

After the SMA cable 313 is energized, the SMA cable 313 may be heated and retract. The SMA cable 313 may pull the second end of the SMA cable movable bracket 319 to move toward the SMA cable fastening bracket 316. With reference to the foregoing description, the image sensor 310 on the circuit board portion 321 may deviate or move under driving of the SMA cable 313, to implement an image stabilization function of the camera module 200. In addition, the trace portion 3242b of the trace 3242, the trace portion 3243a of the trace 3243, the reinforcement trace portion 3342b of the reinforcement trace 3342, and the reinforcement trace portion 3343a of the reinforcement trace 3343 may be compressed and elastically deformed. After the SMA cable 313 is de-energized, the SMA cable 313 elongates due to cold, elongation elastic recovery may occur on the trace portion 3242b of the trace 3242, the trace portion 3243a of the trace 3243, the reinforcement trace portion 3342b of the reinforcement trace 3342, and the reinforcement trace portion 3343a of the reinforcement trace 3343, so that the circuit board portion 321 may move toward an initial position.

After the SMA cable 314 is energized, the SMA cable 314 may be heated and retract. The SMA cable 314 may pull the second end of the SMA cable movable bracket 3110 to move toward the SMA cable fastening bracket 316. With reference to the foregoing description, the image sensor 310 on the circuit board portion 321 may deviate or move under driving of the SMA cable 314, to implement an image stabilization function of the camera module 200. In addition, the trace portion 3243b of the trace 3243, the trace portion 3244a of the trace 3244, the reinforcement trace portion 3343b of the reinforcement trace 3343, and the reinforcement trace portion 3344a of the reinforcement trace 3344 may be compressed and elastically deformed. After the SMA cable 314 is de-energized, the SMA cable 314 elongates due to cold, elongation elastic recovery may occur on the trace portion 3243b of the trace 3243, the trace portion 3244a of the trace 3244, the reinforcement trace portion 3343b of the reinforcement trace 3343, and the reinforcement trace portion 3344a of the reinforcement trace 3344, so that the circuit board portion 321 may move toward an initial position.

In some embodiments, a plurality of traces 3241 may be connected between the circuit board protrusion 3211 and the circuit board protrusion 3222. As described above, when the SMA cable 311 is shortened, the trace 3241 may resist the shortening of the SMA cable 311 by elastic compression; and when the SMA cable 311 is elongated, the trace 3241 may support the elongation of the SMA cable 311 by rebounding. To enable the plurality of traces 3241 to be disposed at intervals during deformation, that is, deformations of the plurality of traces 3241 may not interfere with each other, a linkage trace 327 may be connected between two adjacent traces 3241, as shown in an enlarged diagram in FIG. 41. The trace portion 3241a and the trace portion 3241b described above may be located on two sides of the linkage trace 327 respectively.

In an embodiment, an extension direction of the linkage trace 327 may be set obliquely relative to the trace portion 3241a and obliquely relative to the trace portion 3241b. Therefore, an acting force borne by the linkage trace 327 may include a component force along an extension direction of the trace portion 3241a and a component force along an extension direction of the trace portion 3241b.

A plurality of reinforcement traces 3341 may be connected between the reinforcement plate protrusion 3311 and the reinforcement plate protrusion 3322, and the plurality of reinforcement traces 3341 may be in a one-to-one correspondence with the plurality of traces 3241. The reinforcement trace 3341 may be disposed opposite to the corresponding trace 3241, and the reinforcement trace 3341 may be attached to the corresponding trace 3241. A linkage reinforcement trace 337 may be connected between two adjacent reinforcement traces 3341. The linkage reinforcement trace 337 may be disposed opposite to the linkage trace 327, and the linkage reinforcement trace 337 may be attached to the linkage trace 327. The reinforcement trace portion 3341a and the reinforcement trace portion 3341b may be located on two sides of the linkage reinforcement trace 337 respectively.

In a possible case, a plurality of linkage traces 327 may be connected between two adj acent traces 3241. As shown in FIG. 41, the plurality of linkage traces 327 may include a linkage trace 327a and a linkage trace 327b. A trace portion 3241c may be connected between the linkage trace 327a and the linkage trace 327b. The trace portion 3241c may be a part of the trace 3241. The trace portion 3241c may be connected between the trace portion 3241a and the trace portion 3241b.

In the plurality of traces 3241, a trace 3241 that is closer to the circuit board portion 321 may have a shorter length; and a trace 3241 that is closer to the circuit board portion 322 may have a longer length. The trace portion 3241a and the trace portion 3241b may be main portions of the trace 3241 that support deformation of the SMA cable 311. If lengths of trace portions 3241a of the plurality of traces 3241 are different, deformation amounts of the plurality of trace portions 3241a differ greatly. Similarly, if lengths of trace portions 3241b of the plurality of traces 3241 are different, deformation amounts of the plurality of trace portions 3241b differ greatly.

If there is a case in which deformation amounts of main portions that are of the plurality of traces 3241 and that are used to support deformation of the SMA cable 311 differ greatly, the plurality of traces 324 may prone to interfere with each other. This further affects effective support of the plurality of traces 3241 for the SMA cable 311. Therefore, the trace 3241 may be divided into the trace portion 3241a, the trace portion 3241b, and the trace portion 3241c by disposing the linkage trace 327a and the linkage trace 327b. Because lengths of trace portions 3241c of the plurality of traces 3241 may be different, lengths of the trace portions 3241a of the plurality of traces 3241 are basically the same, and lengths of the trace portions 3241b of the plurality of traces 3241 are basically the same. This can help reduce a possibility that the plurality of traces 3241 interfere with each other because deformation amounts of the plurality of traces 3241 differ greatly.

Similarly, a plurality of linkage reinforcement traces 337 may be connected between two adjacent reinforcement traces 3341. As shown in FIG. 42, the plurality of linkage reinforcement traces 337 may include a linkage reinforcement trace 337a and a linkage reinforcement trace 337b. A reinforcement trace portion 3341c may be connected between the linkage reinforcement trace 337a and the linkage reinforcement trace 337b. The reinforcement trace portion 3341c may be a part of the reinforcement trace 3341. The reinforcement trace portion 3341c may be connected between the reinforcement trace portion 3341a and the reinforcement trace portion 3341b. The linkage reinforcement trace 337a may correspond to the linkage trace 327a, the linkage reinforcement trace 337b may correspond to the linkage trace 327b, and the reinforcement trace portion 3341c may correspond to the trace portion 3241c.

FIG. 44 is a diagram of a structure of another circuit board assembly 300 according to an embodiment of this application. In some embodiments provided in this application, the circuit board assembly 300 may further include a pre-pressing pad 351. A cross-sectional view shown in FIG. 45 may be obtained by viewing the circuit board assembly 300 provided in this application along a cross section P-P shown in FIG. 44.

One side of the pre-pressing pad 351 may abut against the module base 340, and the other side may abut against the reinforcement plate portion 331. The pre-pressing pad 351 is disposed between the module base 340 and the reinforcement plate portion 331, so that a spacing between the reinforcement plate portion 331 and the module base 340 may match a size of the pre-pressing pad 351 along the optical axis. In other words, the pre-pressing pad 351 may be configured to prevent the reinforcement plate portion 331 or the circuit board portion 321 from deforming toward the module base 340. Because the image sensor 310 may be disposed on the reinforcement plate portion 331 or the circuit board portion 321, disposing the pre-pressing pad 351 may help reduce a displacement of the image sensor 310 toward the module base 340.

The pre-pressing pad 351 may be disposed in a region that is of the reinforcement plate portion 331 and that is located outside the light transmission hole 335. In the embodiment shown in FIG. 44, for example, the pre-pressing pad 351 may be disposed in a region between the reinforcement plate protrusion 3311 and the light transmission hole 335. For another example, the pre-pressing pad 351 may be disposed in a region between the reinforcement plate protrusion 3312 and the light transmission hole 335. For another example, the pre-pressing pad 351 may be disposed on a side that is of the light transmission hole 335 and that is close to the circuit board protrusion 3222 of the circuit board portion 322. For another example, the pre-pressing pad 351 may be disposed on a side that is of the light transmission hole 335 and that is close to the circuit board protrusion 3224 of the circuit board portion 322.

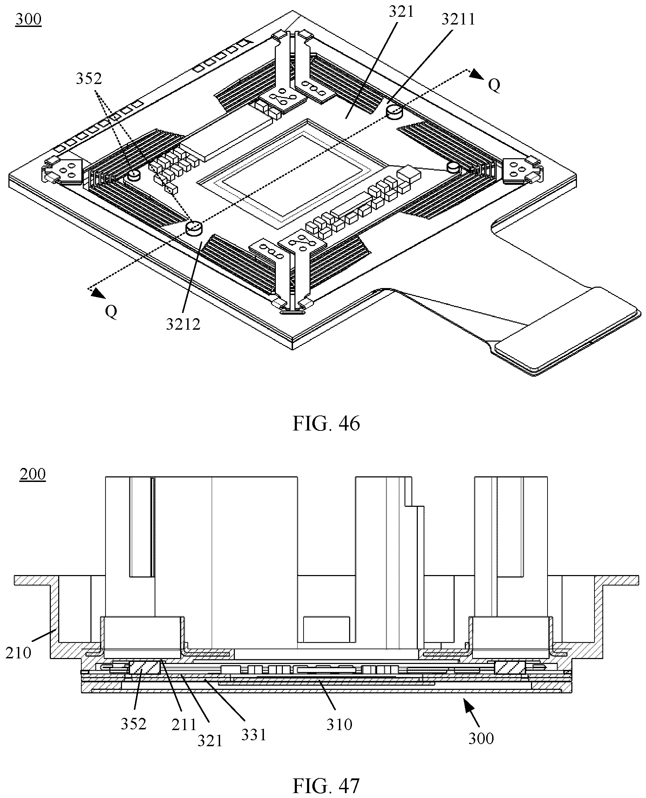

FIG. 46 is a diagram of a structure of still another circuit board assembly 300 according to an embodiment of this application. In some embodiments provided in this application, the circuit board assembly 300 may further include a pre-pressing pad 352. A cross-sectional view shown in FIG. 47 may be obtained by viewing the circuit board assembly 300 provided in this application along a cross section Q-Q shown in FIG. 46. FIG. 47 further shows an assembly relationship between the circuit board assembly 300 and the camera support 210.

One side of the pre-pressing pad 352 may abut against the circuit board portion 321, and the other side may abut against the camera support 210. In an embodiment, the pre-pressing pad 352 may abut against the bearer portion 211 of the camera support 210. The pre-pressing pad 352 is disposed between the circuit board portion 321 and the camera support 210, so that a spacing between the circuit board portion 321 and the camera support 210 may match a size of the pre-pressing pad 352 along the optical axis. In other words, the pre-pressing pad 352 may be configured to prevent the reinforcement plate portion 331 or the circuit board portion 321 from deforming toward the camera support 210. Because the image sensor 310 may be disposed on the reinforcement plate portion 331 or the circuit board portion 321, disposing the pre-pressing pad 352 may help reduce a displacement of the image sensor 310 toward the camera support 210.

The pre-pressing pad 352 may be disposed in a region that is of the circuit board portion 321 and that is located outside the light transmission hole 325. In the embodiment shown in FIG. 45, for example, the pre-pressing pad 352 may be disposed on the circuit board protrusion 3211 or the circuit board protrusion 3212 of the circuit board portion 321. For another example, the pre-pressing pad 352 may be disposed at a corner 1 or a corner 3 of the circuit board portion 321, where the corner 1 and the corner 3 may be corners that are of the circuit board portion 321 and on which no SMA cable movable bracket is disposed.

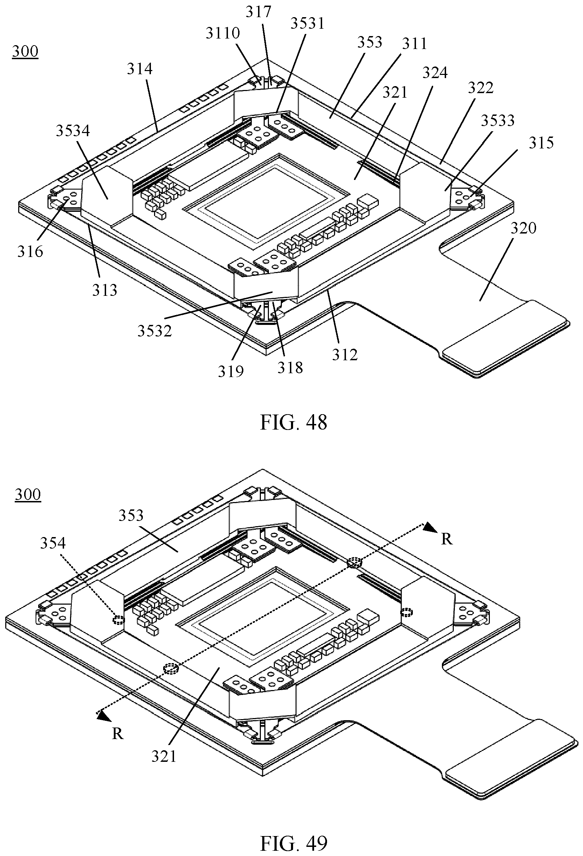

FIG. 48 is a diagram of a structure of yet another circuit board assembly 300 according to an embodiment of this application.

In some embodiments provided in this application, the circuit board assembly 300 may further include a cable protection bracket 353. The cable protection bracket 353 may be in a ring shape. A periphery of the cable protection bracket 353 may be fastened to the circuit board portion 322. A projection region of the cable protection bracket 353 on the circuit board 320 may intersect with the circuit board portion 321. In other words, the projection region of the cable protection bracket 353 on the circuit board 320 may cover the space between the circuit board portion 321 and the circuit board portion 322. The cable protection bracket 353 may be in a cover shape and cover a plurality of traces 324. In some embodiments, the cable protection bracket 353 may be located in a space enclosed by the SMA cable 311, the SMA cable 312, the SMA cable 313, and the SMA cable 314.

Because the cable protection bracket 353 covers the plurality of traces 324, when an SMA cable is elongated and loose due to elastic recovery, the cable protection bracket 353 can prevent the SMA cable from falling into a slit between the plurality of traces 324, to help reduce a risk that the SMA cable is broken by the plurality of traces 324.

In a possible case, the cable protection bracket 353 may be a conductor material. The cable protection bracket 353 may be located between the SMA cable and the image sensor 310. Therefore, the cable protection bracket 353 may help shield a signal generated by the SMA cable, and reduce signal interference of the SMA cable to the image sensor 310.

The cable protection bracket 353 may have a movable bracket accommodating cavity 3531. With reference to FIG. 41 and FIG. 48, the SMA cable movable bracket 317 may extend from the circuit board portion 321 to the circuit board portion 322. Because the cable protection bracket 353 may cover the space between the circuit board portion 321 and the circuit board portion 322, the cable protection bracket 353 may cover a part of the SMA cable movable bracket 317. To implement that the cable protection bracket 353 and the SMA cable movable bracket 317 do not interfere with each other, a side that is of the cable protection bracket 353 and that faces the circuit board 320 may have the movable bracket accommodating cavity 3531, and the movable bracket accommodating cavity 3531 may be configured to accommodate the SMA cable movable bracket 317.

In the embodiment shown in FIG. 48, the movable bracket accommodating cavity 3531 may be further configured to accommodate the SMA cable movable bracket 3110. The side that is of the cable protection bracket 353 and that faces the circuit board 320 may further have a movable bracket accommodating cavity 3532. The movable bracket accommodating cavity 3532 may be configured to accommodate the SMA cable movable bracket 318 and the SMA cable movable bracket 319.

In an embodiment, the side that is of the cable protection bracket 353 and that faces the circuit board 320 may further have a fastening bracket accommodating cavity 3533 and a fastening bracket accommodating cavity 3534. The fastening bracket accommodating cavity 3533 may be configured to accommodate the SMA cable fastening bracket 315, and the fastening bracket accommodating cavity 3534 may be configured to accommodate the SMA cable fastening bracket 316.

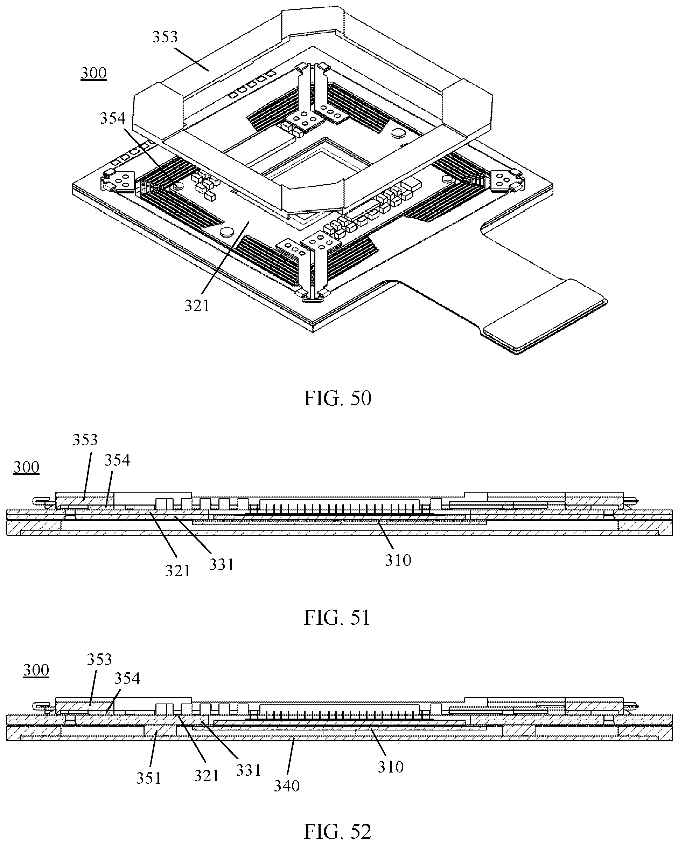

FIG. 49 is a diagram of a structure of still yet another circuit board assembly 300 according to an embodiment of this application. In some embodiments provided in this application, the circuit board assembly 300 may further include a pre-pressing pad 354. FIG. 50 is an exploded view of the circuit board assembly 300 shown in FIG. 49. A cross-sectional view shown in FIG. 51 or FIG. 52 may be obtained by viewing the circuit board assembly 300 provided in this application along a cross section R-R shown in FIG. 49.

One side of the pre-pressing pad 354 may abut against the circuit board portion 321, and the other side may abut against the cable protection bracket 353. The pre-pressing pad 354 is disposed between the circuit board portion 321 and the cable protection bracket 353, so that a spacing between the circuit board portion 321 and the cable protection bracket 353 may match a size of the pre-pressing pad 354 along the optical axis. In other words, the pre-pressing pad 354 may be configured to prevent the circuit board portion 321 from deforming toward the cable protection bracket 353. Because the image sensor 310 may be disposed on the reinforcement plate portion 331 or the circuit board portion 321, disposing the pre-pressing pad 354 may help reduce a displacement of the image sensor 310 toward the cable protection bracket 353. For a specific disposing position of the pre-pressing pad 354, refer to the embodiment of the pre-pressing pad 352.

Compared with the circuit board assembly 300 shown in FIG. 51, the circuit board assembly 300 shown in FIG. 52 may further include a pre-pressing pad 351, and the pre-pressing pad 351 is disposed between the reinforcement plate 330 and the module base 340. For an embodiment related to the pre-pressing pad 351, refer to the embodiments shown in FIG. 44 and FIG. 45.

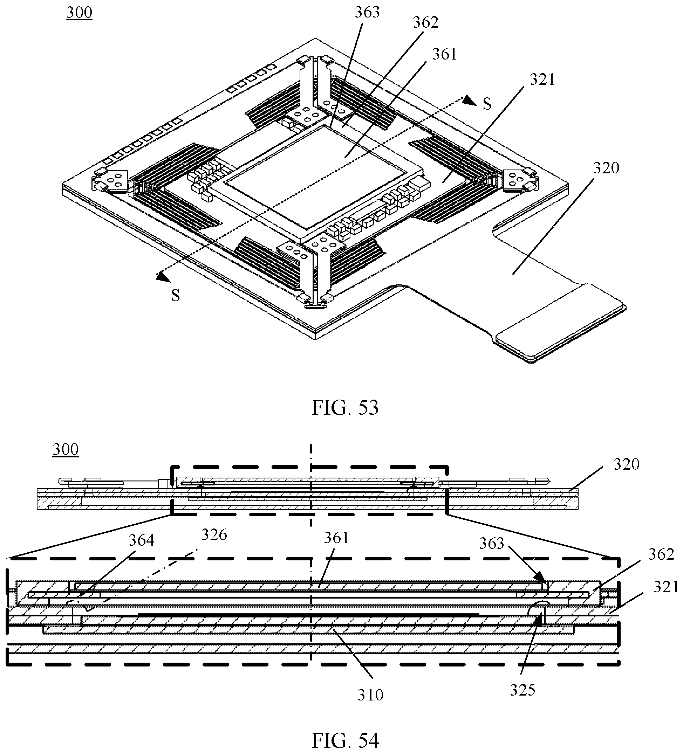

In some embodiments provided in this application, the camera module 200 may further include a light filter 361, as shown in FIG. 53. A cross-sectional view shown in FIG. 54 may be obtained by viewing the circuit board assembly 300 provided in this application along a cross section S-S shown in FIG. 53. The light filter 361 may be configured to filter out light of a specific frequency. In an embodiment, the light filter 361 may be configured to filter out infrared light.

In some embodiments, the light filter 361 may be fastened to the circuit board 320 through a light filter bracket 362. The light filter bracket 362 may include a light transmission hole 363. With reference to FIG. 4 and FIG. 54, light from the lens 221 may be incident to the light transmission hole 325 of the circuit board 320 after passing through the light transmission hole 363. The light transmission hole 363 may be disposed opposite to the light transmission hole 325. Along the optical axis, a projection region of the light transmission hole 363 and a projection region of the light transmission hole 325 may mostly overlap. A side of the light filter bracket 362 may be fastened to the circuit board portion 321. The light filter bracket 362 may encircle a periphery of the light transmission hole 325 of the circuit board portion 321.

In a possible case, the light filter bracket 362 includes a light filter fastener 364. The light filter fastener 364 may be in a ring shape. A periphery of the light filter fastener 364 may be embedded in the light filter bracket 362. Viewed along the optical axis, the light filter fastener 364 may extend from the light filter bracket 362 toward the optical axis, and extend into the light transmission hole 363. Viewed along the optical axis, a projection region of an inner circumference of the light filter fastener 364 may be located in the projection region of the light transmission hole 363. A region that is of the light filter fastener 364 and that is located outside the light filter bracket 362 may be fastened to the light filter 361. A space between the light filter fastener 364 and the circuit board portion 321 may be configured to accommodate the lead 326 of the image sensor 310. In the embodiment shown in FIG. 54, the light filter 361 may be fastened to a side that is of the light filter fastener 364 and that is away from the image sensor 310. The light filter 361 may be accommodated in the light transmission hole 363. An outer diameter of the light filter 361 may be smaller than an inner diameter of the light transmission hole 363. This helps reduce a space occupied by the light transmission hole in a direction of the optical axis. In a possible scenario, a size of the light filter 361 along the optical axis may be less than or equal to a size of the light transmission hole 363 along the optical axis.

In another possible case, the light filter 361 may be fastened to a side that is of the light filter bracket 362 and that is away from the circuit board 320. The light filter 361 may cover the light transmission hole 363. A region that is of the light filter bracket 362 and that is located outside the light transmission hole 363 may be fastened to the light filter 361. In this embodiment, in one aspect, the light filter 361 may occupy a specific space in the direction of the optical axis; and in another aspect, when dust is deposited on the light filter 361, because a distance between the light filter 361 and the image sensor 310 is long, it is difficult for an image captured by the image sensor 310 to be affected by the dust.

In still another possible case, the lead 326 of the image sensor 310 may be packaged in the light filter bracket 362 by using a chip on board (molding on chip, MOC) process. This helps reduce a size of the light filter bracket 362 in a direction perpendicular to the optical axis, and further helps improve mechanical stability of the lead 326 of the image sensor 310.

This application provides a camera module and an electronic device. The ejection assembly to which the piezoelectric principle is applied is configured, so that the lens group 223 and the lens group 224 of the camera module can be entirely ejected. The focus assembly to which the piezoelectric principle is applied is configured, so that the spacing between the lens group 223 and the lens group 224 can be adjusted. The ejection assembly and the focus assembly to which the piezoelectric principle is applied can easily control displacements of the lens group 223 and the lens group 224 from the optical axis, and occupy a small space, so that the camera module has excellent image shooting performance and occupies a small space.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera module (200), comprising:
a camera support (210);
a lens assembly (220), wherein the lens assembly (220) comprises a plurality of lenses (221) arranged along an optical axis, and the lens assembly (220) is located on a side of the camera support (210);
an ejector (232), wherein the ejector (232) is fastened to the lens assembly (220);
an ejection driver (231), wherein the ejection driver (231) is carried on the camera support (210), and the ejection driver (231) is configured to vibrate reciprocally along the optical axis, to drive the ejector (232) to move along the optical axis, and drive the lens assembly (220) to move relative to the camera support (210) along the optical axis;
an ejector cover (240), wherein the ejector cover (240) is fastened to the lens assembly (220), and a cavity formed by the ejector cover (240) and the camera support (210) is configured to accommodate the lens assembly (220), the ejection driver (231), and the ejector (232); and
a flexible connecting piece (250), wherein the flexible connecting piece (250) is sealedly connected between the ejector cover (240) and the camera support (210).

2. The camera module (200) according to claim 1, wherein the lens assembly (220) comprises a focus stator (225), a focus mover (226), a focus driver (227), and a focus pusher (228), wherein a lens (221) is disposed on the focus mover (226), the focus driver (227) is carried on the focus stator (225), the focus pusher (228) is fastened to the focus mover (226), and the focus driver (227) is configured to vibrate reciprocally along the optical axis, to drive the focus pusher (228) to move along the optical axis, and drive the focus mover (226) to move relative to the focus mover (226) along the optical axis.

3. The camera module (200) according to claim 2, wherein a first magnet (22592) is disposed on the focus stator (225), and a second magnet (22671) interacting with the first magnet (22592) is disposed on the focus mover (226).

4. The camera module (200) according to claim 3, wherein
the focus stator (225) comprises a guide slot (2259) and a first magnet accommodating slot (22591), the guide slot (2259) extends along the optical axis, the first magnet accommodating slot (22591) is in communication with the guide slot (2259), and the first magnet (22592) is disposed in the first magnet accommodating slot (22591); and
the focus mover (226) comprises a platform portion (2261) and a first extension strip (2267), the platform portion (2261) is vertically disposed relative to the optical axis, the first extension strip (2267) extends from the platform portion (2261) to the focus stator (225), and is accommodated in the guide slot (2259), and the second magnet (22671) is disposed on the first extension strip (2267).

5. The camera module (200) according to any one of claims 2 to 4, wherein a third magnet (411) is disposed on the focus stator (225), and a fourth magnet (413) interacting with the third magnet (411) is disposed on the camera support (210).

6. The camera module (200) according to any one of claims 2 to 5, wherein the focus stator (225) comprises a first lens accommodating cavity (2251), the first lens accommodating cavity (2251) accommodates a first part of lenses in the plurality of lenses (221), the focus mover (226) comprises a second lens accommodating cavity (2263), and the second lens accommodating cavity (2263) accommodates a second part of lenses in the plurality of lenses (221).

7. The camera module (200) according to claim 6, wherein the first lens accommodating cavity (2251) accommodates a first lens (221a1), a second lens (221a2), and a lens barrel (2231), the first lens (221a1) is disposed outside the lens barrel (2231), and the second lens (221a2) is accommodated in the lens barrel (2231).

8. The camera module (200) according to claim 7, wherein a lens cover (22311) is further accommodated in the first lens accommodating cavity (2251), and the first lens (221a1) is sandwiched between the lens barrel (2231) and the lens cover (22311).

9. The camera module (200) according to any one of claims 2 to 8, wherein
the focus driver (227) comprises a focus pusher accommodating hole (2271), and the focus pusher accommodating hole (2271) extends along the optical axis; and
the focus pusher (228) extends along the optical axis, and the focus pusher (228) is accommodated in the focus pusher accommodating hole (2271) and abuts against a hole wall of the focus pusher accommodating hole (2271).

10. The camera module (200) according to claim 9, wherein the focus stator (225) comprises a first circuit board accommodating slot (2257), and the first circuit board accommodating slot (2257) extends from a side wall of the focus stator (225) to a focus driver accommodating hole (2255); and
the camera module (200) further comprises a first circuit board assembly (229), the first circuit board assembly (229) comprises a first circuit board portion (229a) and a second circuit board portion (229b), the first circuit board portion (229a) is provided with a focus control module (2291) and fastened to the side wall of the focus stator (225), the second circuit board portion (229b) is disposed in the first circuit board accommodating slot (2257), and the focus control module (2291) is electrically connected to the focus driver (227) through the first circuit board portion (229a) and the second circuit board portion (229b).

11. The camera module (200) according to claim 10, wherein the focus mover (226) comprises the platform portion (2261) and a second extension strip (2264), the platform portion (2261) is vertically disposed relative to the optical axis, the second extension strip (2264) extends from the platform portion (2261) to the focus stator (225), a magnetic grid (2265) is fastened to the second extension strip (2264), and the magnetic grid (2265) extends along the optical axis; and
a magnetoresistor (2292) is disposed on the first circuit board portion (229a), the magnetoresistor (2292) is disposed opposite to the magnetic grid (2265), and the magnetoresistor (2292) is configured to detect a distance between the magnetic grid (2265) and the magnetoresistor (2292).

12. The camera module (200) according to claim 11, wherein an element accommodating slot (2256) is disposed on the focus stator (225), and the second extension strip (2264) and the magnetic grid (2265) are accommodated in the element accommodating slot (2256).

13. The camera module (200) according to any one of claims 2 to 12, wherein a step (2254) is disposed on a side that is of the focus stator (225) and that is close to the focus mover (226), the step (2254) is disposed opposite to a resonance zero point of the focus driver (227), and the focus driver (227) is carried on the step (2254).

14. The camera module (200) according to any one of claims 2 to 13, wherein fifth magnets (414 and 415) are disposed on the side wall of the focus stator (225); and
the camera module (200) further comprises a second circuit board assembly (270), the second circuit board assembly (270) comprises a third circuit board portion (272), the third circuit board portion (272) is disposed in parallel with the optical axis, a displacement sensor (2721) is disposed on the third circuit board portion (272), and the displacement sensor (2721) is configured to detect distances between the fifth magnets (414 and 415) and the displacement sensor (2721).

15. The camera module (200) according to any one of claims 2 to 14, wherein the lens assembly (220) further comprises a focus stopper (420), and the focus stopper (420) cooperates with a periphery of the focus stator (225) and is fastened to the focus mover (226).

16. The camera module (200) according to claim 15, wherein the focus stator (225) comprises a limiting slot (22510), the limiting slot (22510) extends along the optical axis, and a limiting surface (22511) is disposed on a side that is of the limiting slot (22510) and that is close to the focus mover (226);
the focus stopper (420) comprises a first limiting jaw (421), and the first limiting jaw (421) extends into the limiting slot (22510); and
the limiting surface (22511) is configured to limit the first limiting jaw (421).

17. The camera module (200) according to any one of claims 2 to 16, wherein the focus stator (225) further comprises a focus guide hole (2258), the lens assembly (220) further comprises a focus guide rod (410), the focus guide hole (2258) and the focus guide rod (410) extend along the optical axis, and the focus guide rod (410) is accommodated in the focus guide hole (2258) and is fastened to the focus mover (226).

18. The camera module (200) according to any one of claims 1 to 17, wherein
the ejection driver (231) comprises an ejector accommodating hole (2311), and the ejector accommodating hole (2311) extends along the optical axis; and
the ejector (232) extends along the optical axis, and the ejector (232) is accommodated in the ejector accommodating hole (2311) and abuts against a hole wall of the ejector accommodating hole (2311).

19. The camera module (200) according to any one of claims 1 to 18, wherein a mounting ear (2313) is disposed on a periphery of the ejection driver (231), the mounting ear (2313) is located at a resonance zero point of the ejection driver (231), and the ejection driver (231) is carried on the camera support (210) through the mounting ear (2313).

20. The camera module (200) according to any one of claims 1 to 19, wherein an ejection ring (216) is disposed on the camera support (210), and the ejection ring (216) encircles the periphery of the ejection driver (231).

21. The camera module (200) according to any one of claims 1 to 20, wherein the camera module (200) further comprises an ejection guide sleeve (291) and an ejection guide rod (292), the ejection guide sleeve (291) and the ejection guide rod (292) extend along the optical axis, the ejection guide sleeve (291) is fastened to the camera support (210), and the ejection guide rod (292) is accommodated in the ejection guide sleeve (291) and is fastened to the lens assembly (220).

22. The camera module (200) according to any one of claims 1 to 21, wherein the camera support (210) comprises a bearer portion (211) and a first protrusion (217), the bearer portion (211) is vertically disposed relative to the optical axis, the first protrusion (217) extends from the bearer portion (211) to the ejector cover (240), a limiting table (2171) is disposed at an end that is of the first protrusion (217) and that is close to the ejector cover (240), and between the bearer portion (211) and the limiting table (2171), the first protrusion (217) has a jaw sliding slot (2151) extending along the optical axis; and
the ejector cover (240) further comprises a first limiting jaw (245), and the first limiting jaw (245) may slide in the jaw sliding slot (2151).

23. The camera module (200) according to claim 22, wherein the jaw sliding slot (2151) comprises a first sliding slot portion (2152) and a second sliding slot portion (2153), the first sliding slot portion (2152) is disposed opposite to the limiting table (2171), the first sliding slot portion (2152) is in communication with the second sliding slot portion (2153), and the first limiting jaw (245) is rotatable around the optical axis and slides from the second sliding slot portion (2153) to the first sliding slot portion (2152).

24. The camera module (200) according to any one of claims 1 to 23, wherein the flexible connecting piece (250) comprises a first ring (251), a second ring (252), and a third ring (253), an inner diameter of the first ring (251) is greater than an inner diameter of the second ring (252), the third ring (253) is connected between the first ring (251) and the second ring (252), the first ring (251) is fastened to the camera support (210), the second ring (252) is fastened to the ejector cover (240), and the third ring (253) is able to be folded in a space between the camera support (210) and the ejector cover (240).

25. The camera module (200) according to any one of claims 1 to 24, wherein the camera module (200) further comprises a dustproof cover (431) and a dustproof filter (432), the dustproof cover (431) is sealedly connected to the camera support (210) and the flexible connecting piece (250), a dustproof through hole (435) is disposed on the dustproof cover (431), and the dustproof filter (432) covers the dustproof through hole (435).

26. The camera module (200) according to any one of claims 1 to 25, wherein the camera module (200) further comprises a circuit board (320), and the circuit board (320) is disposed on a side that is of the camera support (210) and that is away from the lens assembly (220);
the circuit board (320) comprises a fourth circuit board portion (321) and a fifth circuit board portion (322), an image sensor (310) is disposed on the fourth circuit board portion (321), the fifth circuit board portion (322) comprises a second circuit board accommodating slot (3221), and the fourth circuit board portion (321) is accommodated in the second circuit board accommodating slot (3221);
the fourth circuit board portion (321) comprises a first circuit board protrusion (3211), the first circuit board protrusion (3211) protrudes toward a slot wall (3224) of the second circuit board accommodating slot (3221), the fifth circuit board portion (322) comprises a second circuit board protrusion (3222), and the second circuit board protrusion (3222) protrudes from a slot wall (3225) of the second circuit board accommodating slot (3221) to the fourth circuit board portion (321);
the circuit board (320) further comprises a first trace (3241), and the first trace (3241) is connected between the first circuit board protrusion (3211) and the second circuit board protrusion (3222); and
the camera module (200) further comprises an SMA cable fastening bracket (315), an SMA cable movable bracket (317), and a first SMA cable (311), the SMA cable fastening bracket (315) is fastened to the fifth circuit board portion (322), one end of the SMA cable movable bracket (317) is fastened to the fourth circuit board portion (321), the other end of the SMA cable movable bracket (317) is suspended on the fifth circuit board portion (322), the first SMA cable (311) is connected between the SMA cable fastening bracket (315) and the SMA cable movable bracket (317), and the first SMA cable (311) is disposed opposite to a first trace portion (3241a) of the first trace (3241).

27. The camera module (200) according to claim 26, wherein a second trace portion (3241b) of the first trace (3241) is disposed opposite to a second SMA cable (312) of the camera module (200); and
the circuit board (320) further comprises:
a second trace, wherein the second trace is connected between the first circuit board protrusion (3211) and the second circuit board protrusion (3222), a first trace portion of the second trace is disposed opposite to the first SMA cable (311), and a second trace portion of the second trace is disposed opposite to the second SMA cable (312); and
a first linkage trace (327a), wherein the first linkage trace (327a) is connected between the first trace (3241) and the second trace.

28. The camera module (200) according to claim 27, wherein the circuit board (320) further comprises a second linkage trace (327b), the second linkage trace (327b) is connected between the first trace (3241) and the second trace, third trace portions are obtained by dividing the first trace (3241) and the second trace by using the first linkage trace (327a) and the second linkage trace (327b), a third trace portion (327c) of the first trace (3241) is connected between the first trace portion (3241a) of the first trace (3241) and the second trace portion (3241b) of the first trace (3241), a third trace portion of the second trace is connected between the first trace portion of the second trace and the second trace portion of the second trace, and a length of the third trace portion (327c) of the first trace (3241) is different from a length of the third trace portion of the second trace.

29. The camera module (200) according to any one of claims 26 to 28, wherein the camera module (200) further comprises:
a cable protection bracket (353), wherein the cable protection bracket (353) is disposed on a side that is of the circuit board (320) and that is close to the camera support (210), and covers the first trace (3241).

30. The camera module (200) according to claim 29, wherein the camera module (200) further comprises:
a first pre-pressing pad (354), wherein the first pre-pressing pad (354) is disposed between the fourth circuit board portion (321) and the cable protection bracket (353).

31. The camera module (200) according to any one of claims 26 to 30, wherein the third circuit board (320) assembly further comprises a reinforcement plate (330) and a module base (340), the reinforcement plate (330) and the module base (340) are located on a side away from the camera support (210), the reinforcement plate (330) is attached to the circuit board (320), and the reinforcement plate (330) is located between the circuit board (320) and the module base (340); and
the camera module (200) further comprises a second pre-pressing pad (351), and the second pre-pressing pad (351) is disposed between the reinforcement plate (330) and the module base (340).

32. The camera module (200) according to any one of claims 26 to 31, wherein the camera module (200) further comprises:
a third pre-pressing pad (352), wherein the third pre-pressing pad (352) is disposed between the fourth circuit board portion (321) and the camera support (210).

33. An electronic device (100), comprising the camera module (200) according to any one of claims 1 to 32.
